# EUROPEAN PATENT APPLICATION

(11) **EP 4 751 550 A1**
(43) Date of publication of application: **03.06.2026**
(21) Application number: 25219229.9
(22) Date of filing: 27.11.2025
(51) Int. Cl.: A01G 3/04, A01G 17/02, G06T 7/73, G06V 20/10

(54) **METHOD FOR GENERATING CUT POINT DATA, SYSTEM FOR GENERATING CUT POINT DATA, AND AGRICULTURAL MACHINE**

(30) Priority: 29.11.2024 US 202463726354 P; 28.10.2025 US 202519371046
(71) Applicant: Kubota Corporation, Osaka-shi, Osaka 556-8601 (JP)
(72) Inventor: SHIMADA, Kotaro, Fremont, California, 94538 (US)
(74) Representative: Cabinet Beau de Loménie

(57) **Abstract**

A method carried out by a computer or computers to generate cut-point data containing information indicating a three-dimensional position of a point on a cane of a fruit tree where the cane is to be cut off, includes acquiring (S050) information on a pruning mode that is selected by a user from among a plurality of pruning modes having respectively different methods of determining a point(s) on a cane(s) of the fruit tree where cutting is to be performed, based on sensor data of the cane(s) of the fruit tree acquired (S100) by a sensor or sensors and based on the selected pruning mode, determining (S200) one or more points where cutting is to be performed for the cane(s) of the fruit tree, and generating (S300) the cut-point data for each of the one or more points where cutting is to be performed.

## Description

### CROSS REFERENCE TO RELATED APPLICATIONS

This application claims the benefit of priority to U.S. Provisional Application No. 63/726,354 filed on November 29, 2024. The entire contents of this application are hereby incorporated herein by reference and to which the person of the art can refer when considering the present disclosure.

### BACKGROUND OF THE INVENTION

### 1. Field of the Invention

The present disclosure relates to agricultural machines, systems for generating cut-point data of canes of a fruit tree, and methods for generating cut-point data of canes of a fruit tree.

### 2. Description of the Related Art

As attempts in next-generation agriculture, research and development of smart agriculture utilizing ICT (Information and Communication Technology) and loT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

The specification of U.S. Patent Application Publication No. 2023/288936 describes a work vehicle that is capable of autonomous movements among a plurality of rows of trees in an orchard, such as a vineyard.

### SUMMARY OF THE INVENTION

There is also a need for automation and unmanned application of pruning work for fruit trees in an orchard such as a vineyard. Pruning is an operation of cutting off a portion of a cane of a fruit tree, as an unwanted cane, in order to tailor the tree shape of the fruit tree. Although pruning work may be performed during both of a period of growth and a period of dormancy, in the present specification it mainly refers to the operation that is performed during a period of dormancy (e.g., winter) existing after the harvesting of fruits for a given year is finished and before the growth of the fruit tree begins for the next year. The yield and quality in the next season will be determined based on which cane is to be cut and which cane is to be retained. Thus, any pruning work that is performed during a period of dormancy is considered as one of the important operations in cultivating a fruit tree. In pruning work, for each of individual fruit trees that may have different shapes, a comprehensive judgment of the health status, sun exposure, ventilation, etc., of the fruit tree should be made, and optimum pruning needs to be performed for the respective fruit tree on the basis of experience and feeling. It is not easy to automate pruning work, which entails such judgments.

Example embodiments of the present disclosure provide methods for generating cut-point data containing information indicating a three-dimensional position of a point on a cane of a fruit tree where the cane is to be cut off, systems for generating the cut-point data, and agricultural machines including such systems.

Example embodiments of the present invention relate to methods for generating cut-point data containing information indicating a three-dimensional position of a point on a cane of a fruit tree where the cane is to be cut off, systems for generating the cut-point data of a cane of a fruit tree, and agricultural machines including such systems.

The present disclosure provides solutions as recited in the following Items.

### [Item a1]

A method carried out by a computer or computers to generate cut-point data containing information indicating a three-dimensional position of a point on a cane of a fruit tree where the cane is to be cut off, the method including acquiring information on a pruning mode that is selected by a user from among a plurality of pruning modes having respectively different methods of determining a point(s) on a cane(s) of the fruit tree where cutting is to be performed, based on sensor data of the cane(s) of the fruit tree acquired by a sensor or sensors and based on the selected pruning mode, determining one or more points where cutting is to be performed for the cane(s) of the fruit tree, and generating the cut-point data for each of the one or more points where cutting is to be performed.

### [Item a2]

The method of Item a1, further including inputting the generated cut-point data to a controller configured or programmed to control a three-dimensional position of a cutter to cut the cane(s) of the fruit tree.

### [Item a3]

The method of Item a1 or a2, wherein determining the one or more points where cutting is to be performed includes for each of one or more canes of the fruit tree, acquiring measurement values concerning two or more attributes based on the sensor data, based on the measurement values and priority levels of the two or more attributes, determining the one or more canes each as a cane to be removed or a cane to be retained, and for each cane determined as the cane to be removed, determining a point where cutting is to be performed, and settings of the priority levels are made to differ depending on the pruning mode.

### [Item a4]

The method of Item a3, wherein the two or more attributes include at least one of a color of the cane, a direction in which the cane extends, a thickness of the cane, a height of the base of the cane, a size of buds on the cane, a direction in which buds on the cane are facing, a length of the cane, or a length between nodes of the cane.

### [Item a5]

The method of Item a3 or a4, wherein the user is able to change and save settings of the priority levels for the plurality of pruning modes.

### [Item a6]

The method of Item a1 or a2, wherein, determining the one or more points where cutting is to be performed includes for each of one or more canes of the fruit tree, acquiring a measurement value(s) concerning one or more attributes based on the sensor data, based on the measurement value(s), determining the one or more canes each as a cane to be removed or a cane to be retained, and for each cane determined as the cane to be removed, determining a point where cutting is to be performed, and an enabled/disabled setting(s) as to a setting parameter(s) concerning the measurement value(s), the setting parameter(s) being capable of being enabled or disabled in the determination of the point where cutting is to be performed, is made to differ depending on the pruning mode.

### [Item a7]

The method of Item a6, wherein, the one or more attributes include a color of the cane, and the enabled/disabled setting(s) as to the setting parameter(s) concerning the measurement value(s) includes an enabled/disabled setting as to determining any cane as the cane to be retained if the color of the cane is green.

### [Item a8]

The method of Item a7, wherein, when the setting is enabled, the determining the one or more canes each as the cane to be removed or the cane to be retained includes, based on the measurement value concerning the color of the cane, determining the cane as the cane to be retained if the color of the cane is green.

### [Item a9]

The method of any one of Items a6 to a8, wherein, determining the one or more points where cutting is to be performed further includes determining a number of buds to be retained on the cane(s) determined as the cane to be retained based on the measurement value(s), and based on the number of buds to be retained, determining a point or points where cutting is to be performed for the cane(s) determined as the cane to be retained, the one or more attributes include an attribute concerning a vigor of the fruit tree, and the enabled/disabled setting(s) as to the setting parameter(s) concerning the measurement value(s) includes an enabled/disabled setting as to adjusting the number of buds to be retained on the cane(s) determined as the cane to be retained based on the measurement value concerning the attribute concerning the vigor of the fruit tree.

### [Item a10]

The method of Item a9, wherein, when the setting is enabled, the determining the number of buds to be retained includes, based on the measurement value concerning the attribute concerning the vigor of the fruit tree, if the vigor of the cane determined as the cane to be retained is judged to be stronger than a predetermined range, increasing the number of buds to be retained on the cane determined as the cane to be retained and, based on the measurement value concerning the attribute concerning the vigor of the fruit tree, if the vigor of the cane determined as the cane to be retained is judged to be weaker than the predetermined range, decreasing the number of buds to be retained on the cane determined as the cane to be retained.

### [Item a11]

The method of Item a9 or a10, wherein the attribute concerning the vigor of the fruit tree includes at least one of a thickness of the cane, a size of buds on the cane, or a length between nodes of the cane.

### [Item a12]

The method of any one of Items a9 to a11, wherein, the attribute concerning the vigor of the fruit tree includes a thickness of the cane, determining the one or more canes each as the cane to be removed or the cane to be retained includes, for each of the one or more canes, determining a factor score based on the thickness of the cane, and based on the factor score, determining the one or more canes each as the cane to be removed or the cane to be retained, and, when the setting is enabled, the determining the number of buds to be retained includes, if the factor score regarding the thickness of the cane for the cane determined as the cane to be retained is larger than a predetermined range, increasing the number of buds to be retained from a predetermined value, and, if the factor score regarding the thickness of the cane for the cane determined as the cane to be retained is smaller than the predetermined range, decreasing the number of buds to be retained from the predetermined value.

### [Item a13]

The method of Item a12, wherein the factor score regarding the thickness of the cane for each of the one or more canes is determined so as to be lower when the thickness of the cane is larger than a predetermined range than when the thickness of the cane is within the predetermined range, and lower when the thickness of the cane is smaller than the predetermined range than when the thickness of the cane is larger than the predetermined range.

### [Item a14]

The method of any one of Items a9 to a13, wherein, the attribute concerning the vigor of the fruit tree includes a size of buds on the cane, determining the one or more canes each as the cane to be removed or the cane to be retained includes, for each of the one or more canes, determining a factor score based on the size of buds on the cane, and based on the factor score, determining the one or more canes each as the cane to be removed or the cane to be retained, and, when the setting is enabled, the determining the number of buds to be retained includes, if the factor score regarding the size of buds for the cane determined as the cane to be retained is larger than a predetermined range, increasing the number of buds to be retained from a predetermined value, and, if the factor score regarding the size of buds for the cane determined as a cane to be retained is smaller than the predetermined range, decreasing the number of buds to be retained from the predetermined value.

### [Item a15]

The method of Item a14, wherein the factor score regarding the size of buds for each of the one or more canes is determined so as to be lower when a mean value of the size of buds on the cane is larger than a predetermined range than when the mean value of the size of buds on the cane is within the predetermined range, and lower when the mean value of the size of buds on the cane is smaller than the predetermined range than when the mean value of the size of buds on the cane is larger than the predetermined range.

### [Item a16]

The method of any one of Items a6 to a15, wherein the user is able to change and save the enabled/disabled setting(s) as to the setting parameter(s) concerning the measurement value(s) for the plurality of pruning modes.

### [Item a17]

A system for generating cut-point data containing information indicating a three-dimensional position of a point on a cane of a fruit tree where the cane is to be cut off, the system including a sensor or sensors to acquire sensor data of a cane(s) of the fruit tree, and a data processor configured or programmed to generate the cut-point data of the cane(s) of the fruit tree based on the sensor data, wherein the data processor is configured or programmed to, from among a plurality of pruning modes having respectively different methods of determining a point(s) on the cane(s) of the fruit tree where cutting is to be performed, acquire information on a pruning mode that is selected by a user, based on the sensor data and based on the selected pruning mode, determine one or more points where cutting is to be performed for the cane(s) of the fruit tree, and generate the cut-point data for each of the one or more points where cutting is to be performed.

### [Item a18]

A system for generating cut-point data containing information indicating a three-dimensional position of a point on a cane of a fruit tree where the cane is to be cut off, the system including a sensor or sensors to acquire sensor data of a plurality of canes of the fruit tree, and means for carrying out the steps of the method of any one of Items a1 to a15.

### [Item a19]

The system of Item a17 or a18, further including a cutter to cut a cane(s) of the fruit tree and a controller configured or programmed to control a three-dimensional position of the cutter, wherein the data processor is configured or programmed to input the generated cut-point data to the controller, and the controller is configured or programmed to control a three-dimensional position of the cutter based on the cut-point data.

### [Item a20]

An agricultural machine including the system of any one of Items a17 to a19.

### [Item a21]

The agricultural machine of Item a20, further including an arm supporting the cutter, a support supporting the arm, and a driver to move the support, wherein the controller is configured or programmed to control the three-dimensional position of the cutter by controlling an operation of the arm.

### [Item b1]

A method carried out by a computer or computers to generate cut-point data containing information indicating a three-dimensional position of a point on a cane of a fruit tree where the cane is to be cut off, the method including acquiring information on a pruning mode that is selected by a user from among a plurality of pruning modes having respectively different methods of determining a point(s) on a cane(s) of the fruit tree where cutting is to be performed, based on sensor data of the cane(s) of the fruit tree acquired by a sensor or sensors and based on the selected pruning mode, determining one or more points where cutting is to be performed for the cane(s) of the fruit tree, and generating the cut-point data for each of the one or more points where cutting is to be performed, wherein an enabled/disabled setting(s) as to one or more setting parameters capable of being enabled or disabled in the determination of the point or points where cutting is to be performed is made to differ depending on the pruning mode.

### [Item b2]

The method of Item b1, wherein the enabled/disabled setting(s) as to the one or more setting parameters includes a setting as to whether, after the one or more points where cutting is to be performed are determined, the one or more points where cutting is to be performed are to be redetermined or not.

### [Item b3]

The method of Item b2, further including, when the setting is enabled, after determining the one or more points where cutting is to be performed, based on a user instruction, redetermining the one or more points where cutting is to be performed based on the sensor data and the pruning mode, and generating the cut-point data for each of the redetermined one or more points where cutting is to be performed.

### [Item b4]

The method of Item b1, wherein the enabled/disabled setting(s) as to the one or more setting parameters includes an enabled/disabled setting as to presenting the generated cut-point data to the user, and receiving a user instruction.

### [Item b5]

The method of Item b4, further including inputting the generated cut-point data to a controller configured or programmed to control a three-dimensional position of a cutter to cut the cane(s) of the fruit tree, and further including, when the setting is enabled, before being input to the controller, causing the generated cut-point data to be displayed by a display device of a user's terminal device, and receiving a user instruction that is input from the terminal device.

### [Item b6]

The method of Item b1, wherein the enabled/disabled setting(s) as to the one or more setting parameters includes an enabled/disabled setting as to, in the generation of the cut-point data, generating the cut-point data in such a manner that the cane is cut in a plane that is perpendicular to a direction in which the cane extends.

### [Item b7]

The method of Item b6, wherein, when the setting is enabled, the generating the cut-point data includes generating the cut-point data in such a manner that the cane is cut in a plane that is perpendicular to a direction in which the cane extends, and when the setting is disabled, the generating the cut-point data includes generating the cut-point data in such a manner that the cane is cut in a plane that is level with respect to a ground surface.

### [Item b8]

The method of Item b1, wherein the enabled/disabled setting(s) as to the one or more setting parameters includes an enabled/disabled setting as to determining at least two canes to be retained from among two or more canes of the fruit tree that are a subject of processing.

### [Item b9]

The method of Item b8, wherein, when the setting is enabled, the determining the one or more points where cutting is to be performed includes, based on the sensor data, determining the two or more canes each as a cane to be removed or a cane to be retained so that at least two of the two or more canes are determined as canes to be retained, and for each cane determined as the cane to be removed, determining a point where cutting is to be performed.

### [Item b10]

The method of Item b9, wherein, when the setting is enabled, the determining the two or more canes each as the cane to be removed or the cane to be retained includes, based on the sensor data, acquiring measurement values concerning two or more attributes of the two or more canes, and based on the measurement values and priority levels of the two or more attributes, determining the two or more canes each as the cane to be removed or the cane to be retained.

### [Item b11]

The method of Item b10, wherein, when the setting is enabled, the determining the two or more canes each as the cane to be removed or the cane to be retained includes, for each of the two or more canes, regarding each of the two or more attributes, determining factor scores based on the measurement values, for each of the two or more canes, based on the factor score regarding each of the two or more attributes and based on the priority level of that attribute, calculating a total score, and determining the two or more canes each as the cane to be removed or the cane to be retained based on the total score.

### [Item b12]

The method of Item b1, wherein the enabled/disabled setting(s) as to the one or more setting parameters includes a setting as to whether, in the determination of a number of buds to be retained on any cane determined as a cane to be retained among canes of the fruit tree, a bud that is the closest to a base of the cane is to be included or not.

### [Item b13]

The method of Item b12, wherein, the determining the one or more points where cutting is to be performed includes, based on the sensor data, determining one or more canes each as a cane to be removed or the cane to be retained, for each cane determined as the cane to be removed, determining a point where cutting is to be performed, determining a number of buds to be retained on the cane(s) determined as the cane to be retained based on the measurement value(s), and based on the number of buds to be retained, determining a point or points where cutting is to be performed for the cane(s) determined as the cane to be retained, and when the setting is enabled, the determining the number of buds to be retained includes determining the number of buds to be retained by counting a bud that is the closest to the base of the cane into the number of buds to be retained.

### [Item b14]

The method of Item b1, wherein the enabled/disabled setting(s) as to the one or more setting parameters includes an enabled/disabled setting as to, before determining a cane(s) to be retained from among one or more canes of the fruit tree that are a subject of processing, excluding any unpromising cane that is not suited for selection as the cane(s) to be retained.

### [Item b15]

The method of Item b14, wherein the determining the one or more points where cutting is to be performed includes, based on the sensor data, determining the one or more canes each as a cane to be removed or the cane to be retained, and for each cane determined as the cane to be removed, determining a point where cutting is to be performed, and, when the setting is enabled, the determining the one or more canes each as the cane to be removed or the cane to be retained includes, based on the sensor data, determining whether or not the one or more canes include an unpromising cane that is not suited for selection as the cane to be retained, and if the unpromising cane is included, determining a cane selected from among the one or more canes excluding the unpromising cane as the cane to be retained.

### [Item b16]

The method of Item b1, wherein the enabled/disabled setting(s) as to the one or more setting parameters includes an enabled/disabled setting as to, after determining one or more canes of the fruit tree that are a subject of processing to be a cane(s) to be removed or a cane(s) to be retained, determining whether to maintain or change the determination as to the cane(s) to be removed or the cane(s) to be retained based on a distribution of buds on the cane(s) determined as the cane(s) to be retained.

### [Item b17]

The method of Item b16, wherein, when the setting is enabled, the determining the one or more points where cutting is to be performed includes, based on the sensor data, determining one or more canes having been grouped into one of a plurality of groups each as the cane to be removed or the cane to be retained, based on the distribution of buds on the cane(s) determined as the cane(s) to be retained with respect to each of the plurality of groups, for each of one or more canes having been grouped into another group, it is decided whether to maintain or change the determination as to the cane to be removed or the cane to be retained, and for each cane determined as the cane to be removed, determining a point where cutting is to be performed.

### [Item b18]

The method of Item b1, wherein the enabled/disabled setting(s) as to the one or more setting parameters includes at least one of a setting as to whether, after the one or more points where cutting is to be performed are determined, the one or more points where cutting is to be performed are to be redetermined or not, an enabled/disabled setting as to presenting the generated cut-point data to the user, and receiving a user instruction, an enabled/disabled setting as to, in the generation of the cut-point data, generating the cut-point data in such a manner that the cane is cut in a plane that is perpendicular to a direction in which the cane extends, an enabled/disabled setting as to determining at least two canes to be retained from among two or more canes of the fruit tree that are a subject of processing, a setting as to whether, in the determination of a number of buds to be retained on any cane determined as a cane to be retained among canes of the fruit tree, a bud that is the closest to a base of the cane is to be included or not, an enabled/disabled setting as to, before determining the cane(s) to be retained from among one or more canes of the fruit tree that are a subject of processing, excluding any unpromising cane that is not suited for selection as the cane(s) to be retained, and an enabled/disabled setting as to, after determining one or more canes of the fruit tree that are a subject of processing to be a cane(s) to be removed or the cane(s) to be retained, determining whether to maintain or change the determination as to the cane(s) to be removed or the cane(s) to be retained based on a distribution of buds on the cane(s) determined as the cane(s) to be retained.

### [Item b19]

The method of any one of Items b1 to b18, wherein the user is able to change and save the enabled/disabled setting(s) as to the one or more setting parameters for the plurality of pruning modes.

### [Item b20]

A system for generating cut-point data containing information indicating a three-dimensional position of a point on a cane of a fruit tree where the cane is to be cut off, the system including a sensor or sensors to acquire sensor data of a cane(s) of the fruit tree, and a data processor configured or programmed to generate the cut-point data of a cane(s) of the fruit tree based on the sensor data, wherein the data processor is configured or programmed to, from among a plurality of pruning modes having respectively different methods of determining a point(s) on the cane(s) of the fruit tree where cutting is to be performed, acquire information on a pruning mode that is selected by a user, based on the sensor data and based on the selected pruning mode, determine one or more points where cutting is to be performed for the cane(s) of the fruit tree, and generate the cut-point data for each of the one or more points where cutting is to be performed, and an enabled/disabled setting(s) as to one or more setting parameters capable of being enabled or disabled in the determination of the point or points where cutting is to be performed is made to differ depending on the pruning mode.

### [Item b21]

A system for generating cut-point data containing information indicating a three-dimensional position of a point on a cane of a fruit tree where the cane is to be cut off, the system including a sensor or sensors to acquire sensor data of the cane(s) of the fruit tree, and means for carrying out the steps of the method of any one of Items b1 to b19.

### [Item b22]

The system of Item b20 or b21, further including a cutter to cut a cane(s) of the fruit tree and a controller configured or programmed to control a three-dimensional position of the cutter, wherein the data processor is configured or programmed to input the generated cut-point data to the controller, and the controller is configured or programmed to control a three-dimensional position of the cutter based on the cut-point data.

### [Item b23]

An agricultural machine including the system of any one of Items b20 to b22.

### [Item b24]

The agricultural machine of Item b23, further including an arm supporting the cutter, a support supporting the arm, and a driver to move the support, wherein the controller is configured or programmed to control the three-dimensional position of the cutter by controlling an operation of the arm.

### [Item c1]

A method carried out by a computer or computers to generate cut-point data containing information indicating a three-dimensional position of a point on a cane of a fruit tree where the cane is to be cut off, the method including acquiring information on a pruning mode that is selected by a user from among a plurality of pruning modes having respectively different methods of determining a point(s) on a cane(s) of the fruit tree where cutting is to be performed, based on sensor data of the cane(s) of the fruit tree acquired by a sensor or sensors and based on the selected pruning mode, determining one or more points where cutting is to be performed for the cane(s) of the fruit tree, and generating the cut-point data for each of the one or more points where cutting is to be performed, wherein the plurality of pruning modes include a first pruning mode, and a second pruning mode in which settings of priority levels of two or more attributes of the cane(s) of the fruit tree in the determination of the point or points where cutting is to be performed are identical to those of the first pruning mode and in which an enabled/disabled setting(s) as to one or more setting parameters capable of being enabled or disabled in the determination of the point or points where cutting is to be performed differ from that/those in the first pruning mode.

### [Item c2]

The method of Item c1, wherein determining the one or more points where cutting is to be performed includes, for each of one or more canes of the fruit tree, acquiring measurement values concerning the two or more attributes based on the sensor data, based on the measurement values and the priority levels of the two or more attributes, determining the one or more canes each as a cane to be removed or a cane to be retained, and for each cane determined as the cane to be removed, determining a point where cutting is to be performed.

### [Item c3]

The method of Item c1 or c2, further including inputting the generated cut-point data to a controller configured or programmed to control a three-dimensional position of a cutter to cut the cane(s) of the fruit tree.

### [Item c4]

The method of any one of Items c1 to c3, wherein the plurality of pruning modes further include a third pruning mode in which settings of the priority levels are different from those in the first pruning mode and which is identical to the first pruning mode with respect to the enabled/disabled setting(s) as to the one or more setting parameters.

### [Item c5]

The method of Item c4, wherein the two or more attributes include an attribute concerning a vigor of the fruit tree, and the attribute concerning the vigor of the fruit tree has a higher priority level in the third pruning mode than in the first pruning mode.

### [Item c6]

The method of Item c5, wherein the attribute concerning the vigor of the fruit tree includes at least one of a thickness of the cane, a size of buds on the cane, or a length between nodes of the cane.

### [Item c7]

The method of Item c5 or c6, wherein determining the one or more points where cutting is to be performed further includes determining a number of buds to be retained on the cane(s) determined as a cane to be retained based on the measurement value(s), and based on the number of buds to be retained, determining the point or points where cutting is to be performed for the cane(s) determined as the cane to be retained, and, in the third pruning mode, an enabled/disabled setting as to adjusting the number of buds to be retained on the cane(s) determined as the cane to be retained based on the measurement value concerning the attribute concerning the vigor of the fruit tree is enabled.

### [Item c8]

The method of Item c4, wherein the two or more attributes include an attribute concerning a shape of the fruit tree, and the attribute concerning the shape of the fruit tree has a higher priority level in the third pruning mode than in the first pruning mode.

### [Item c9]

The method of Item c8, wherein the attribute concerning the shape of the fruit tree includes at least one of a direction in which the cane extends, a height of the base of the cane, a direction in which buds on the cane are facing, or a length of the cane.

### [Item c10]

The method of any one of Items c4 to c9, wherein the two or more attributes include an attribute concerning a health status of the fruit tree, and, in the third pruning mode, the attribute concerning the health status of the fruit tree has a lower priority level than in the first pruning mode.

### [Item c11]

The method of Item c10, wherein the attribute concerning the health status of the fruit tree includes a color of the cane.

### [Item c12]

The method of any one of Items c1 to c11, wherein the enabled/disabled setting(s) as to the one or more setting parameters includes at least one of a setting as to whether, after the one or more points where cutting is to be performed are determined, the one or more points where cutting is to be performed are to be redetermined or not, an enabled/disabled setting as to presenting the generated cut-point data to the user, and receiving a user instruction, an enabled/disabled setting as to, in the generation of the cut-point data, generating the cut-point data in such a manner that the cane is cut in a plane that is perpendicular to a direction in which the cane extends, an enabled/disabled setting as to determining at least two canes to be retained from among two or more canes of the fruit tree that are a subject of processing, a setting as to whether, in the determination of a number of buds to be retained on any cane determined as a cane to be retained among the canes of the fruit tree, a bud that is the closest to a base of the cane is to be included or not, an enabled/disabled setting as to, before determining the cane(s) to be retained from among one or more canes of the fruit tree that are a subject of processing, excluding any unpromising cane that is not suited for selection as the cane(s) to be retained, and an enabled/disabled setting as to, after determining one or more canes of the fruit tree that are a subject of processing to be a cane(s) to be removed or the cane(s) to be retained, determining whether to maintain or change the determination as to the cane(s) to be removed or the cane(s) to be retained based on a distribution of buds on the cane(s) determined as the cane(s) to be retained.

### [Item c13]

The method of any one of Items c1 to c12, wherein the user is able to change and save settings of the priority levels for the plurality of pruning modes and the enabled/disabled setting(s) as to the one or more setting parameters.

### [Item c14]

A system for generating cut-point data containing information indicating a three-dimensional position of a point on a cane of a fruit tree where the cane is to be cut off, the system including a sensor or sensors to acquire sensor data of a cane(s) of the fruit tree, and a data processor configured or programmed to generate the cut-point data of the cane(s) of the fruit tree based on the sensor data, wherein the data processor is configured or programmed to, from among a plurality of pruning modes having respectively different methods of determining a point(s) on the cane(s) of the fruit tree where cutting is to be performed, acquire information on a pruning mode that is selected by a user, based on the sensor data and on the selected pruning mode, determine one or more points where cutting is to be performed for the cane(s) of the fruit tree, and generate the cut-point data for each of the one or more points where cutting is to be performed, and the plurality of pruning modes include a first pruning mode, and a second pruning mode in which settings of priority levels of two or more attributes of the cane(s) of the fruit tree in the determination of the point or points where cutting is to be performed are identical to those of the first pruning mode and in which an enabled/disabled setting(s) as to one or more setting parameters capable of being enabled or disabled in the determination of the point or points where cutting is to be performed differ from that/those in the first pruning mode.

### [Item c15]

A system for generating cut-point data containing information indicating a three-dimensional position of a point on a cane of a fruit tree where the cane is to be cut off, the system including a sensor or sensors to acquire sensor data of the cane(s) of the fruit tree, and means for carrying out steps of the method of any one of Items c1 to c13.

### [Item c16]

The system of Item c14 or c15, further including a cutter to cut the cane(s) of the fruit tree and a controller configured or programmed to control a three-dimensional position of the cutter, wherein the data processor is configured or programmed to input the generated cut-point data to the controller, and the controller is configured or programmed to control a three-dimensional position of the cutter based on the cut-point data.

### [Item c17]

An agricultural machine including the system of any one of Items c14 to c16.

### [Item c18]

The agricultural machine of Item c17, further including an arm supporting the cutter, a support supporting the arm, and a driver to move the support, wherein the controller is configured or programmed to control the three-dimensional position of the cutter by controlling an operation of the arm.

### [Item d1]

A method carried out by a computer or computers to generate cut-point data containing information indicating a three-dimensional position of a point on a cane of a fruit tree where the cane is to be cut off, the method including acquiring information on a pruning mode that is selected by a user from among a plurality of pruning modes having respectively different methods of determining a point(s) on a cane(s) of the fruit tree where cutting is to be performed, each of the plurality of pruning modes having a cultivation method of the fruit tree allocated thereto, based on sensor data of the cane(s) of the fruit tree acquired by a sensor or sensors and based on the selected pruning mode, determining one or more points where cutting is to be performed for the cane(s) of the fruit tree, and generating the cut-point data for each of the one or more points where cutting is to be performed, wherein the method of determining the point(s) where cutting is to be performed is made to differ depending on the cultivation method of the fruit tree.

### [Item d2]

The method of Item d1, wherein the cultivation method of the fruit tree includes at least one of a shape of a trellis system of the fruit tree, a pruning method for the fruit tree, or a training method of the fruit tree.

### [Item d3]

The method of Item d1 or d2, further including inputting the generated cut-point data to a controller configured or programmed to control a three-dimensional position of a cutter to cut the cane(s) of the fruit tree.

### [Item d4]

The method of any one of Items d1 to d3, further including, before acquiring information on the pruning mode acquiring information on the fruit tree, and presenting a candidate for the pruning mode to the user based on the acquired information on the fruit tree.

### [Item d5]

The method of Item d4, wherein information on the fruit tree includes at least one of information on the cultivation method of the fruit tree, information on a cultivar of the fruit tree, information on an age of the fruit tree, or information on a field in which the fruit tree is located.

### [Item d6]

The method of Item d4 or d5, wherein the acquiring information on the fruit tree includes acquiring information on the fruit tree based on a user input.

### [Item d7]

The method of Item d4 or d5, wherein the acquiring information on the fruit tree includes acquiring information on the fruit tree based on sensor data of the fruit tree or a field in which the fruit tree is located.

### [Item d8]

The method of any one of Items d1 to d7, wherein settings of priority levels of two or more attributes of the cane(s) of the fruit tree in the determination of the point or points where cutting is to be performed and/or an enabled/disabled setting(s) as to one or more setting parameters capable of being enabled or disabled in the determination of the point or points where cutting is to be performed are made to differ depending on the cultivation method of the fruit tree.

### [Item d9]

The method of Item d8, wherein the settings of the priority levels are made to differ depending on the cultivation method of the fruit tree.

### [Item d10]

The method of Item d9, wherein, the two or more attributes include a length of the cane and/or a length between nodes of the cane, and a priority level(s) of a length of the cane and/or a length between nodes of the cane is made to differ depending on a pruning method for the fruit tree.

### [Item d11]

The method of Item d9 or d10, wherein, the two or more attributes include a direction in which buds on the cane are facing and/or a size of buds on the cane, and a priority level(s) of the direction in which buds on the cane are facing and/or the size of buds on the cane is made to differ depending on a pruning method for the fruit tree.

### [Item d12]

The method of any one of Items d8 to d11, wherein the two or more attributes include at least one of a color of the cane, a direction in which the cane extends, a thickness of the cane, a height of the base of the cane, a size of buds on the cane, a direction in which buds on the cane are facing, a length of the cane, or a length between nodes of the cane.

### [Item d13]

The method of any one of Items d8 to d12, wherein the enabled/disabled setting(s) as to the one or more setting parameters includes at least one of a setting as to whether, after the one or more points where cutting is to be performed are determined, the one or more points where cutting is to be performed are to be redetermined or not, an enabled/disabled setting as to presenting the generated cut-point data to the user, and receiving a user instruction, an enabled/disabled setting as to, in the generation of the cut-point data, generating the cut-point data in such a manner that the cane is cut in a plane that is perpendicular to a direction in which the cane extends, an enabled/disabled setting as to determining at least two canes to be retained from among two or more canes of the fruit tree that are a subject of processing, a setting as to whether, in the determination of a number of buds to be retained on any cane determined as a cane to be retained among the canes of the fruit tree, a bud that is the closest to a base of the cane is to be included or not, an enabled/disabled setting as to, before determining the cane(s) to be retained from among one or more canes of the fruit tree that are a subject of processing, excluding any unpromising cane that is not suited for selection as the cane(s) to be retained, and an enabled/disabled setting as to, after determining one or more canes of the fruit tree that are a subject of processing to be a cane(s) to be removed or the cane(s) to be retained, determining whether to maintain or change the determination as to the cane(s) to be removed or the cane(s) to be retained based on a distribution of buds on the cane(s) determined as the cane(s) to be retained.

### [Item d14]

The method of any one of Items d8 to d13, wherein the user is able to change and save settings of the priority levels for the plurality of pruning modes and an enabled/disabled setting(s) as to the one or more setting parameters.

### [Item d15]

A system for generating cut-point data containing information indicating a three-dimensional position of a point on a cane of a fruit tree where the cane is to be cut off, the system including a sensor or sensors to acquire sensor data of a cane(s) of the fruit tree, and a data processor configured or programmed to generate the cut-point data of the cane(s) of the fruit tree based on the sensor data, wherein, the data processor is configured or programmed to acquire information on a pruning mode that is selected by a user from among a plurality of pruning modes having respectively different methods of determining a point(s) on the cane(s) of the fruit tree where cutting is to be performed, each of the plurality of pruning modes having a cultivation method of the fruit tree allocated thereto, based on the sensor data and based on the selected pruning mode, determine the one or more points where cutting is to be performed for the cane(s) of the fruit tree, generate the cut-point data for each of the one or more points where cutting is to be performed, and the method of determining the point(s) where cutting is to be performed is made to differ depending on the cultivation method of the fruit tree.

### [Item d16]

A system for generating cut-point data containing information indicating a three-dimensional position of a point on a cane of a fruit tree where the cane is to be cut off, the system including a sensor or sensors to acquire sensor data of the cane(s) of the fruit tree, and means for carrying out the steps of the method of any one of Items d1 to d14.

### [Item d17]

The system of Item d15 or d16, further including a cutter to cut a cane(s) of the fruit tree and a controller configured or programmed to control a three-dimensional position of the cutter, wherein, the data processor is configured or programmed to input the generated cut-point data to the controller, and the controller is configured or programmed to control a three-dimensional position of the cutter based on the cut-point data.

### [Item d18]

An agricultural machine including the system of any one of Items d15 to d17.

### [Item d19]

The agricultural machine of Item d18, further including an arm supporting the cutter, a support supporting the arm, and a driver to move the support, wherein the controller is configured or programmed to control the three-dimensional position of the cutter by controlling an operation of the arm.

General or specific elements, steps, features, characteristics, etc., of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

According to example embodiments of the present disclosure, methods for generating cut-point data containing information indicating a three-dimensional position of a point on a cane of a fruit tree where the cane is to be cut off, systems for generating the cut-point data, and agricultural machines are provided and able to be used for promoting automation and unmanned application of pruning work for fruit trees while maintaining the fruit yield and quality.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1A** is a flowchart showing an example of a procedure of generating cut-point data of canes of a fruit tree, in a cut-point data generation method or cut-point data generation system for canes of a fruit tree according to an example embodiment of the present disclosure.
FIG. **1B** is a flowchart showing another example of a procedure of generating cut-point data of canes of a fruit tree, in a cut-point data generation method or cut-point data generation system for canes of a fruit tree according to an example embodiment of the present disclosure.
FIG. **1C** is a flowchart showing an example procedure in a method or a system according to an example embodiment of the present disclosure.
FIG. **1D** is a block diagram showing a schematic example configuration of a cut-point data generation system according to an example embodiment of the present disclosure.
FIG. **1E** is a block diagram showing an example configuration of a data processor included in a cut-point data generation system according to an example embodiment of the present disclosure.
FIG. **1F** is a schematic diagram showing an example configuration of a cut-point data generation system according to an example embodiment of the present disclosure.
FIG. **2** is a diagram schematically showing how an agricultural machine including a cut-point data generation system according to an example embodiment of the present disclosure moves in an orchard.
FIG. **3** is a front perspective view of a cut-point data generation system 1 according to an example embodiment of the present disclosure.
FIG. **4** is a schematic diagram showing enlarged a portion of the cut-point data generation system **1.**
FIG. **5A** is an example block diagram of a cloud system which includes a vehicle platform and which interacts with a cloud platform and a user platform.
FIG. **5B** is an example block diagram of a cloud system which includes a vehicle platform and which interacts with a cloud platform and a user platform.
FIG. **6A** is a schematic diagram for describing spur pruning.
FIG. **6B** is a schematic diagram for describing spur pruning.
FIG. **6C** is a schematic diagram for describing spur pruning.
FIG. **7A** is a schematic diagram for describing cane pruning.
FIG. **7B** is a schematic diagram for describing cane pruning.
FIG. **7C** is a schematic diagram for describing cane pruning.
FIG. **7D** is a schematic diagram for describing cane pruning.
FIG. **8** is a diagram showing an example of a plurality of pruning modes provided in a cut-point data generation system according to an example embodiment of the present disclosure.
FIG. **9A** is a diagram showing an example screen image on an operational terminal.
FIG. **9B** is a diagram showing an example screen image on the operational terminal.
FIG. **9C** is a diagram showing an example screen image on the operational terminal.
FIG. **10** is a flowchart showing an example procedure of generating cut-point data of canes of a fruit tree, according to an example embodiment of the present disclosure.
FIG. 11 is a flowchart showing a specific example of a process to be performed in step **S242.**
FIG. **12A** is a diagram for describing an example of a process to be performed in step **S242.**
FIG. **12B** is a diagram for describing an example of a process to be performed in step **S242.**
FIG. **12C** is a diagram for describing an example of a process to be performed in step **S242.**
FIG. **12D** is a diagram for describing an example method of setting a priority level for each attribute.
FIG. **12E** is a diagram for describing an example method of setting a priority level for each attribute.
FIG. **13** is a flowchart showing an example procedure of generating cut-point data of canes of a fruit tree, according to an example embodiment of the present disclosure.
FIG. **14** is a flowchart showing a specific example of a process to be performed in step **S240.**
FIG. **15** is a flowchart showing an example procedure of generating cut-point data of canes of a fruit tree, according to an example embodiment of the present disclosure.
FIG. **16** is a flowchart showing an example procedure of generating cut-point data of canes of a fruit tree, according to an example embodiment of the present disclosure.
FIG. **17A** is a flowchart showing an example procedure of generating cut-point data of canes of a fruit tree, according to an example embodiment of the present disclosure.
FIG. **17B** is a schematic diagram for describing setting parameter "Cutting Orientation".
FIG. **18** is a flowchart showing an example procedure of generating cut-point data of canes of a fruit tree, according to an example embodiment of the present disclosure.
FIG. **19** is a flowchart for describing an example procedure of generating cut-point data of canes of a fruit tree, according to an example embodiment of the present disclosure.
FIG. **20A** is a diagram showing an example of an image to be used by a cut-point data generation method and a cut-point data generation system according to an example embodiment of the present disclosure.
FIG. **20B** is a flowchart describing an example of a process to be performed in step **S241c.**
FIG. **20C** is a flowchart describing an example of a process to be performed in step **S241c.**
FIG. **20D** is a flowchart describing an example of a process to be performed in step **S241c.**
FIG. **21** is a flowchart showing an example procedure of generating cut-point data of canes of a fruit tree, according to an example embodiment of the present disclosure.
FIG. **22** is a schematic diagram for describing the processes in the flowchart of FIG. **21****.**
FIG. **23** is a flowchart for describing an example procedure of generating cut-point data of canes of a fruit tree, according to an example embodiment of the present disclosure.
FIG. **24** is a flowchart for describing an example procedure of generating cut-point data of canes of a fruit tree, according to an example embodiment of the present disclosure.
FIG. **25** is a flowchart for describing an example procedure of generating cut-point data of canes of a fruit tree, according to an example embodiment of the present disclosure.
FIG. **26A** is a diagram showing results of evaluating each pruning mode in FIG. **8** with respect to a plurality of evaluation items.
FIG. **26B** is a diagram showing results of evaluating each pruning mode in FIG. **8** with respect to a plurality of evaluation items.
FIG. **26C** is a diagram showing results of evaluating each pruning mode in FIG. **8** with respect to a plurality of evaluation items.
FIG. **27** is a diagram for describing example evaluation methods for the respective evaluation items in each pruning mode.
FIG. **28** is a diagram showing an example of a plurality of pruning modes provided in a cut-point data generation system according to an example embodiment of the present disclosure.
FIG. **29A** is a diagram showing results of evaluating each pruning mode in FIG. **28** with respect to a plurality of evaluation items.
FIG. **29B** is a diagram showing results of evaluating each pruning mode in FIG. **28** with respect to a plurality of evaluation items.
FIG. **29C** is a diagram showing results of evaluating each pruning mode in FIG. **28** with respect to a plurality of evaluation items.
FIG. **30A** is a diagram showing an example screen image on the operational terminal.
FIG. **30B** is a diagram showing an example screen image on the operational terminal.
FIG. **31** is a flowchart showing an example procedure of generating cut-point data of canes of a fruit tree, according to an example embodiment of the present disclosure.
FIG. **32A** is a schematic diagram for describing the acquisition of a measurement value or an image that is used for acquiring a measurement value concerning a direction in which a cane extends.
FIG. **32B** is a diagram showing a table illustrating examples of a plurality of classes, an evaluation criterion for each of the plurality of classes, and a score corresponding to each of the plurality of classes, regarding a direction in which a cane extends.
FIG. **32C** is a schematic diagram for describing the acquisition of a measurement value or an image that is used for acquiring a measurement value concerning a thickness of a cane.
FIG. **32D** is a diagram showing a table illustrating examples of a plurality of classes, an evaluation criterion for each of the plurality of classes, and a score corresponding to each of the plurality of classes, regarding a thickness of a cane.
FIG. **32E** is a schematic diagram for describing the acquisition of a measurement value or an image that is used for acquiring a measurement value concerning a height of the base of a cane.
FIG. **32F** is a diagram showing a table illustrating examples of a plurality of classes, an evaluation criterion for each of the plurality of classes, and a score corresponding to each of the plurality of classes, regarding a height of the base of a cane.
FIG. **32G** is a schematic diagram for describing the acquisition of a measurement value or an image that is used for acquiring a measurement value concerning a size of buds on a cane.
FIG. **32H** is a diagram showing a table illustrating examples of a plurality of classes, an evaluation criterion for each of the plurality of classes, and a score corresponding to each of the plurality of classes, regarding a size of buds on a cane.
FIG. **32I** is a schematic diagram for describing the acquisition of a measurement value or an image that is used for acquiring a measurement value concerning a direction in which buds on a cane are facing.
FIG. **32J** is a diagram showing a table illustrating examples of a plurality of classes, an evaluation criterion for each of the plurality of classes, and a score corresponding to each of the plurality of classes, regarding a direction in which buds on a cane are facing.
FIG. **32K** is a schematic diagram for describing the acquisition of a measurement value or an image that is used for acquiring a measurement value concerning a length of a cane.
FIG. **32L** is a diagram showing a table illustrating examples of a plurality of classes, an evaluation criterion for each of the plurality of classes, and a score corresponding to each of the plurality of classes, regarding a length of a cane.
FIG. **32M** is a schematic diagram for describing the acquisition of a measurement value or an image that is used for acquiring a measurement value concerning a length between nodes of a cane.
FIG. **32N** is a diagram showing a table illustrating examples of a plurality of classes, an evaluation criterion for each of the plurality of classes, and a score corresponding to each of the plurality of classes, regarding a length between nodes of a cane.
FIG. **32O** is a flowchart showing an example of a process of determining a factor score regarding the color of a cane.
FIG. **32P** is a flowchart showing an example of a process of calculating an angle of tilt **θp** and an azimuth angle **θa** of each cane.
FIG. **32Q** is a flowchart showing an example of a process of angle of tilt of a bud with respect to a direction that is orthogonal to the horizontal plane.
FIG. **32R** is a flowchart showing an example of a process of calculating a mean value of distances between coordinates of two adjacent buds.

### DETAILED DESCRIPTION OF THE EXAMPLE EMBODIMENTS

Hereinafter, with reference to the drawings, methods for generating cut-point data containing information indicating a three-dimensional position of a point on a cane of a fruit tree where the cane is to be cut off, systems for generating cut-point data, and agricultural machines according to example embodiments of the present disclosure will be described. The same reference characters in a plurality of drawings denote the same or similar parts.

The following example embodiments are exemplifications to give a concrete form to the technological concepts of the present invention, and the present invention is not limited to the following example embodiments. The size, material, shape, relative arrangement, etc., of any component are intended as examples, without intending to limit the scope of the present invention to only those. The size and relative positioning of the elements shown in each drawing may be exaggerated in order to facilitate understanding.

In the present disclosure, the notion "parallel" encompasses any two straight lines, sides, surfaces, etc., defining an angle in the range from 0° to 5°, unless otherwise specified, for example. In the present disclosure, the notion "perpendicular" or "orthogonal" encompasses any two straight lines, sides, faces, etc., making an angle within about ±5° of 90°, unless otherwise specified, for example. The angle defined by any two straight lines, sides, surfaces, etc., has a positive value, and not a negative value, unless otherwise specified.

### <method and system of generating cut-point data of canes of a fruit tree>

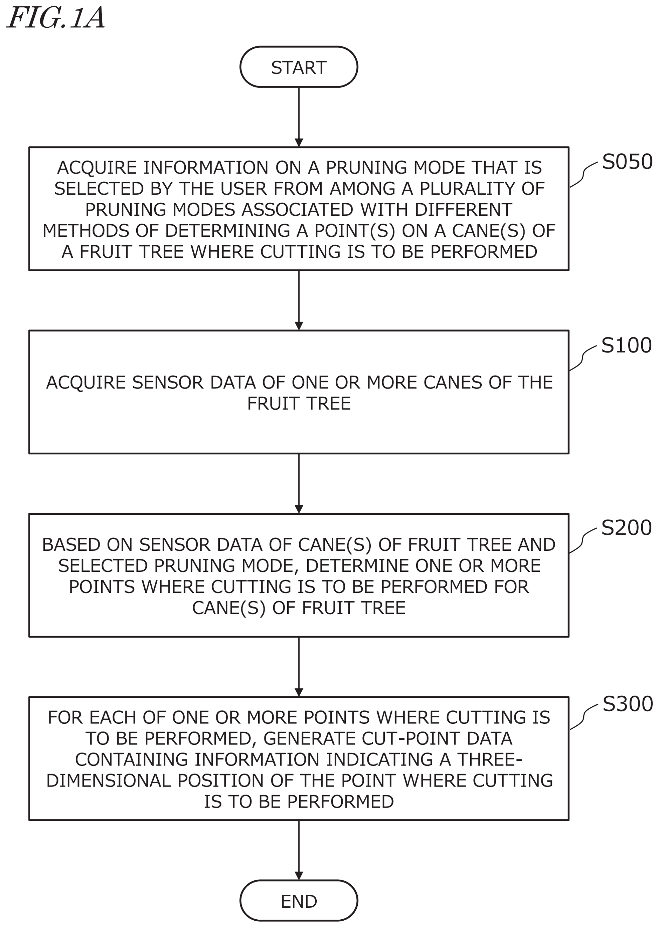

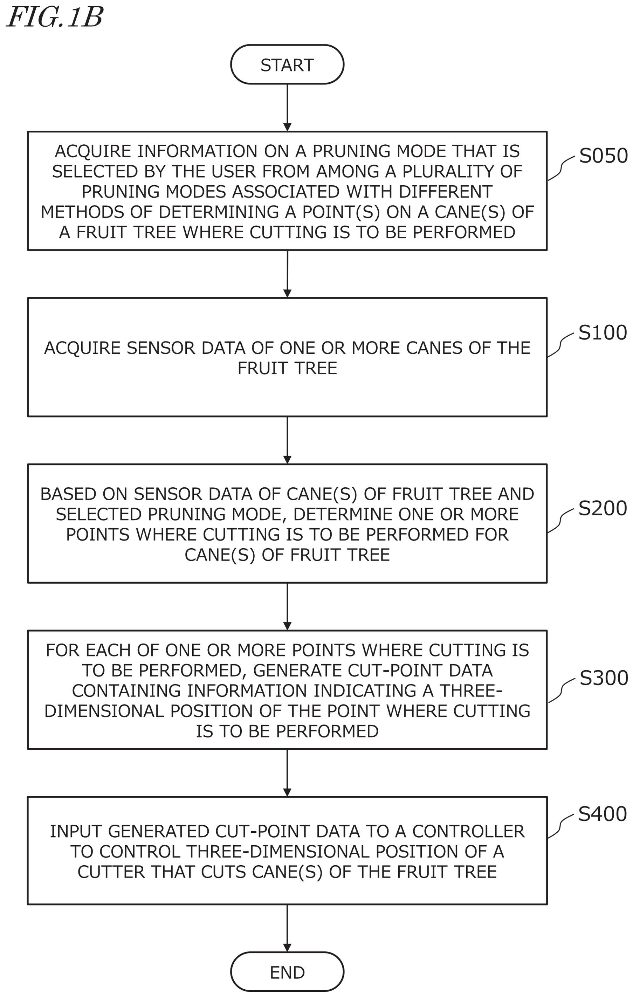

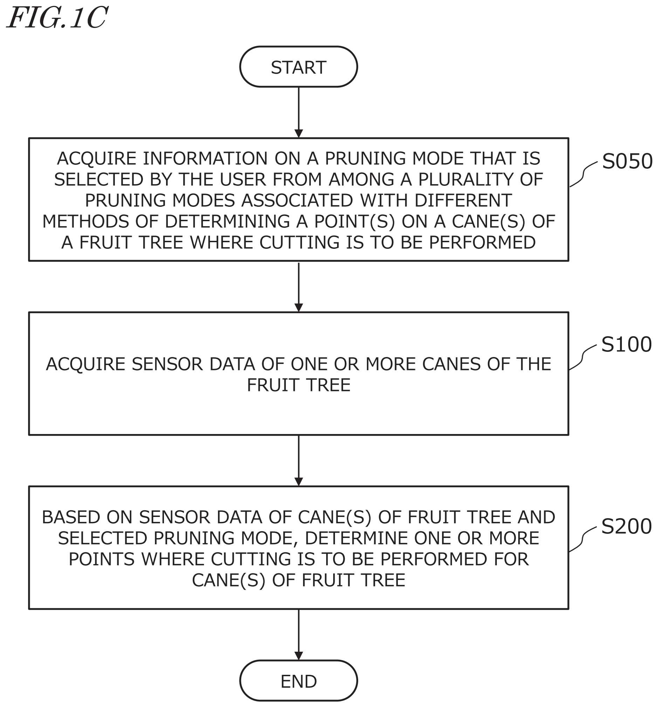

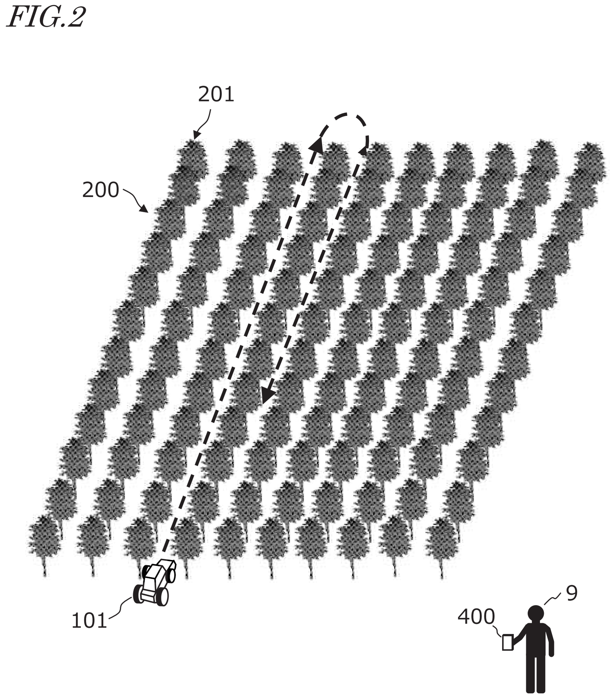

With reference to FIG. **1A****,** FIG. **1B****,** and FIG. **1C** as well as FIG. **2****,** a method of generating cut-point data of canes of a fruit tree according to an example embodiment of the present disclosure (which hereinafter may be referred to as a "cut-point data generation method") and a system for generating cut-point data of canes of a fruit tree (which hereinafter may be referred to as a "cut-point data generation system" or "cutting system") will be described. Cut-point data is data containing information indicating a three-dimensional position of a point on a cane of a fruit tree where the cane is to be cut off. As will be described below, a cut-point data generation method for canes of a fruit tree according to an example embodiment of the present disclosure may include determining a point on a cane of a fruit tree where the cane is to be cut off, and generating cut-point data for the determined point where cutting is to be performed.

FIG. **1A****,** FIG. **1B****,** and FIG. **1C** are flowcharts showing example procedures of generating cut-point data of canes of a fruit tree, by a cut-point data generation method for canes of a fruit tree according to an example embodiment of the present disclosure or a cut-point data generation system for canes of a fruit tree according to an example embodiment of the present disclosure. That is, a cut-point data generation method according to an example embodiment of the present disclosure includes steps described below. Herein, as in the example shown in FIG. **2****,** an example of generating cut-point data of canes of a fruit tree by using an agricultural machine **101** including the cut-point data generation system mounted thereto will be described.

FIG. 2 is a diagram schematically showing how the agricultural machine **101** including the cut-point data generation system moves in an orchard. In the example shown in FIG. **2****,** the cut-point data generation system is mounted on the agricultural machine **101** having a vehicle, and while moving among a plurality of tree rows **201** in an orchard (e.g., a vineyard), the agricultural machine **101** generates cut-point data of canes of fruit trees (e.g., grape vines) **200.** In this example, as a user **9** who is at a remote position from the agricultural machine **101** operates an operational terminal **400,** the cut-point data generation method by the cut-point data generation system can be changed or controlled. The user operating the operational terminal **400** may be on the agricultural machine **101.** The agricultural machine **101** moves among the plurality of tree rows **201** in the orchard along a path shown by a broken arrow in FIG. **2****,** for example. The agricultural machine **101** may make autonomous movements among the plurality of tree rows **201.** Without being limited to a work vehicle such as a tractor, the agricultural machine including the cut-point data generation system may be a transport vehicle, a mobile robot, a mobile robot, or an unmanned aerial vehicle (UAV, so-called drone) such as a multicopter. Although grape vines may be illustrated as fruit trees in the present specification, example embodiments of the present disclosure are applicable to more than just grape vines.

First, FIG. **1A** is referred to.

At step **S050,** information on a pruning mode that is selected by the user from among a plurality of pruning modes associated with different methods of determining a point on a cane of a fruit tree where cutting is to be performed is acquired. For example, a plurality of pruning modes associated with different methods of determining a point on a cane of a fruit tree where cutting is to be performed may be provided in the cut-point data generation system, and the user may select one pruning mode from among them. An example method of determining a point where cutting is to be performed for each of the plurality of pruning modes will be described later.

The plurality of pruning modes are recorded in a storage device that is internal or external to the agricultural machine **101** including the cut-point data generation system mounted thereto. The user **9** selects a pruning mode by operating the operational terminal **400,** for example. The operational terminal **400** to be operated by the user **9** may be a mobile type operational terminal that can be carried around, or a stationary type operational terminal. A stationary type operational terminal may be attached to the agricultural machine **101,** or provided at a remote place from the agricultural machine **101.** The operational terminal **400** may include a display device, e.g., a touch screen. The operational terminal **400** may further include one or more buttons. For example, the display device may be liquid crystal, organic light-emitting diode (OLED), or other displays. The operational terminal **400** may include a storage device. The plurality of pruning modes may be recorded in a storage device that is provided in the operational terminal **400.**

At step **S100,** the sensor data being acquired by a sensor or sensors, sensor data of a cane or canes of the fruit tree **200** is acquired. The sensor data may contain information indicating a three-dimensional structure of a plurality of canes of the fruit tree **200.** For example, a LiDAR sensor included in the agricultural machine **101** repeatedly outputs sensor data indicating a distance and direction toward each measurement point of a cane of the fruit tree **200,** or a three-dimensional coordinate values of each measurement point. An image of a cane of the fruit tree **200** acquired by a camera included in the agricultural machine **101** may be acquired, and an estimated depth of the cane of the fruit tree may be acquired based on the acquired image. The sensor data does not need to contain information indicating a three-dimensional structure of the plurality of canes of the fruit tree **200.** For example, an image of a cane(s) of the fruit tree **200** acquired by the camera **20** may be used as sensor data. As for the method of acquiring sensor data and the method of processing the acquired sensor data, the entire disclosure of U.S. Application No. 18/379,630 (the specification of U.S. Patent Application Publication No. 2024/0282105) is incorporated herein by reference and to which the person of the art can refer when considering the present disclosure. An identifier may be given to each fruit tree **200.** The sensor data acquired for each fruit tree **200** may be stored to a memory in association with the identifier of the corresponding fruit tree **200.**

The order of step **S050** and step **S100** may be arbitrary, and they may be performed concurrently (in parallel). Alternatively, the method of acquiring sensor data at step **S100** may be varied depending on the information on the pruning mode acquired in step **S050.** For example, based on the information on the pruning mode acquired in step **S050,** any sensor data that is needed for the method of determining a point where cutting is to be performed in that pruning mode may be acquired in step **S100.**

At step **S200,** based on the information on the pruning mode acquired in step **S050** and the sensor data acquired in step **S100,** one or more points where cutting is to be performed are determined for a cane(s) of the fruit tree **200.** Some or all of the plurality of canes possessed by the fruit tree **200** are the subject of step **S200.** As mentioned above, the method of determining a point where cutting is to be performed differs depending on the pruning mode that is selected by the user, and a point where cutting is to be performed is determined by a method that is in accordance with the selected pruning mode.

At step **S300,** for each point where cutting is to be performed as determined in step **S200,** cut-point data containing information indicating its three-dimensional position is generated.

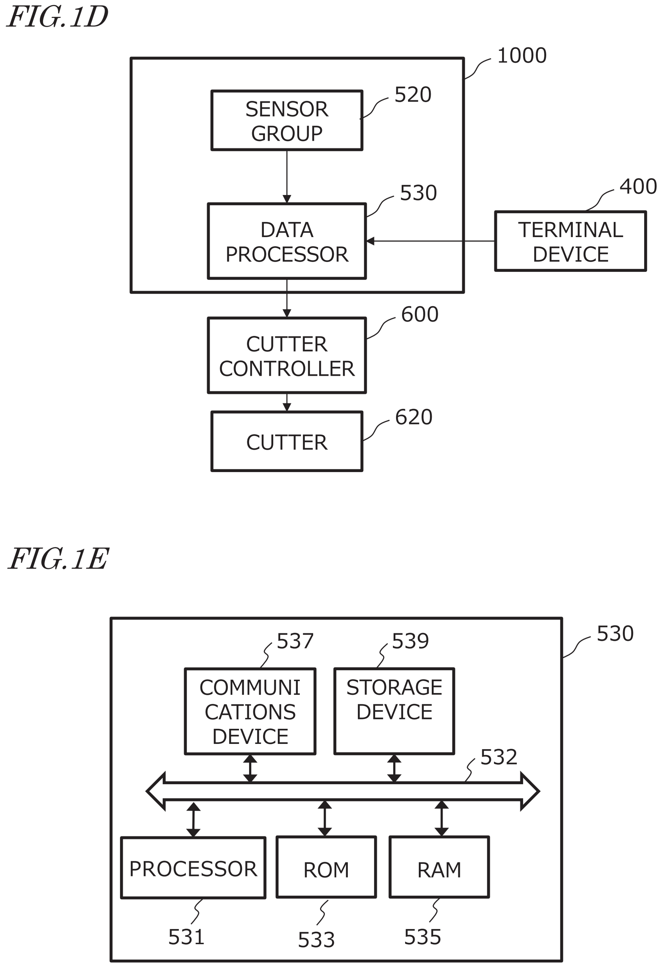

As in the example shown in FIG. **1B****,** the procedure of generating cut-point data of canes of a fruit tree may further include step **S400.** At step **S400,** the cut-point data generated in step **S300** is input to a controller **600** (see FIG. **1D**) configured or programmed to control the three-dimensional position of a cutter **620** (see FIG. **1D**) that cuts the canes of the fruit tree **200.** In this manner, the cutter **620** can be caused to perform cutting of the canes of the fruit tree **200.**

Acquisition of sensor data in step **S100** may be performed in cycles of once or multiple times per second, for example. In a period beginning from acquisition of sensor data at a given point in time and lasting until the next sensor data is acquired, the processes of step **S200** and step **S300** may be performed by a data processor. In such a case, the agricultural machine including a cutter can consecutively perform, while moving along a tree row, cutting canes with the cutter based on the cut-point data generated with respect to each fruit tree.

As in the example shown in FIG. **1C****,** step **S300** may be omitted in a method and system according to an example embodiment of the present disclosure. Such a system can output data indicating one or more points where cutting is to be performed as determined in **S200,** for example. Such data may be input to another system for generating cut-point data. Alternatively, such data may be used for prediction of a fruit yield, for example.

In the example of FIG. **1C****,** the method according to an example embodiment of the present disclosure includes acquiring information on a pruning mode that is selected by the user from among a plurality of pruning modes associated with different methods of determining a point on a cane of a fruit tree where cutting is to be performed (step **S050),** acquiring sensor data of one or more canes of the fruit tree, the sensor data being acquired by a sensor or sensors (step **S100**), and, based on the sensor data and information on the selected pruning mode, determining one or more points where cutting is to be performed for a cane(s) of the fruit tree (step **S200**).

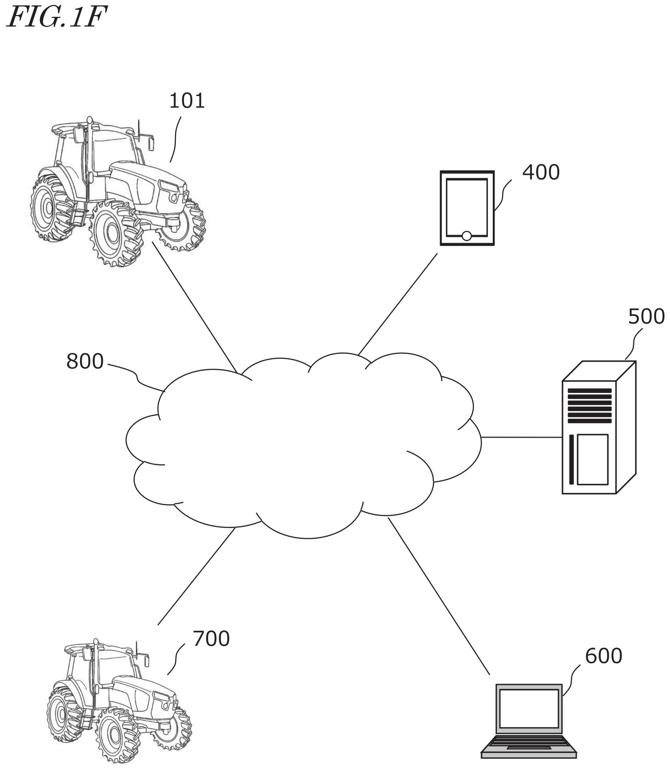

The processes of the aforementioned steps are performed by using a computer or computers. The computer or computers may include not only the processor(s) of a ECU(s) (Electric Control Unit) that is mounted on the agricultural machine including the cut-point data generation system, but also the processor(s) of a server computer(s) and/or a terminal device(s) (including mobile types and stationary types) that is connected to the cut-point data generation system via a communications network such as that shown in FIG. **1F**. Moreover, a data processor included in a cut-point data generation system according to an example embodiment of the present disclosure is configured or programmed to perform the processes of the aforementioned steps. Some or all functions of the data processor included in a cut-point data generation system according to an example embodiment of the present disclosure can be realized by a server computer(s) and/or a terminal device(s) (including mobile types and stationary types) that is connected to the cut-point data generation system via a communications network.

FIG. **1D** is a block diagram showing a schematic example configuration of a cut-point data generation system according to an example embodiment of the present disclosure. As shown in FIG. **1D****,** a cut-point data generation system **1000** according to an example embodiment of the present disclosure includes a sensor or sensors (sensor group) **520,** and a data processor **530** configured or programmed to generate cut-point data of canes of a fruit tree based on the sensor data acquired from the sensor group **520** and information on the selected pruning mode. The data processor **530** acquires information on a pruning mode that is selected by the user from a terminal device **400** being operated by the user, for example. The data processor **530** may be connected to a cutter controller (which may simply be referred to as a "controller") **600** configured or programmed to control the three-dimensional position of a cutter **620** (which may be referred to as a "cutting tool") that cuts canes of the fruit tree, for example. The cut-point data generation system **1000** may further include the cutter controller **600.** The cut-point data generation system **1000** may further include the cutter controller **600** and the cutter **620.**

The cut-point data generation system **1000** may be mounted on the agricultural machine that cuts the canes of the fruit tree, and a portion of or an entirety of the processing performed by the cut-point data generation system **1000** may be performed by a computer or computers located outside the agricultural machine that cuts the canes of the fruit tree. For example, it is possible to use sensor data which is acquired by a sensor(s) that is included in another agricultural machine distinct from the agricultural machine that cuts the canes of the fruit tree. Moreover, a server computer that is connected to a network may function as a portion of or an entirety of the data processor **530.** Various data that is necessary for the generation of cut-point data, including the plurality of pruning modes, may be recorded on a storage device that is included in the agricultural machine that cuts the canes of the fruit tree, or a portion of or an entirety of such data may be recorded in a storage device that is external to the agricultural machine. For example, a portion of or an entirety of such data may be recorded in a server computer that is connected to a network. The data processor **530** performing the processes of step **S200** and step **S300** may be mounted in the agricultural machine that cuts the canes of the fruit tree, or a computer or computers located outside the agricultural machine that cuts the canes of the fruit tree may be allowed to function as a portion of or an entirety of the data processor.

The sensor group **520** acquires sensor data of canes of the fruit tree (e.g., sensor data containing information indicating a three-dimensional structure of canes of the fruit tree). The sensor group **520** may include, for example, an imager, such as a camera to acquire an image of canes of the fruit tree (e.g., a stereo camera), a LiDAR sensor to acquire point cloud data by sensing canes of the fruit tree, and the like. The sensor group **520** may include one or more imagers and/or one or more LiDAR sensors.

The data processor **530** is a computer or computers configured or programmed to process the sensor data acquired by the sensor group **520.** For example, it can be realized by an electronic control unit (ECU) for image recognition purposes. The data processor **530** may include one or more processors and one or more memories. A portion of the processes to be performed by the data processor **530** may be performed inside (e.g., within the camera module) of the sensor group **520** (e.g., an imager), for example. In a case where both the sensor group **520** and the data processor **530** are included in the agricultural machine, the sensor group **520** and the data processor **530** may be communicatively connected via a bus, for example. In a case where the operational terminal **400** and the data processor **530** are both included in the agricultural machine, the operational terminal **400** and the data processor **530** are communicatively connected via a bus, for example.

The cutter controller **600** is a computer or computers configured or programmed to control the three-dimensional position of the cutter **620** based on the cut-point data generated by the data processor **530.** It is realized by a computer such as an electronic control unit (ECU) or electronic control units (ECUs), for example. In a case where the cutter **620** is supported on an arm, the cutter controller **600** further controls the operation of the arm supporting the cutter **620.**

As in the example of FIG. **1****,** in the case where the cut-point data generation system is mounted on an agricultural machine having a vehicle, the cut-point data generation system includes the cutting tool **24,** the robotic arm **22** supporting the cutting tool **24,** the base (support) **32** supporting the robotic arm **22,** and a driver to move the base **32.** The driver may include various devices that are needed for the driving of the travel of the agricultural machine, e.g., a prime mover, a transmission, and the like. As the ECU or ECUs included in the agricultural machine controls the prime mover, the transmission, the running gear (plurality of wheels **36**), etc., that are included in the driver, moving (e.g., travel) of the agricultural machine is controlled.

FIG. **1E** is a block diagram showing an example configuration of the data processor **530.** In the example of FIG. **1E****,** the data processor **530** includes a processor **531,** a ROM (Read Only Memory) **533,** a RAM (Random Access Memory) **535,** a communications device **537,** and a storage device **539.** These components may be interconnected via a bus **532.**

The processor **531** is a semiconductor integrated circuit, also called a central processing unit (CPU) or a microprocessor. The processor **531** may include a graphics processing unit (GPU). The processor **531** consecutively executes a computer program describing predetermined instructions and being stored in the ROM **533,** and achieves processes included in the cut-point data generation according to an example embodiment of the present disclosure. The data processor **530** may include a plurality of processors **531.** The plurality of processors **531** may work in cooperation to perform the processes that are necessary for the cut-point data generation according to the present disclosure. A portion of or an entirety of the processor **531** may be an FPGA (Field Programmable Gate Array), an ASIC (Application Specific Integrated Circuit), or an ASSP (Application Specific Standard Product) incorporating a CPU.

The communications device **537** is an interface to perform data communications between the data processor **530** and an external computer. The communications device **537** is capable of wired communications via a CAN (Controller Area Network) or the like, or wireless communications compliant with the Bluetooth (registered trademark) standards and/or the Wi-Fi (registered trademark) standards.

The storage device **539** is able to store sensor data acquired from the sensor group **520,** sensor data currently under processing, data currently under processing for generating cut-point data, etc. The storage device **539** includes a hard disk drive or a non-volatile semiconductor memory, for example.

The hardware configuration of the data processor **530** is not limited to the above example. It is not necessary for a portion of or an entirety of the data processor **530** to be mounted in the agricultural machine that cuts canes of a fruit tree. By utilizing the communications device **537,** a computer or computers located outside the agricultural machine that cuts the canes of a fruit tree may be allowed to function as a portion of or an entirety of the data processor **530.** For example, a computer or computers included in a server computer(s) and/or a terminal device(s) that is connected to a network may function as a portion of or an entirety of the data processor **530.** On the other hand, a computer or computers that is mounted in the agricultural machine that cuts canes of a fruit tree may perform all functions required of the data processor **530.**

An example of the "controller" in the present disclosure is a computer that includes at least one processor and at least one memory storing a computer program (code) defining control processes to be executed by the processor. Another example of the "controller" is a computer including an FPGA (Field-Programmable Gate Array), an ASSP (Application Specific Standard Product), an ASIC (Application-Specific Integrated Circuit), or other hardware accelerators configured to execute the control processes.

Similarly, an example of the "data processor" in the present disclosure is a computer including at least one processor and at least one memory storing a computer program (code) defining operating processes to be executed by the processor. Another example of the "data processor" is a computer including an FPGA, an ASIC, or other hardware accelerators configured to execute the operating processes.

A "processor" in the present disclosure is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or a portion of or an entirety of these functional units or blocks may be combined so as to be manufactured as a single integrated circuit chip.

A program defining the operation of a processor is designed so that the processor will execute one or more functions, manipulations, steps, or process according to an example embodiment of the present invention.

FIG. **1F** is a schematic diagram showing an example configuration of the cut-point data generation system. The data processor **530** is not limited to the example of being mounted in the agricultural machine **101.** In other words, some or all functions of the data processor **530** may be realized by a server(s) (computer(s)) **500** and/or a terminal device(s) **600** (including mobile types and stationary types) that is connected to the communications device **537** of the data processor **530** via a communications network **800.** The operational terminal **400** may also be connected to the communications network **800.** To such a communications network **800,** another agricultural machine (e.g., a tractor) **700** may be connected, and communications may be performed between the agricultural machine **101** having the data processor **530** and the other agricultural machine **700.** A portion of the data used in the processing by the data processor **530** via the communications network **800** may be fed from the other agricultural machine **700** to the data processor **530.**

### <example of cut-point data generation system>

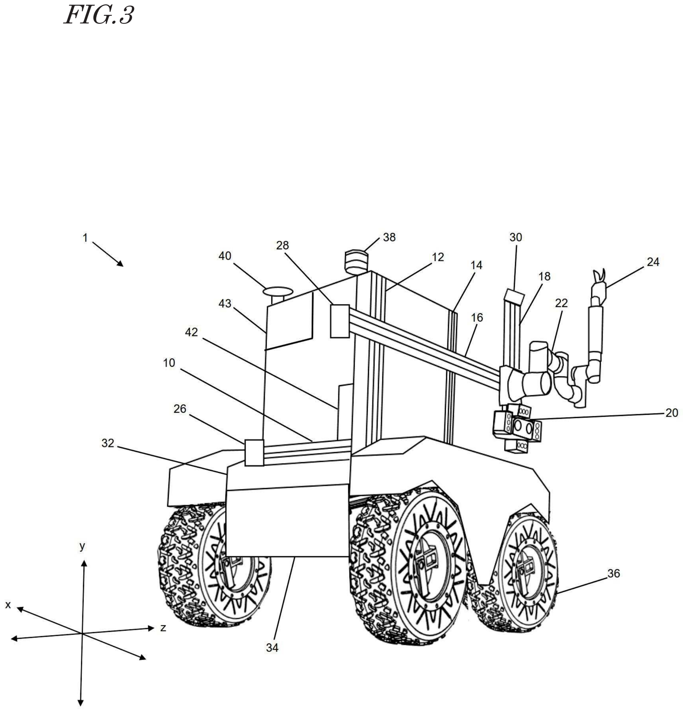

FIG. **3** shows a front perspective view of a cutting system **1** according to an example embodiment of the present invention. As shown in FIG. **3****,** the cutting system **1** can include a vehicle or the like. However, the cutting system **1** can be mounted on a cart that is able to be towed by a vehicle or a person, or a self-driving or self-propelled cart or vehicle.

As shown in FIG. **3****,** the cutting system **1** includes a base frame **10,** side frames **12** and **14,** a horizontal frame **16,** and a vertical frame **18.** The side frames **12** and **14** are mounted to the base frame **10,** and the side frames **12** and **14** directly support the horizontal frame **16.** The vertical frame **18** is mounted on the horizontal frame **16.** One or more devices, such as a camera **20,** a robotic arm **22,** and/or a cutting tool **24,** can be mounted on and supported by the vertical frame **18,** and/or others of the frames **10, 12, 14,** or **16,** for example.

The base frame **10** includes a base frame motor **26** that is able to move the side frames **12** and **14** along the base frame **10,** such that the one or more devices can be moved in a depth direction (the z-axis shown in FIG. **3****).** The horizontal frame **16** includes a horizontal frame motor **28** that is able to move the vertical frame **18** along the horizontal frame **16,** such that the one or more devices can be moved in a horizontal direction (the x-axis shown in FIG. 3). The vertical frame 18 includes a vertical frame motor 30 that is able to move the one or more devices along the vertical frame 18 in a vertical direction (the y-axis shown in FIG. 3). Each of the base frame motor 26, the horizontal frame motor 28, and the vertical frame motor 30 can be a screw motor, for example. Screw motors can provide a relatively high level of precision to accurately move and locate the one or more devices. However, each of the base frame motor 26, the horizontal frame motor 28, and the vertical frame motor 30 can be any motor that provides a continuous torque greater than or equal to about 0.2 Nm, and preferably any motor that provides a continuous torque greater than or equal to about 0.3 Nm, for example.

Each of the base frame motor 26, the horizontal frame motor 28, and the vertical frame motor **30** can be designed and/or sized according to an overall weight of the one or more devices. In addition, a coupler for each of the base frame motor **26,** the horizontal frame motor **28,** and the vertical frame motor **30** can be changed according to a motor shaft diameter and/or a corresponding mounting hole pattern.

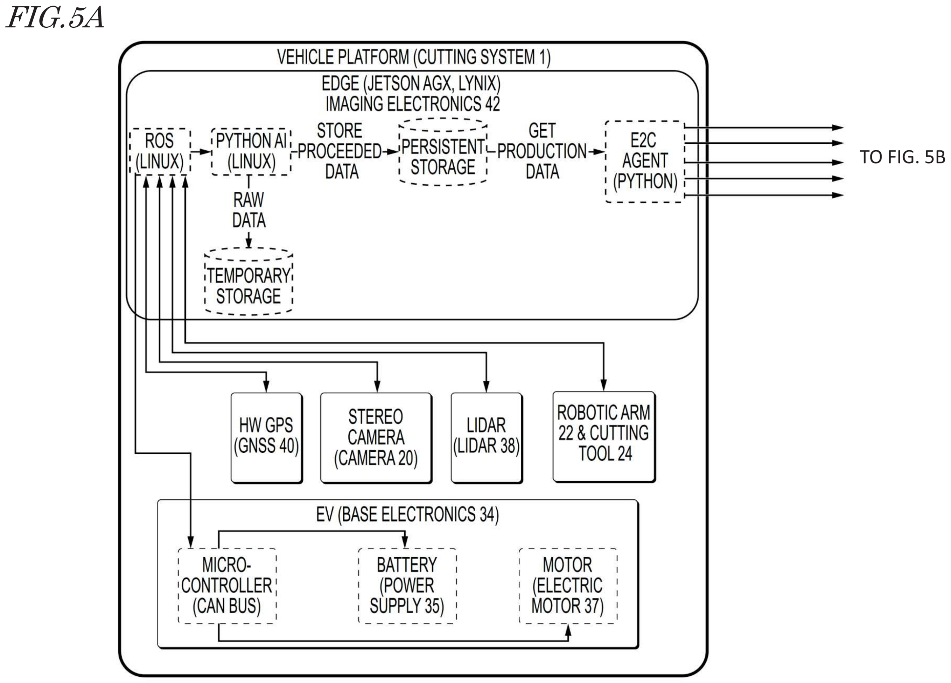

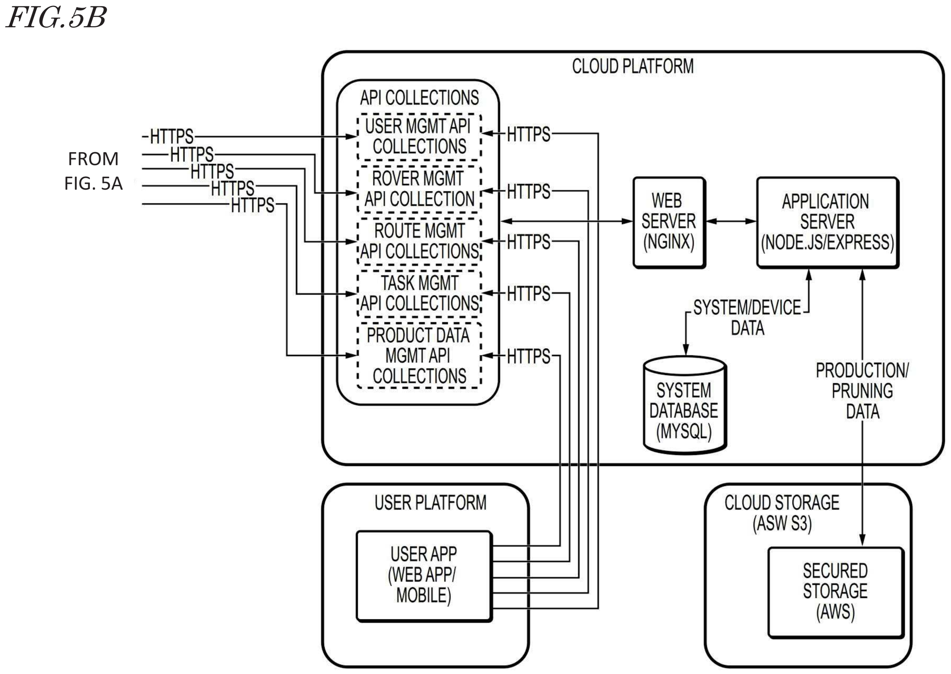

The base frame **10** can be mounted on a base **32,** and base electronics **34** can also be mounted to the base **32.** A plurality of wheels **36** can be mounted to the base **32.** The plurality of wheels **36** can be controlled by the base electronics **34,** and the base electronics **34** can include a power supply **35** to drive an electric motor **37** or the like, as shown in FIGS. **5A** and **5B****,** for example. As an example, the plurality of wheels **36** can be driven by an electric motor **37** with a target capacity of about 65 kW to about 75 kW and a power supply **35** for the electric motor **37** can be a battery with a capacity of about 100 kWh.

The base electronics **34** can also include processor and memory components that are configured or programmed to perform autonomous navigation of the cutting system **1.** Furthermore, as shown in FIG. **3****,** a LiDAR (light detection and ranging) system **38** and a Global Navigation Satellite System (GNSS) **40** can also be mounted to or supported by the base frame **10** or the base **32,** and/or others of the frames **10, 12, 14,** or **16,** for example, so that position data of the cutting system **1** can be determined. The LiDAR system **38** and GNSS **40** can be used for obstacle avoidance and navigation when the cutting system **1** is autonomously moved. Preferably, for example, the cutting system **1** can be implemented with a remote control interface, and can communicate via one or more of Ethernet, USB, wireless communications, and GPS RTK (real time kinematics). The remote control interface and communications devices can be included in one or both of the base electronics **34** and imaging electronics **42** (described below). As shown in FIG. **3****,** the cutting system **1** can also include, or be communicatively connected with, a display device **43** to display data and/or images obtained by the one or more devices and to display information provided by the base electronics **34** (for example, location, speed, battery life, and the like of the cutting system **1).** Alternatively, data and/or images obtained by the one or more devices and provided by the base electronics **34** can be displayed to a user through a user platform.

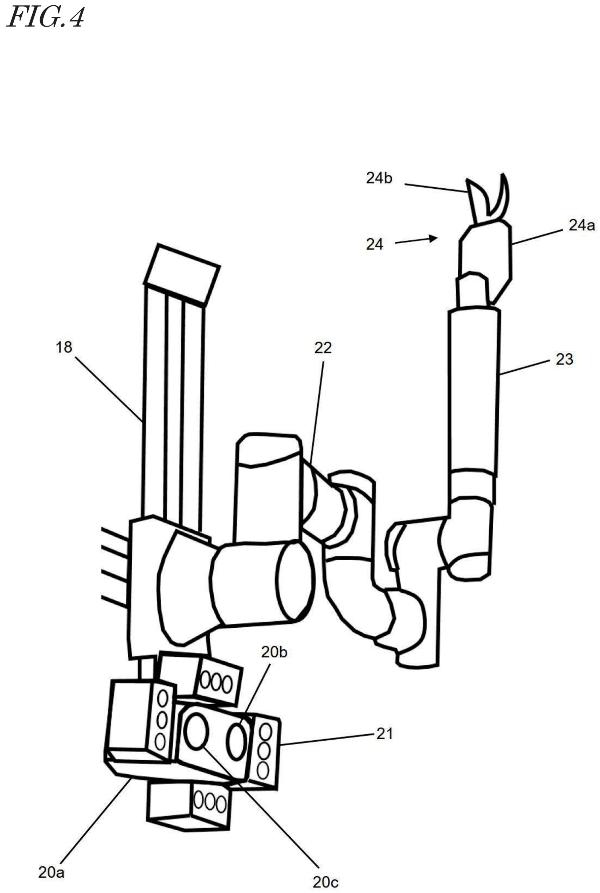

FIG. **4** is a close-up view of a portion of the cutting system 1 that includes the one or more devices. As shown in FIG. **4****,** the one or more devices can include the camera **20,** the robotic arm **22,** and the cutting tool **24,** which can be mounted to the vertical frame **18,** and/or others of the frames **10, 12, 14,** or **16,** for example. Additional ones of the one or more devices can also be provided on the vertical frame **18,** and/or others of the frames **10, 12, 14,** or **16, for** example.

The camera **20** can include a stereo camera, an RGB camera, and the like. As shown in FIG. **4****,** the camera **20** can include a main body **20a** that includes a first camera/lens **20b** (e.g., a left camera/lens) and a second camera/lens **20c** (e.g., a right camera/lens). Alternatively, the main body **20a** is able to include more than two cameras/lenses. The resolution of the camera **20** can be 1536 x 2048 pixels or 2448 x 2048 pixels, for example, but the camera **20** can alternatively have a different resolution. The camera 20 can include, for example, PointGrey CM3-U3-31S4C-CS or PointGrey CM3-U3-50S5C sensors, 3.5 mm f/2.4 or 5 mm f/1.7 lens, and a field of view of 74.2535 x 90.5344 or 70.4870 x 80.3662. However, the camera 20 is able to include other sensors and lenses, and to have a different field of view.

One or more light sources **21** can be attached to one or more sides of the main body **20a** of the camera **20.** The light sources **21** can include an LED light source that faces the same direction as the one or more devices such as the camera **20,** for example, along the z-axis shown in FIG. **3****.** The light sources **21** can provide illumination of an object or objects to be imaged by the camera **20.** For example, the light sources **21** can operate as a flash during daytime operation to compensate for ambient light when capturing images with the camera **20.** During nighttime operation, the light sources **21** can operate as either a flash for the camera **20,** or the light sources can provide constant illumination for the camera **20.** In an example embodiment, the one or more light sources **21** include **100** watt LED modules, for example, but LED modules having a different wattage (e.g., 40 watts or 60 watts) can also be used.

The robotic arm **22** can include a robotic arm known to a person of ordinary skill in the art, such the Universal Robot 3 e-series robotic arm and the Universal Robot 5 e-series robotic arm. The robotic arm **22,** also known as an articulated robotic arm, can include a plurality of joints that act as axes that enable a degree of movement, wherein the higher number of rotary joints the robotic arm **22** includes, the more freedom of movement the robotic arm **22** has. For example, the robotic arm **22** can include four to six joints, which provide the same number of axes of rotation for movement.

In an example embodiment of the present invention, a controller can be configured or programmed to control movement of the robotic arm **22.** For example, the controller can be configured or programmed to control the movement of the robotic arm **22** to which the cutting tool **24** is attached to position the cutting tool **24** in accordance with the steps discussed below. For example, the controller can be configured or programmed to control movement of the robotic arm **22** based on a location of a cut-point located on an agricultural item of interest.

In an example embodiment of the present invention, the cutting tool 24 includes a main body 24a and a blade portion 24b, as shown in FIG. 4, for example. The blade portion 24b can include a driven blade that moves with respect to a fixed blade and is actuated to perform a cutting action together with the fixed blade. The cutting tool 24 can include, for example, a cutting device as disclosed in U. S. Application No. 17/961,666 (the specification of U. S. Patent Application Publication No. 2024/0116193) titled "End Effector Including Cutting Blade and Pulley Assembly" which is incorporated in its entirety by reference herein and to which the person of the art can refer when considering the present disclosure.

In an example embodiment of the present invention, the cutting tool 24 can be attached to the robotic arm 22 using a robotic arm mount assembly 23. The robotic arm mount assembly 23 can include, for example, a robotic arm mount assembly as disclosed in U. S. Application No. 17/961,668 (the specification of U. S. Patent Application Publication No. 2024/0116173) titled "Robotic Arm Mount Assembly Including Rack and Pinion" which is incorporated in its entirety by reference herein and to which the person of the art can refer when considering the present disclosure.

The cutting system 1 can include imaging electronics 42 that can be mounted on the side frame 12 or the side frame 14, as shown in FIG. 3, for example. The imaging electronics 42 can supply power to and control each of the base frame motor 26, the horizontal frame motor 28, and the vertical frame motor 30. That is, the imaging electronics 42 can include a power source to supply power to each of the base frame motor **26,** the horizontal frame motor **28,** and the vertical frame motor 30. In addition, the imaging electronics 42 can include processor and memory components that are configured or programmed to control each of the base frame motor 26, the horizontal frame motor 28, and the vertical frame motor 30. The processor and memory components of the imaging electronics 42 can also be configured or programmed to control the one or more devices, including the camera 20, the robotic arm 22, the robotic arm mount assembly 23, and the cutting tool 24. In addition, the processor and memory components of the imaging electronics 42 can be configured or programmed to process image data obtained by the camera 20.

As described above, the imaging electronics 42 and the base electronics 34 can include processors and memory components. The processors may be hardware processors, multipurpose processors, microprocessors, special purpose processors, digital signal processors (DPSs), and/or other types of processing components configured or programmed to process data. The memory components may include one or more of volatile, non-volatile, and/or replaceable data storage components. For example, the memory components may include magnetic, optical, and/or flash storage components that may be integrated in whole or in part with the processors. The memory components may store instructions and/or instruction sets or programs that are able to be read and/or executed by the processors.

According to another preferred example embodiment of the present invention, the imaging electronics 42 can be partially or completely implemented by the base electronics 34. For example, each of the base frame motor 26, the horizontal frame motor 28, and the vertical frame motor 30 can receive power from and/or be controlled by the base electronics 34 instead of the imaging electronics 42.

According to further preferred example embodiments of the present invention, the imaging electronics **42** can be connected to a power supply or power supplies that are separate from the base electronics **34.** For example, a power supply can be included in one or both of the imaging electronics **42** and the base electronics **34.** In addition, the base frame **10** may be detachably attached to the base **32,** such that the base frame **10,** the side frames **12** and **14,** the horizontal frame **16,** the vertical frame **18,** and the components mounted thereto can be mounted on another vehicle or the like.

The base frame motor **26,** the horizontal frame motor **28,** and the vertical frame motor **30** are able to move the one or more devices in three separate directions or along three separate axes. However, according to another preferred example embodiment of the present invention, only a portion of the one or more devices such as the camera **20,** the robotic arm **22,** and the cutting tool **24,** can be moved by the base frame motor **26,** the horizontal frame motor **28,** and the vertical frame motor **30.** For example, the base frame motor **26,** the horizontal frame motor **28,** and the vertical frame motor **30** may move only the camera **20.** Furthermore, the cutting system **1** can be configured or programmed to linearly move the camera **20** along only a single axis while the camera captures a plurality of images, as discussed below. For example, the horizontal frame motor **28** can be configured to linearly move the camera **20** across an agricultural item of interest, such as a grape vine, and the camera **20** can capture a plurality of images of the grape vine.

The imaging electronics **42** and the base electronics **32** of the cutting system **1** can each be partially or completely implemented by edge computing to provide a vehicle platform, for example, by an NVIDIA^{®} JETSON^{™} AGX computer. In an example embodiment of the present invention, the edge computing provides all of the computation and communication needs of the cutting system 1. FIGS. **5A** and **5B** show an example block diagram of a cloud system which includes a vehicle platform and which interacts with a cloud platform and a user platform. As shown in FIGS. **5A** and **5B****,** the edge computing of the vehicle platform includes a cloud agent, which is a service-based component that facilitates communication between the vehicle platform and the cloud platform. For example, the cloud agent can receive command and instruction data from the cloud platform (e.g., a web application on the cloud platform), and then transfer the command and instruction data to corresponding components of the vehicle platform. As another example, the cloud agent can transmit operation data and production data to the cloud platform. Preferably, the cloud platform can include software components and data storage to maintain overall operation of the cloud system. The cloud platform preferably provides enterprise-level services with on-demand capacity, fault tolerance, and high availability (for example, AMAZON WEB SERVICES^{™}). The cloud platform includes one or more application programming interfaces (APIs) to communicate with the vehicle platform and with the user platform. Preferably, the APIs are protected with a high level of security and a capacity of each of the APIs can be automatically adjusted to meet computational loads. The user platform provides a dashboard to control the cloud system and to receive data obtained by the vehicle platform and the cloud platform. The dashboard can be implemented by a web-based (e.g., internet browser) application, a mobile application, a desktop application, and the like.

As an example, the edge computing of the vehicle platform shown in FIGS. **5A** and **5B** can obtain data from a HW (hardware) GPS (Global Positioning System) (for example, GNSS **40)** and LiDAR data (for example, from the LiDAR system **38).** In addition, the vehicle platform can obtain data from the camera **20.** The edge computing of the vehicle platform can include a temporary storage, for example, to store raw data obtained by the camera **20.** The edge computing of the vehicle platform can also include a persistent storage, for example, to store processed data. As a specific example, camera data stored in the temporary storage can be processed by an artificial intelligence (AI) model, the camera data can then be stored in the persistent storage, and the cloud agent can retrieve and transmit the camera data from the persistent storage.

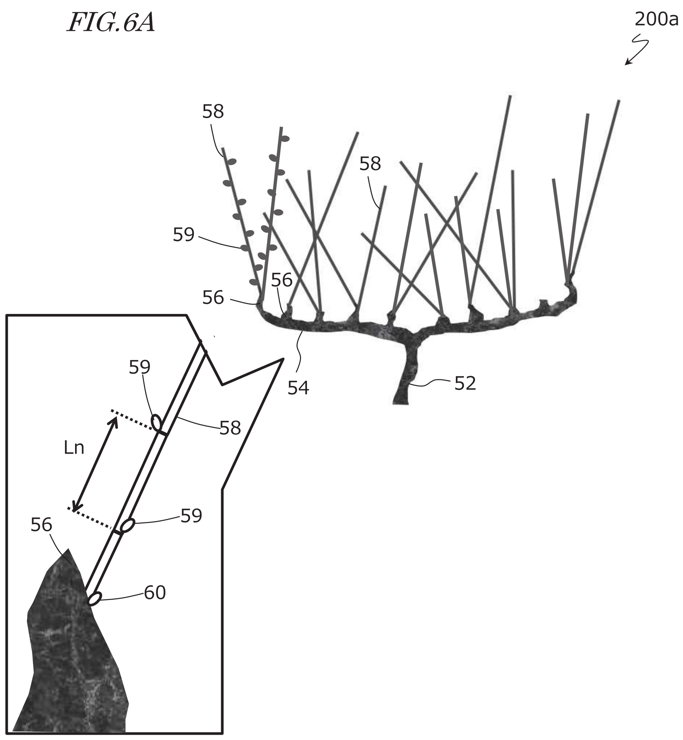

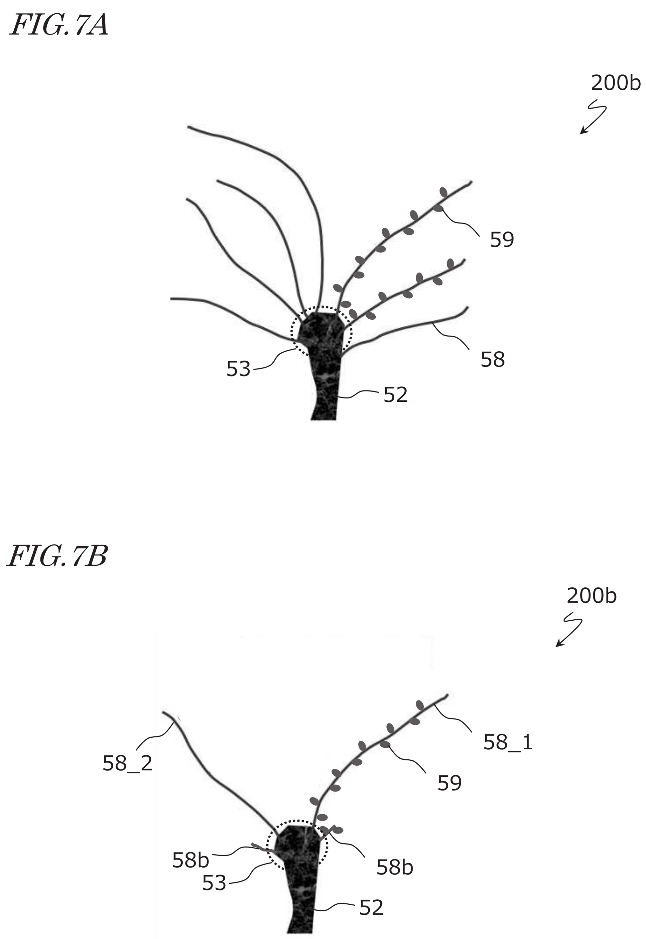

With reference to FIGS. **6A** to **6C** and FIGS. **7A** to **7D****,** examples of pruning methods for the fruit tree (pruning methods) will be described. As will be described below, depending on the pruning method for the fruit tree, there may be cases where cut-point data will be generated also for each cane determined as a cane to be retained, and cases where no cut-point data will be generated for each cane determined as a cane to be retained.

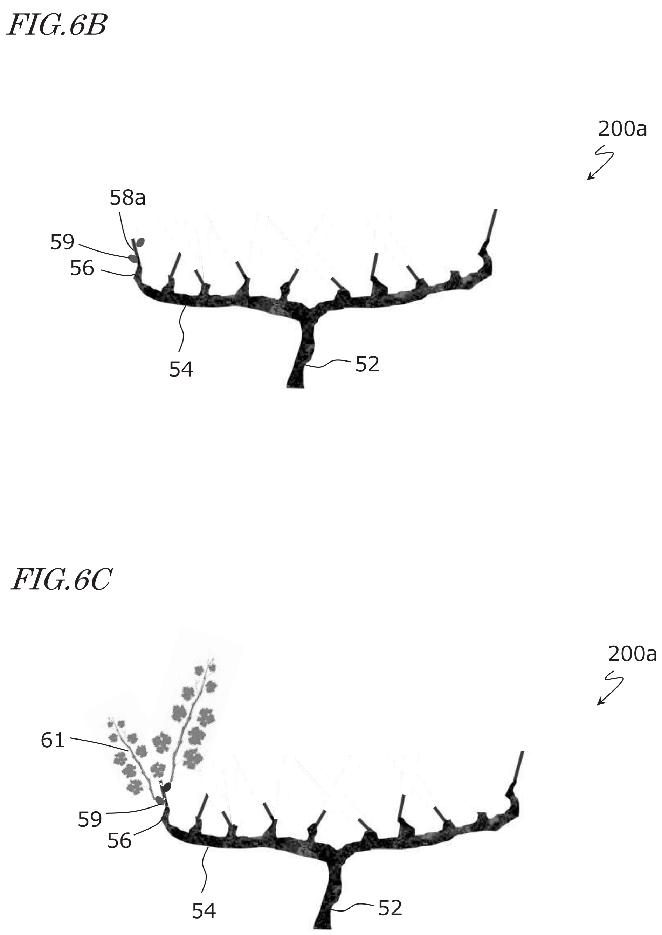

First, with reference to FIG. **6A****,** FIG. **6B,** and FIG. **6C****,** spur pruning will be described. FIG. **6A****,** FIG. **6B,** and FIG. **6C** are schematic diagrams for describing spur pruning. FIG. **6A** schematically shows a fruit tree **200a** before pruning, for which harvesting has been finished and whose leaves have fallen, and a portion of the fruit tree **200a** is shown enlarged in a balloon. FIG. **6B** schematically shows the fruit tree **200a** having been pruned from the state in FIG. **6A****,** and FIG. **6C** schematically shows the fruit tree **200a** thereafter. For simplicity, buds **59** and shoots **61** are only illustrated for less than all canes **58,** while they are omitted for any other canes **58.**

As shown in FIG. **6A****,** the fruit tree **200a** has a plurality of spurs **56,** each spur **56** having a plurality of canes **58** growing therefrom. Each cane **58** has buds **59.** A basal bud **60,** which is located the closest to the base of each cane **58** (i.e., on the closer side to the spur **56)** is distinguished from the other buds **59** in the illustration. Among the buds **59** on each cane **58,** the distance between two adjacent buds **59** is referred to as a length **Ln** between the nodes. In spur pruning, as shown in FIG. **6B****,** among the plurality of canes **58** growing from each spur **56,** typically only one each is retained, while all other canes **58** are removed. As for the cane **58** to be retained, too, it is cut short so as to include only a few (e.g., 2 or 3) buds **59.** A cane **58** that has been cut short but is retained is indicated with reference numeral **"58a".** This retained cane **58a** may be referred to as a fruiting cane. As a result of growing from the state in FIG. **6B****,** as shown in FIG. **6C****,** shoots **61** that have sprouted from the buds **59** on the fruiting cane **58a** grow into canes, and bear fruits. The shoots **61** that have grown change into canes, thus becoming a target of pruning in the next period of dormancy (e.g., the next winter). Note that, for the purpose of the pruning during the next period of dormancy, the fruiting cane **58a** and the spur **56** may be collectively referred to as a spur.

In the illustrated example, the plurality of spurs **56** are supported by thick canes **54** that extend substantially along the horizontal direction. The thick canes **54** are supported by a trunk **52** that extends substantially along the vertical direction from the ground surface. The thick canes **54** may be called cordons. Such a training method may be referred to as cordon training. As in the illustrated example, a training method where two cordons **54** extend from the trunk **52** (e.g., two cordons **54** extend on both the right and left sides of the trunk **52)** is called double-cordon training or bilateral-cordon training. On the other hand, a training method where only one cordon **54** extends from the trunk **52** is called single-cordon training. Depending on the training method, the fruit tree may not have any cordon **54** that extends substantially along the horizontal direction. For example, in head training, all of the plurality of canes grow from a head that is located above the trunk, such that no cordons exist between the trunk and the canes.

In the illustrated example, among the plurality of canes **58** growing from each spur **56,** only one cane **58** is retained as a fruiting cane, but this example is not limiting. For example, in addition to a fruiting cane, a renewal cane (reserve fruiting cane) may further be retained. The renewal cane is cut short so as to only include a few buds (e.g., two or three).

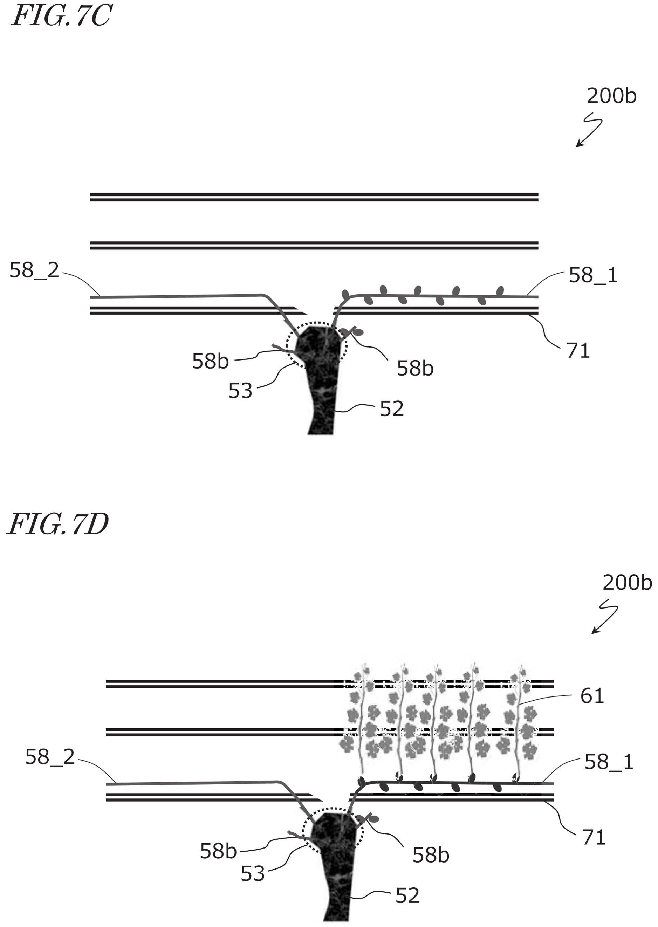

With reference to FIGS. **7A** to **7D****,** cane pruning will be described. FIGS. **7A** to **7D** are schematic diagrams for describing cane pruning. FIG. **7A** schematically shows a fruit tree **200b** before pruning, for which harvesting has been finished and whose leaves have fallen, FIG. **7B** schematically shows the fruit tree **200b** having been pruned from the state in FIG. **7A****,** FIG. **7C** schematically shows the fruit tree **200b** having undergone drawing and tying work from the state in FIG. **7B****,** and FIG. **7D** schematically shows the fruit tree **200b** thereafter. For simplicity, buds **59** and shoots **61** are only illustrated for less than all canes **58,** while they are omitted for any other canes **58.**

In cane pruning, among the plurality of canes **58** growing from the head 53 of the trunk 52 as shown in FIG. **7A****,** a few (e.g., about two to four) canes **58** are retained, while all other canes **58** are removed, as shown in FIG. **7B****.** In the illustrated example, two canes **58_1** and **58_2** are retained among the plurality of canes **58.** In cane pruning, the canes **58** to be retained **(58_1** and **58_2)** are basically not cut. As shown in FIG. **7C****,** after pruning work, drawing and tying work for the retained canes **58** is performed. In order to determine the direction for shoots to extend from the buds **59** on any retained cane **58,** the retained cane **58** is bent in a desired direction, and fixed to a wire **71.** In this example, for instance, the retained cane **58** is fixed to the wire **71** extending substantially along the horizontal direction so that it will extend substantially along the horizontal direction. The wire **71** may be supported by a post(s) extending substantially along the vertical direction, for example. As a result of growing from the state in FIG. **7C****,** as shown in FIG. **7D****,** the shoots **61** sprouting from the buds **59** on the retained cane **58** will grow and bear fruits. The retained cane **58** may be referred to as fruiting canes.

In cane pruning, the number of canes **58** to be retained may also vary depending on the training method for the fruit tree, for example. As in the illustrated example, in a case of allowing the fruiting canes **58** to extend on both the right and left sides of the trunk **52,** two canes **58** to be retained are chosen. As in the illustrated example, a training method where two fruiting canes **58** extend from the trunk **52** is called double guyot training. On the other hand, a training method where only one fruiting cane extends from the trunk **52** is called single guyot training. Note that the training method illustrated in the figure may be classified as head training (head-trained) because no thick canes that extend substantially along the horizontal direction exist and all of the plurality of fruiting canes **58** grow from the head **53** located above the trunk **52.**

As in the illustrated example, a trellis system that is configured so that shoots (or canes) extend upward along the vertical direction is said to have a shape called VSP (vertical shoot position). The trellis system may include posts, wires, nets, etc., to support the canes and vines of plants.

As in the illustrated example, in addition to a predetermined number (two in the figure) of fruiting canes **58,** renewal canes **58b** may be further retained. The renewal canes **58b** are retained after being cut short so as to possess a predetermined number (e.g., a few) of buds **59.**

In the present specification, the shape of the trellis system of the fruit tree, the pruning method for the fruit tree, and the training method of the fruit tree may be collectively referred to as the "cultivation method of the fruit tree". In other words, the cultivation method of the fruit tree is determined based on a factor including at least one of: the shape of the trellis system of the fruit tree, the pruning method for the fruit tree, and the training method of the fruit tree. The "cultivation method of the fruit tree" is to be interpreted as inclusive of the field design. For example, in a case where the fruit tree is a grape vine, the cultivation method of the grape vine includes vineyard design. In other words, it is based on a factor including at least one of the field design (e.g., vineyard design), the shape of the trellis system of the fruit tree (e.g., a grape vine), the pruning method, or the training method.

### <examples of the plurality of pruning modes>

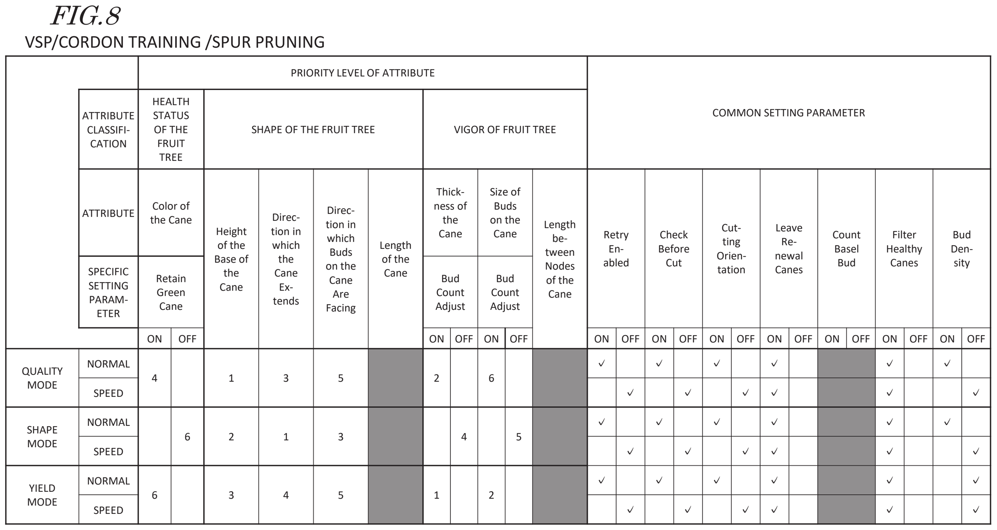

FIG. **8** shows an example of a plurality of pruning modes provided in the cut-point data generation system.

In the example of FIG. **8****,** the plurality of pruning modes are generally classified into the three kinds of "Quality mode", in which the quality of pruning has priority, "Shape mode", in which the shape of the fruit tree has priority, and "Yield mode", in which the fruit yield has priority. For each of the three kinds, "Normal Type" and "Speed Type" are provided, where "Speed Type" gives priority to reducing the amount of time required for pruning work relative to Normal Type. In other words, in the example of FIG. **8****,** a total of six kinds of pruning modes are provided. The six kinds of pruning modes have respectively different methods of determining a point on a cane of a fruit tree where cutting is to be performed. In the table of FIG. **8****,** as settings concerning the method of determining a point where cutting is to be performed in each pruning mode, priority level settings as to cane attributes used in the determination of a point where cutting is to be performed are indicated by numbers "1" to "6". Also, enabled/disabled settings as to setting parameters that are capable of being enabled or disabled are respectively indicated by "ON" or "OFF". The smaller the priority level of a cane attribute is, the higher the priority level is. The setting parameters that are capable of being enabled or disabled may include setting parameters concerning specific attributes (which may be referred to as "specific setting parameters"), and setting parameters that are common to all attributes (which may be referred to as "common setting parameters"). In the example of FIG. **8****,** the six kinds of pruning modes have respectively different methods of determining a point on a cane of a fruit tree where cutting is to be performed, on account of a mutual difference in at least one of: priority level settings as to attributes, and enabled/disabled settings as to setting parameters, although details of "priority level settings as to attributes" and "enabled/disabled settings as to setting parameters" will be described below.

In the example of FIG. **8****,** the six kinds of pruning modes are identical with respect to their combination of cane attributes that are used in the determination of a point where cutting is to be performed. In the table of FIG. **8****,** the attributes "length of the cane" and "length between nodes of the cane" are shown hatched to indicate that they are not used in the determination of a point where cutting is to be performed in this example. However, example embodiments of the present disclosure are not limited to this example. In example embodiments of the present disclosure, the plurality of pruning modes may mutually differ with respect to the kind(s) or combination of one or more cane attributes used in the determination of a point where cutting is to be performed, such that they have respectively different methods of determining a point on a cane of a fruit tree where cutting is to be performed.

In the example of FIG. **8****,** the six kinds of pruning modes are identical with respect to their combination of setting parameters that are capable of being enabled or disabled and being used in the determination of a point where cutting is to be performed. In the table of FIG. **8****,** the enabled/disabled setting as to the setting parameter "Count Basel Bud" is shown hatched to indicate that it is not used in the determination of a point where cutting is to be performed in this example. However, example embodiments of the present disclosure are not limited to this example. In example embodiments of the present disclosure, the plurality of pruning modes may mutually differ with respect to their kind(s) or combination of one or more setting parameters that are capable of being enabled or disabled and being used in the determination of a point where cutting is to be performed, such that they have respectively different methods of determining a point on a cane of a fruit tree where cutting is to be performed.

The example shown in FIG. 8 is an example of a plurality of pruning modes that are provided for a cultivation method of the fruit tree that is determined by the combination: trellis system = VSP; training method = cordon training; pruning method = spur pruning. However, applications are possible without being limited to this cultivation method.

In performing pruning work for the fruit tree, the user can select one pruning mode from among the plurality of pruning modes in accordance with his or her needs (e.g., cultivar and state of the fruit tree, use of the fruit, state of the field, desire of the user, etc.). From among the plurality of pruning modes, the user can choose a pruning mode suitable for the item that needs priority in the pruning work, for example. The cut-point data generation method and cut-point data generation system according to the present example embodiment allows a pruning mode that is suited to the needs to be selected without having to individually adjust the settings concerning the method of determining a point where cutting is to be performed, and thus it is easy for the user to operate and conveniently used by the user.

Furthermore, the plurality of pruning modes provided in the cut-point data generation system are not limited to what is previously set in the cut-point data generation system. It may be a pruning mode that is previously set in the cut-point data generation system but has been changed (edited) by the user, or a pruning mode that is newly created by the user. In other words, the user can change and save the settings concerning the methods of determining a point where cutting is to be performed of the plurality of pruning modes. Specific examples will be described later. As necessary, the user can adjust the settings concerning the method of determining a point where cutting is to be performed according to the needs.

### <example screen images on the operational terminal>

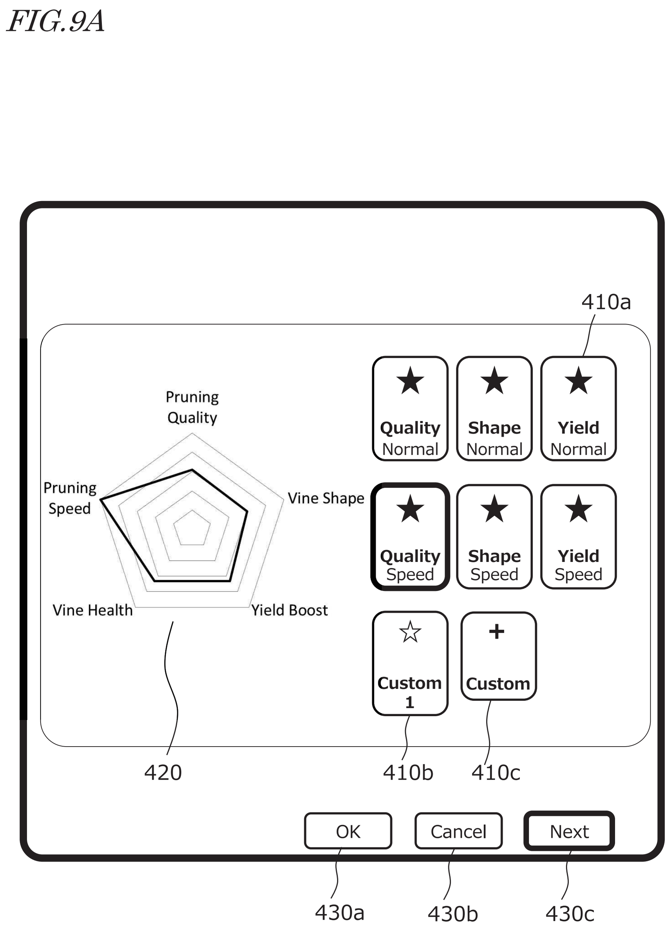

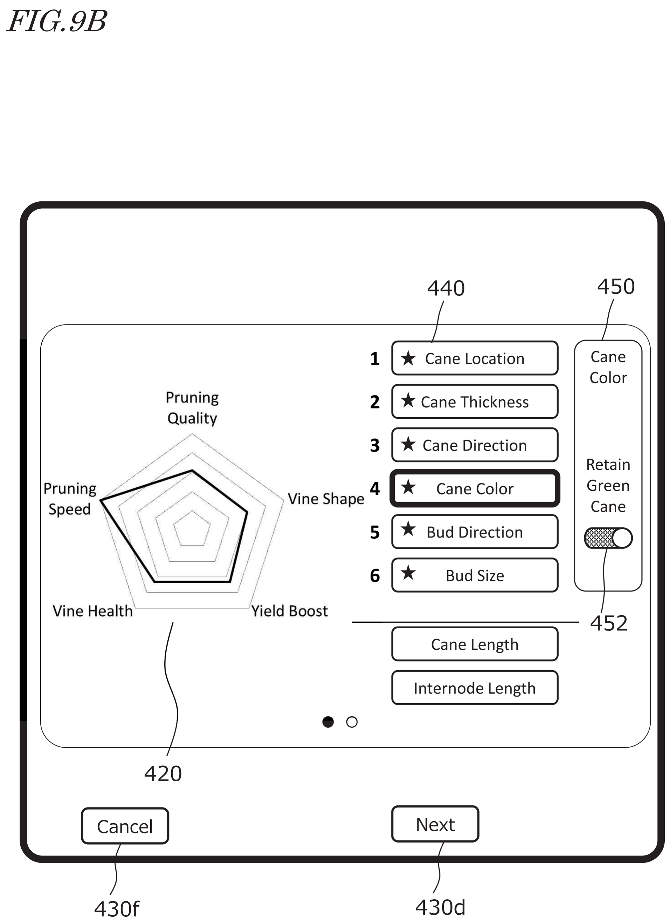

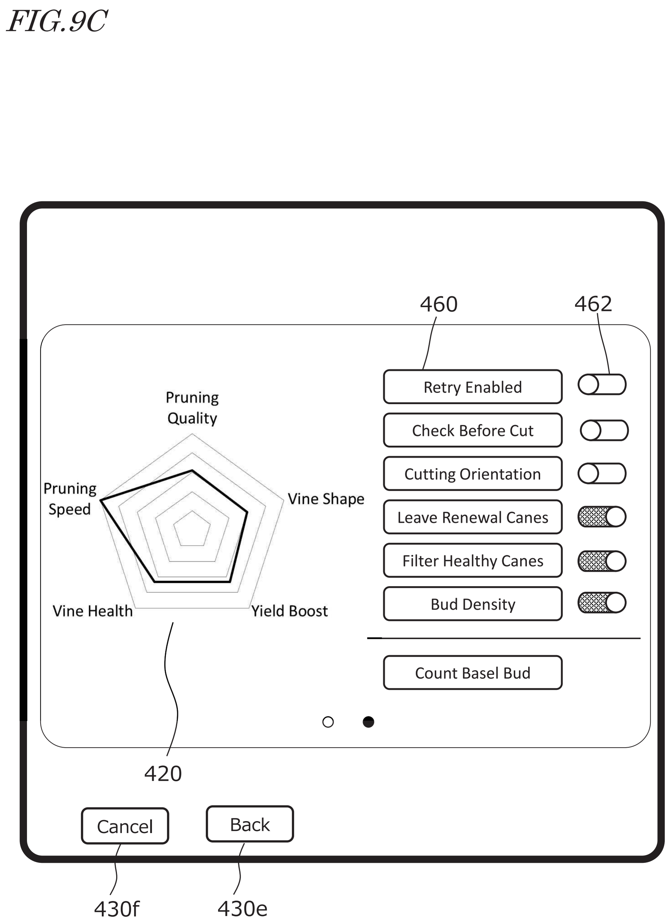

FIG. **9A****,** FIG. **9B****,** and FIG. **9C** show example screen images on the operational terminal **400** in the case where the plurality of pruning modes in FIG. **8** are provided. In the cut-point data generation system according to an example embodiment of the present disclosure, a graphical user interface (GUI) which allows the user to select a pruning mode from among a plurality of pruning modes is displayed in a screen image on the operational terminal **400** being operated by the user. With reference to FIGS. **9A** to **9C****,** examples of such GUIs will be described.

As shown in FIG. **9A****,** in a screen image on the operational terminal **400,** six buttons **410a** corresponding to six kinds of pruning modes are displayed. By choosing the "OK" button **430a** while one of the six buttons **410a** is selected, the user can select any one of the pruning modes. The example of FIG. **9A** illustrates a state where Speed Type of Quality mode is selected, and a graph **420** showing characteristic elements, steps, features, etc., of the pruning mode being selected. The graph **420** is a graph showing results of evaluating each pruning mode with respect to a plurality of evaluation items, e.g., a radar chart, for example. In this example, the plurality of evaluation items include the following five: quality of pruning ("Pruning Quality"), shape of the fruit tree ("Vine Shape"), fruit yield ("Yield Boost"), health status of the fruit tree ("Vine Health"), and reducing the time required for pruning ("Pruning Speed"). In the screen image of FIG. **9A****,** as the user switches from button **410a** to button **410a** to choose, the indications on the graph **420** showing the characteristic elements, steps, features, etc., of the corresponding pruning mode are switched accordingly. By switching from button **410a** to button **410a** to choose, the user is able to switch the graph **420** showing the characteristic elements, steps, features, etc., showing each pruning mode. Thus, the user can check and compare the characteristic elements, steps, features, etc., of the respective pruning modes. Examples of evaluation methods for the respective pruning modes with respect to the plurality of evaluation items will be described later.

In the example of FIG. **9A****,** in addition to the previously-set six kinds of pruning modes, a button **410b** indicating an additional pruning mode that is introduced as the user changes and saves a setting for any of the six kinds of pruning modes is also shown. By choosing the "OK" button **430a** while the button **410b** is selected, the user can select the additional pruning mode. Furthermore, a button **410c** for the user to add a new pruning mode is also indicated.

As in the example of FIG. **9A****,** in a state where any one of the pruning modes (e.g., Speed Type of Quality mode in this example) is select, if a "Next" button **430c** in the screen image of FIG. **9A** is chosen, a transition occurs to the screen image of FIG. **9B** or FIG. 9C. The indication in FIG. **9B** or FIG. **9C** may be shown as a pop-up indication in the screen image of FIG. **9A****.** In the screen images of FIG. **9B** and FIG. **9C****,** settings concerning the method of determining a point where cutting is to be performed in the selected pruning mode are shown. Specifically, in the screen images of FIG. **9B** and FIG. **9C****,** priority level settings as to cane attributes and enabled/disabled settings as to setting parameters that are capable of being enabled or disabled are respectively shown. Based on the screen images of FIG. **9B** and FIG. **9C****,** the user is able to check these settings in each pruning mode. Switching between the screen image of FIG. **9B** and the screen image of FIG. **9C** is achieved by choosing a "Next" button **430d** in the screen image of FIG. **9B** or a "Back" button **430e** in the screen image of FIG. 9C. Choosing a "Cancel" button **430f** in the screen image of FIG. **9B** or FIG. **9C** goes back to the screen image of FIG. **9A****.**

Furthermore, in the screen images of the FIG. **9B** and FIG. **9C****,** the user is able to change the aforementioned settings. In the screen images of the FIG. **9B** and FIG. **9C****,** if the aforementioned settings are changed, the changes are reflected in the graph **420.** While checking the graph **420,** the user is able to adjust the settings concerning the method of determining a point where cutting is to be performed in accordance with the needs. In the screen image of FIG. **9B****,** six cane attributes are shown. Buttons **440,** which can be rearranged in any order, are shown with "1" to "6" indicative of their priority levels. By rearranging the buttons **440,** the user is able to change priority level settings as to attributes, for example. In the example of FIG. **9B****,** the button **440** for the attribute "Cane Color" is shown to be chosen, also, an indication **450** of a setting parameter "Retain Green Cane" concerning the attribute "Cane Color" and a toggle switch **452** for switching the setting parameter "Retain Green Cane" to be enabled/disabled are further shown. By operating the toggle switch **452,** the user is able to switch setting parameter "Retain Green Cane" to be enabled/disabled. A state in which the attribute "Cane Color" is chosen is illustrated, in which case the indication **450** of the setting parameter "Retain Green Cane" concerning the attribute "Cane Color" and the toggle switch **452** for switching the setting parameter "Retain Green Cane" to be enabled/disabled are further displayed. By operating the toggle switch **452,** the user is able to switch the setting parameter "Retain Green Cane" to be enabled/disabled. In the screen image of FIG. **9C****,** indications **460** of the common setting parameters and toggle switches **462** to switch the respective setting parameters to be enabled/disabled are shown. By operating the toggle switches **462,** the user is able to switch each common setting parameter to be enabled/disabled.

### <priority level settings as to attributes>

In the cut-point data generation method and cut-point data generation system according to the present example embodiment, priority level settings as to two or more attributes of the canes of a fruit tree in the determination of a point on a cane of the fruit tree where cutting is to be performed are made to differ depending on the pruning mode. In other words, the plurality of pruning modes provided in the cut-point data generation method and cut-point data generation system according to the present example embodiment include two or more pruning modes that mutually differ with respect to their priority level settings as to two or more attributes of the canes of a fruit tree. For instance, in the example of FIG. **8****,** Quality mode, Shape mode, and Yield mode mutually differ with respect to their priority level settings as to two or more attributes of the canes of a fruit tree.

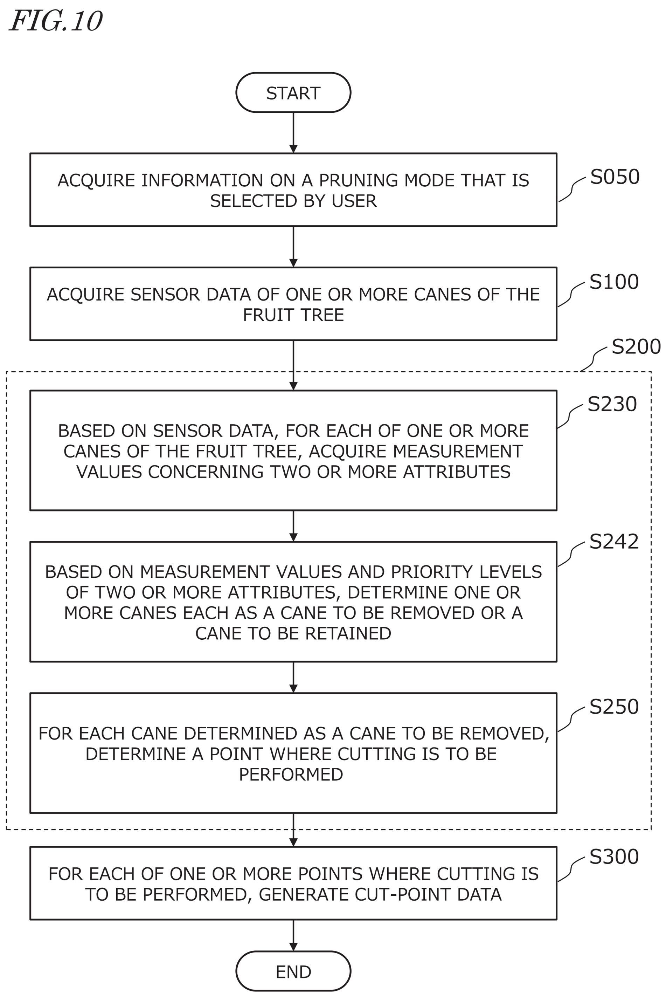

FIG. **10** is a flowchart showing an example procedure of generating cut-point data of canes of a fruit tree, according to the present example embodiment. The flowchart of FIG. 10 differs from the flowchart of FIG. **1A** mainly in that step **S230,** step **S242** and step **S250** are included as step **S200** of determining a point where cutting is to be performed. Step **S200** in the example of FIG. **10** will mainly be described. Note that step **S200** of FIG. **10** is also applicable to the flowcharts of FIG. **1B** and FIG. **1C****.**

At step **S230,** based on the sensor data acquired in step **S100,** for each of one or more canes of the fruit tree, measurement values concerning two or more attributes are acquired. "The one or more canes" is one or more canes that are the subject of processing of step **S200** among the canes of the fruit tree, and is one or more canes among which a fruiting cane is to be selected, for example. The one or more canes that are the subject of processing may be, when the plurality of canes of the fruit tree are grouped into a plurality of groups, for example, one or more canes that have been grouped into the same group. The one or more canes that are the subject of processing may be two or more canes.

Attributes concerning a cane include at least one of: color of the cane ("Cane Color"), direction in which the cane extends ("Cane Direction"), thickness of the cane ("Cane Thickness"), height of the base of the cane ("Cane Location"), size of buds on the cane ("Bud Size"), direction in which buds on the cane are facing ("Bud Direction"), length of the cane ("Cane Length"), and length between nodes of the cane (i.e., distance between adjacent buds) ("Internode Length"). In the present disclosure, an "attribute" of a cane refers to an attribute that shows on the appearance of the cane, and may also be expressed as a morphological feature, an apparent property, or an apparent feature. Details of each attribute will be described later.

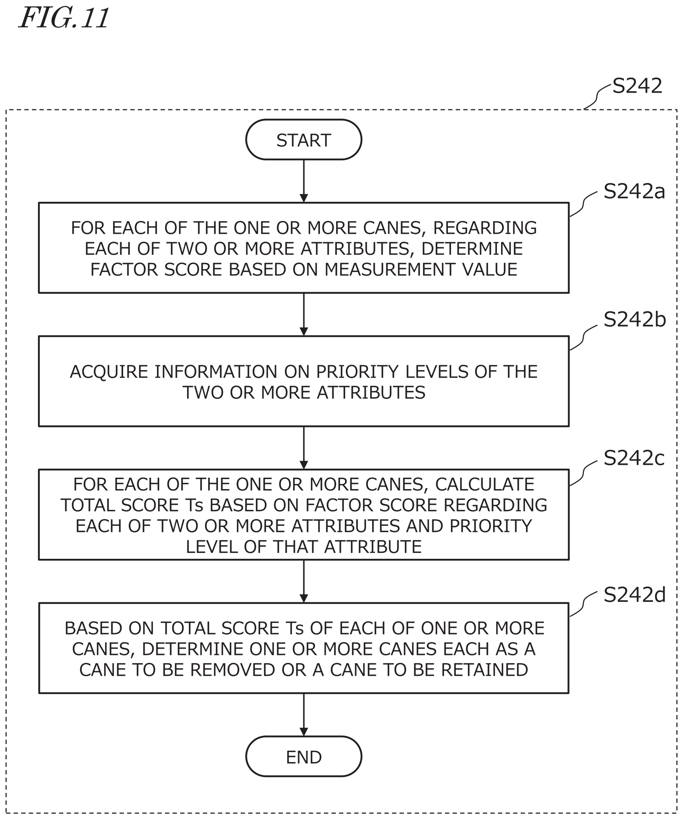

At step **S242,** based on the measurement values acquired in step **S230** and priority levels of the two or more attributes, one or more canes are each determined as a cane to be removed or a cane to be retained. In this example, the priority levels of the attributes differ depending on the selected pruning mode. The priority levels of the attributes in each pruning mode may be set by the user operating the operational terminal **400** (e.g., the screen image of FIG. **9B****),** for example. Specific examples of the process to be performed in step **S242** will be described later with reference to FIG. **11** and the like.

At step **S242,** each of the one or more canes that are the subject of processing is classified as a cane to be removed or a cane to be retained. A "cane to be removed" is a cane a large portion of or an entirety of which is removed so that no buds are included. A "cane to be retained" is a cane that is not a cane to be removed, i.e., a cane that is not removed at all, or a cane only a portion of which is removed so that at least one bud is left included. Canes that are determined as canes to be retained include fruiting canes, for example, in both cases of spur pruning and cane pruning. Canes that are determined as canes to be retained may further include renewal canes in addition to fruiting canes, in both cases of spur pruning and cane pruning. As will be described below, a setting as to whether to leave renewal canes or not can be made based on a setting parameter. As mentioned above, unlike in the case of spur pruning, cut-point data may not be generated for each cane determined as a cane to be retained in the case of cane pruning. Canes to be retained may include any canes for which the determination as to a cane to be removed or a cane to be retained has been withheld. The canes to be removed are all canes other than the canes determined as canes to be retained.

At step **S250,** for each cane determined as a cane to be removed at step **S242,** a point(s) where cutting is to be performed is determined.

Because the priority level settings as to attributes are made to differ depending on the pruning mode, it can be ensured that the method for determining a point(s) where cutting is to be performed, or specifically, the method of determining a cane(s) to be retained from among canes that are the subject of processing, differs depending on the pruning mode. As will be described with reference to FIG. 11 and the like, when determining a cane to be retained, or typically when selecting a fruiting cane(s), the contribution of each attribute is made to differ, such that the cane(s) to be retained can be determined by a method that is adapted to the needs.

### <determination of a point where cutting is to be performed based on measurement values concerning attributes and priority levels of the attributes>

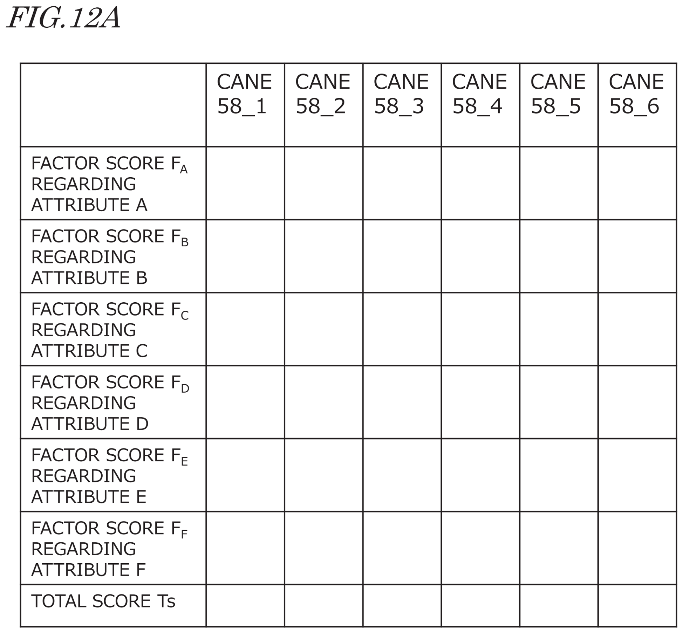

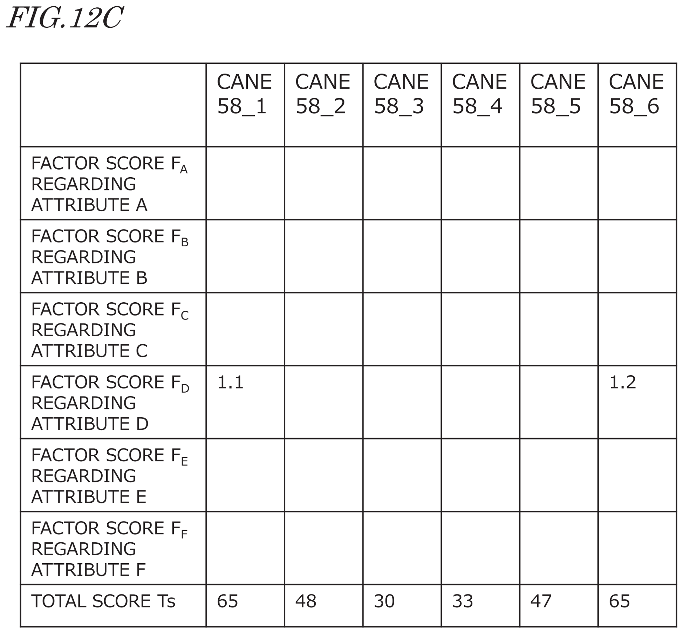

With reference to FIG. **11** as well as FIGS. **12A to 12E****,** processes to be performed in step **S242** (step of determining each of one or more canes as a cane to be removed or a cane to be retained based on measurement values concerning attributes and priority levels of the attribute) will be described. FIG. **11** is a flowchart showing a specific example of a process to be performed in step **S242.**

At step **S242a,** for each of the one or more canes that are the subject of processing, a factor score is determined regarding each of the two or more attributes, based on the measurement values acquired in step **S230.** For example, FIG. **12A** shows an example where acquisition of measurement values concerning six attributes A to F and evaluations thereof are made with respect to six canes **58_1** to **58_6** that are grouped into the same group. Specifically, for each of the six canes **58_1** to **58_6,** factor scores F_{A} to F_{F} regarding six attributes A to F are respectively determined. As for the empty slots in the table of FIG. **12A****,** the factor scores F_{A} to F_{F} are determined at step **S242a,** and total scores Ts are determined at step **S242b** described below. Note that the number of canes that are the subject of processing and the number of attributes are mere examples, and are not limitations. The factor score of each cane regarding each attribute may be determined so that the factor score becomes higher as the cane has a more preferable state as a fruiting cane regarding that attribute. A cane that is preferable as a fruiting cane is, for example, a cane that is expected to bear fruits of good quality. Specific examples of methods of determining the factor score of each cane regarding the respective attributes (e.g., evaluation criteria) will be described later.

At step **S242b,** information on priority levels of the two or more attributes is acquired. The information on the priority levels is acquired based on a user input via the operational terminal, for example. Note that the order of step **S242b** and step **S242a or S230** may be arbitrary. Step **S242b** may be performed concurrently (in parallel) with step **S242a** or step **S230.**

At step **S242c,** for each of the one or more canes that are the subject of processing, a total score Ts is calculated based on the factor score regarding each of the two or more attributes determined in step **S242a** and based on information on the priority levels acquired in step **S242b.**

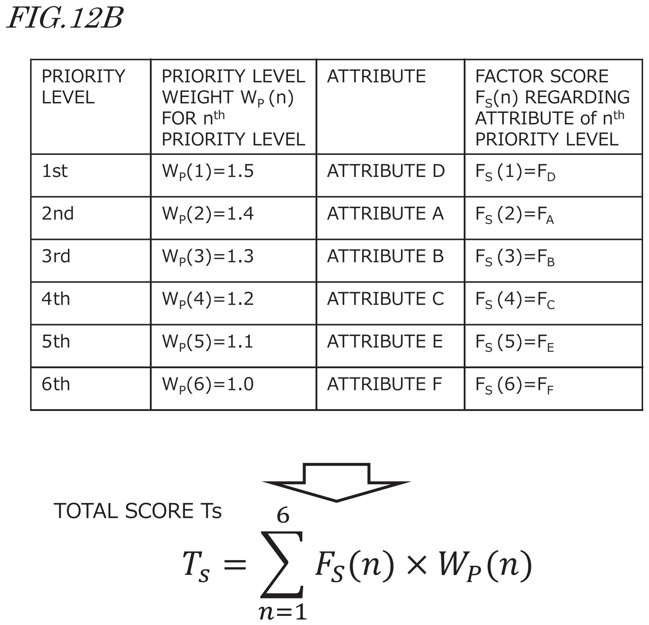

FIG. **12B** is a diagram for describing an example of calculating a total score Ts for each cane, based on a factor score regarding each attribute and a priority level of each attribute. For example, in the example of FIG. **12B****,** priority levels (order of prioriti-zation) are set in descending order of attribute D, attribute A, attribute B, attribute C, attribute E, and attribute F. In the example of FIG. **12B****,** the total score Ts of each cane is calculated by taking a sum of a value obtained by multiplying its factor score regarding each attribute by a priority level weight W_{P} that is in accordance with the priority level of that attribute. Although example values of the priority level weight W_{P} are shown in FIG. **12B****,** without being limited to these examples, the priority level weight W_{P} may be set so as to increase as the priority level increases. The method of calculating the total score Ts is not limited to this example, either. For instance, a total score Ts may be calculated based on a value obtained by correcting a factor score regarding each attribute based on the priority level of that attribute. In other words, a factor score regarding an attribute whose priority level is higher has a greater contribution to the total score Ts.

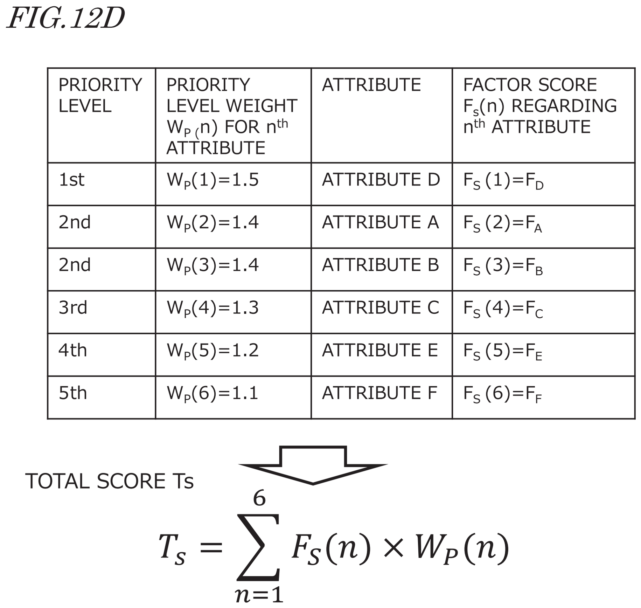

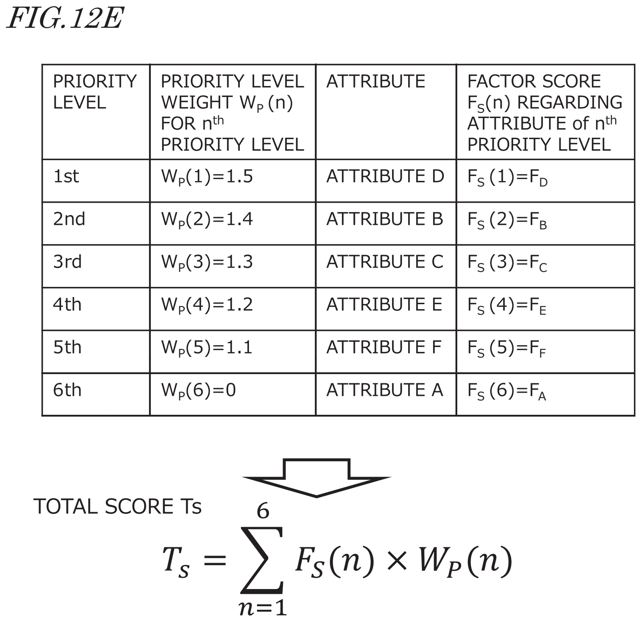

The priority levels of the respective attributes are not limited to the example in FIG. **12B** of giving every attribute a different rank. Other examples will be described with reference to FIG. **12D** and FIG. **12E****.** For instance, as in the example of FIG. **12D****,** among the six attributes, two or more attributes may be given the same rank. In such a case, the two or more attributes that are given the same rank (i.e., attribute A and attribute B in the example of FIG. **12D****)** have the same value of priority level weight W_{P} applied thereto. Although attribute A and attribute B are denoted by different numbers in the example of FIG. **12D****,** the former as the second and the latter as the third, this is for the convenience of expressing the calculation formula for the total score Ts, actually, both of attribute A and attribute B have the second priority level. As in the example of FIG. **12E****,** another possible way of setting priority levels is to, in the calculation of the total score Ts, not include a factor score(s) regarding one or more attributes among the six attributes. In such a case, the attribute that is chosen not to be included in the calculation of the total score Ts (i.e., attribute A in the example of FIG. **12E****)** has a priority level weight W_{P} of zero value. The examples of FIG. **12D** and FIG. **12E** may be combined.

At step **S242d,** based on the total score Ts calculated for each of the one or more canes that are the subject of processing, the one or more canes are each determined as a cane to be removed or a cane to be retained. For example, among the one or more canes that are the subject of processing, the cane(s) having the highest total score Ts is determined as a cane(s) to be retained, and any cane other than the cane(s) determined as the cane(s) to be retained is determined as a cane(s) to be removed.

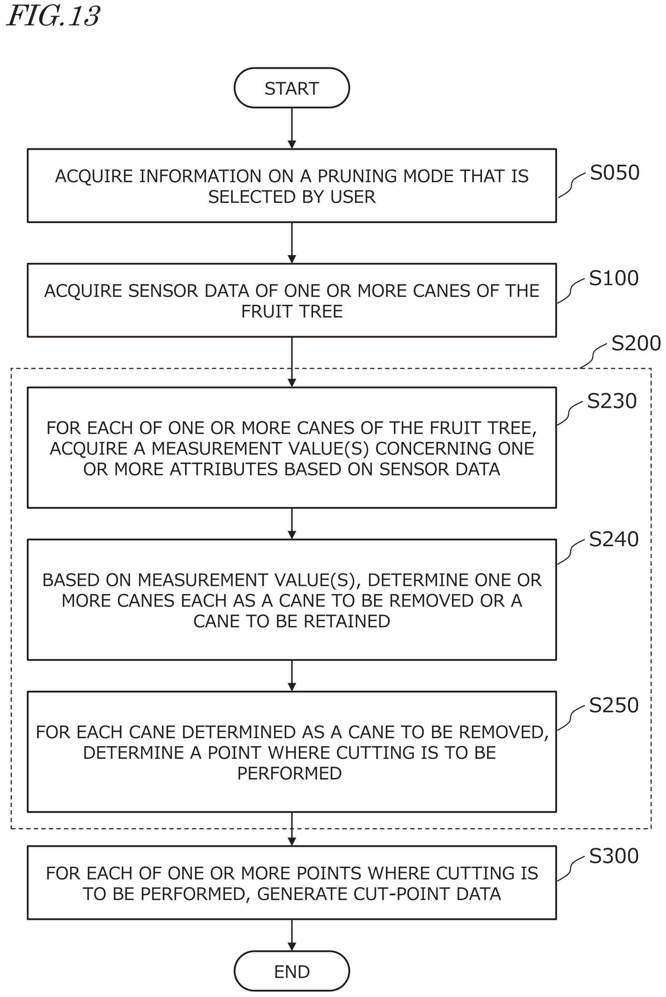

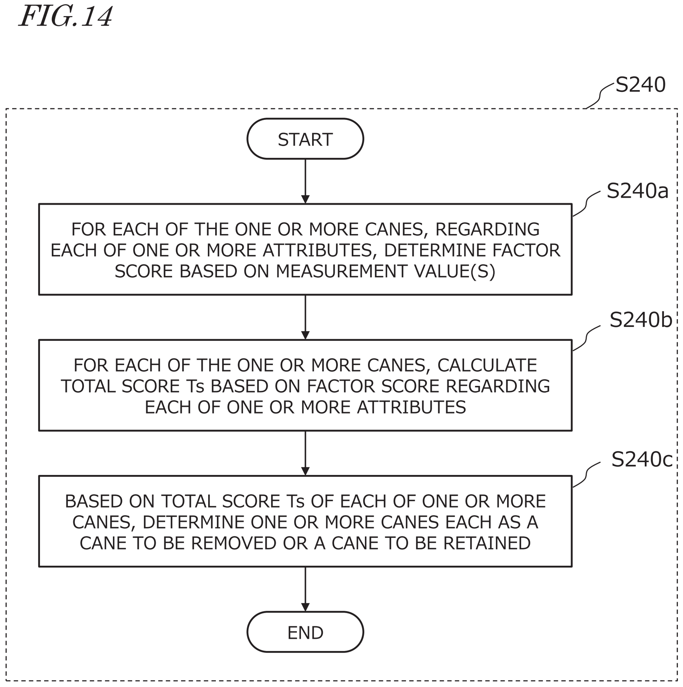

With reference to FIG. **13** and FIG. **14****,** an example case where priority levels of the two or more attributes are not set will be described. In example embodiments of the present disclosure, it is not essential to set priority levels for the two or more attributes. In that case, by a method other than employing different priority level settings as to attributes, the method of determining a point on a cane of a fruit tree where cutting is to be performed is made to differ depending on the pruning mode. FIG. **13** is a flowchart showing an example procedure of generating cut-point data of canes of a fruit tree according to an example embodiment of the present disclosure, and FIG. **14** is a flowchart showing a specific example of a process to be performed in step **S240** in FIG. **13****.** The flowchart of FIG. **13** differs from the flowchart of FIG. **10** in that step **S240** instead includes step **S242.**

At step **S240,** based on the measurement values acquired in step **S230,** one or more canes are each determined as a cane to be removed or a cane to be retained. At step **S240,** processes of step **S240a,** step **S240b,** and step **S240c** as follows are performed.

At step **S240a,** for each of the one or more canes that are the subject of processing, regarding each of one or more attributes, a factor score is determined based on the measurement values acquired in step **S230.** The process of step **S240a** is performed in a similar manner to step **S242a** in FIG. **11****.**

At step **S240b,** for each of the one or more canes that are the subject of processing, a total score Ts is calculated based on the factor score regarding each of the one or more attributes determined in step **S240a.** The total score Ts can be, for example, a total value of the respective factor scores regarding the one or more attributes (if there is one attribute, then that factor score shall be the total score Ts).

At step **S240c,** based on the total score Ts calculated for each of the one or more canes that are the subject of processing, the one or more canes are each determined as a cane to be removed or a cane to be retained. For example, among the one or more canes that are the subject of processing, the cane(s) having the highest total score Ts is determined as a cane(s) to be retained, and any cane other than the cane(s) determined as the cane(s) to be retained is determined as a cane(s) to be removed.

### <enabled/disabled settings as to setting parameters>

In the cut-point data generation method and cut-point data generation system according to the present example embodiment, an enabled/disabled setting(s) as to one or more setting parameters capable of being enabled or disabled in the determination of a point on a cane of a fruit tree where cutting is to be performed is made to differ depending on the pruning mode. In other words, the plurality of pruning modes provided in the cut-point data generation method and cut-point data generation system according to the present example embodiment include two or more pruning modes that mutually differ with respect to their enabled/disabled setting(s) as to at least one of the one or more setting parameters. For instance, in the example of FIG. **8****,** in each of Quality mode, Shape mode, and Yield mode, Normal Type and Speed Type mutually differ with respect to their enabled/disabled settings as to common setting parameters. Moreover, Quality mode and Shape mode mutually differ with respect to their enabled/disabled settings as to specific setting parameters, and Shape mode and Yield mode mutually differ with respect to their enabled/disabled settings as to specific setting parameters.

Examples of setting parameter will be described below. In the example of FIG. **8****,** "Retry Enabled", "Check Before Cut", "Cutting Orientation", "Leave Renewal Canes", "Count Basel Bud", "Filter Healthy Canes", and "Bud Density" are illustrated as common setting parameters, and "Retain Green Cane" and "Bud Count Adjust" are illustrated as specific setting parameters. Although the following description will employ a distinct flowchart for each setting parameter below, in example embodiments of the present disclosure it is possible to use a plurality of setting parameters among them in combination. In such cases, the processes of the corresponding flowcharts are to be performed in combination.

Example 1 of a common setting parameter is "Retry Enabled": a setting as to whether, after a point where cutting is to be performed is determined, a point where cutting is to be performed is to be redetermined or not.

The setting parameter "Retry Enabled" is a setting as to whether, after a point(s) where cutting is to be performed is determined, the point(s) where cutting is to be performed is to be performed is to be redetermined or not, based on an instruction from the user, for example. By enabling the setting parameter "Retry Enabled", the determination of a point where cutting is to be performed can be made with a good precision. On the other hand, enabling the setting parameter "Retry Enabled" may increase the processing load and the processing time for the cut-point generation system. Thus, disabling the setting parameter "Retry Enabled" can reduce the processing load and the processing time.

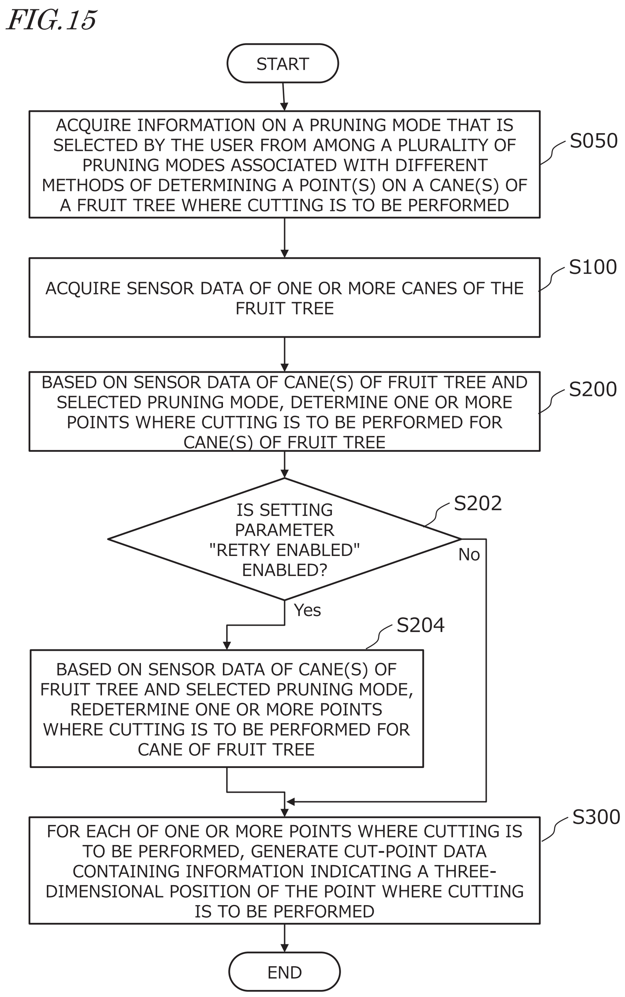

With reference to FIG. **15****,** the setting parameter "Retry Enabled" will be described. FIG. **15** is a flowchart showing an example procedure of generating cut-point data of canes of a fruit tree according to the present example embodiment. The flowchart of FIG. **15** differs from the aforementioned example (e.g., the example of FIG. **1A****),** in that step **S202** and step **S204** are also included.

The processes of step **S050,** step **S100,** and step **S200** are performed in similar manners to the aforementioned example (e.g., the example of FIG. **1A****).**

After step **S200,** if the setting parameter "Retry Enabled" is enabled ("Yes" from step **S202),** then at step **S204,** one or more points where cutting is to be performed are redetermined based on the information on the pruning mode acquired in step **S050** and the sensor data acquired in step **S100,** based on an instruction from the user, for example.

At step **S300,** for each point where cutting is to be performed as determined in step **S204,** cut-point data containing information indicating its three-dimensional position is generated.

Example 2 of a common setting parameter is setting parameter "Check Before Cut": an enabled/disabled setting as to presenting the generated cut-point data to the user, and receiving a user instruction.

The setting parameter "Check Before Cut" is a setting as to whether the generated cut-point data may or may not be presented to the user by being displayed on the operational terminal, for example. By enabling the setting parameter "Check Before Cut", the determination of a point where cutting is to be performed can be made with a good precision. On the other hand, enabling the setting parameter "Check Before Cut" may increase the processing load and the processing time for the cut-point generation system. Thus, disabling the setting parameter "Check Before Cut" can reduce the processing load and the processing time.

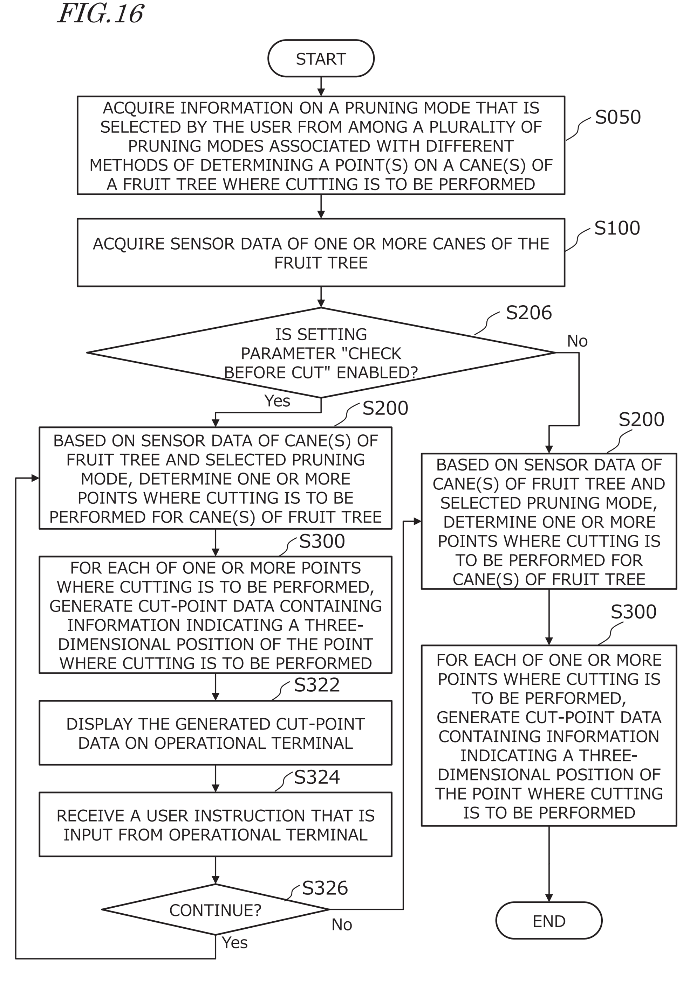

With reference to FIG. **16****,** the setting parameter "Check Before Cut" will be described. FIG. **16** is a flowchart showing an example procedure of generating cut-point data of canes of a fruit tree according to the present example embodiment.

The processes of step **S050** and step **S100** are performed in similar manners to the aforementioned example (e.g., the example of FIG. **1A****).**

If the setting parameter "Check Before Cut" is enabled ("Yes" from step **S206),** then at step **S200,** based on the information on the pruning mode acquired in step **S050** and the sensor data acquired in step **S100,** one or more points where cutting is to be performed are determined for a cane(s) of the fruit tree **200.** At this time, the process of step **S200** is performed for a predetermined number of fruit trees. Information on the predetermined number is acquired based on a user input, for example. Except that the process of step **S200** is performed for a predetermined number of fruit trees, the process of step **S200** is performed in a similar manner to the aforementioned example (e.g., the example of FIG. **1A****).**

Following step **S200,** at step **S300,** for each point where cutting is to be performed as determined in step **S200,** cut-point data containing information indicating its three-dimensional position is generated. The process of step **S300** is performed in a similar manner to the aforementioned example (e.g., the example of FIG. **1A****).**

After step **S300,** at step **S322,** the cut-point data generated in step **S300** is displayed on a display device of the terminal device **400** being operated by the user.

After step **S322,** at step **S324,** a user instruction that is input from the terminal device **400** being operated by the user is received. The user instruction includes an instruction as to whether the generated cut-point data continues to be displayed on the terminal device **400** or not. If the received user instruction includes continuing to display the generated cut-point data on the terminal device **400** ("Yes" from step **S326),** the processes step **S200,** step **S300,** step **S322,** and step **S324** as aforementioned are repeated. If the received user instruction includes not continuing to display the generated cut-point data on the terminal device **400** ("No" from step **S326),** the processes of step **S200** and step **S300** are performed in similar manners to the aforementioned example (e.g., the example of FIG. **1A****).**

If the setting parameter "Check Before Cut" is disabled ("No" from step **S206),** too, the processes of step **S200** and step **S300** are performed in similar manners to the aforementioned example (e.g., the example of FIG. **1A****).**

Example 3 of a common setting parameter is setting parameter "Cutting Orientation": an enabled/disabled setting as to, in the generation of the cut-point data, generating the cut-point data in such a manner that the cane is cut in a plane that is perpendicular to a direction in which the cane extends.

The setting parameter "Cutting Orientation" is a setting as to, in the generation of cut-point data, whether the cutting plane of the cane should be a plane that is perpendicular to a direction in which the cane extends or a plane that is level with respect to the ground surface. Disabling the setting parameter "Cutting Orientation" so that cutting is made in a plane that is level with respect to the ground surface ensures that the cutting plane is determined in a plane that is parallel for every cane, such that the processing load and the processing time for the cut-point generation system can be reduced. On the other hand, when cutting is made in a plane that is level with respect to the ground surface, moisture is likely to gather in the cutting plane, which may not be desirable from the standpoint of cane health, e.g., susceptibility to disease. Enabling the setting parameter "Cutting Orientation" so that cutting is made in a plane that is perpendicular to a direction in which the cane extends may increase the processing load and the processing time, but can restrain moisture from gathering at the cutting plane. The user can set the setting parameter "Cutting Orientation" to be enabled/disabled in accordance with the needs and the situation.

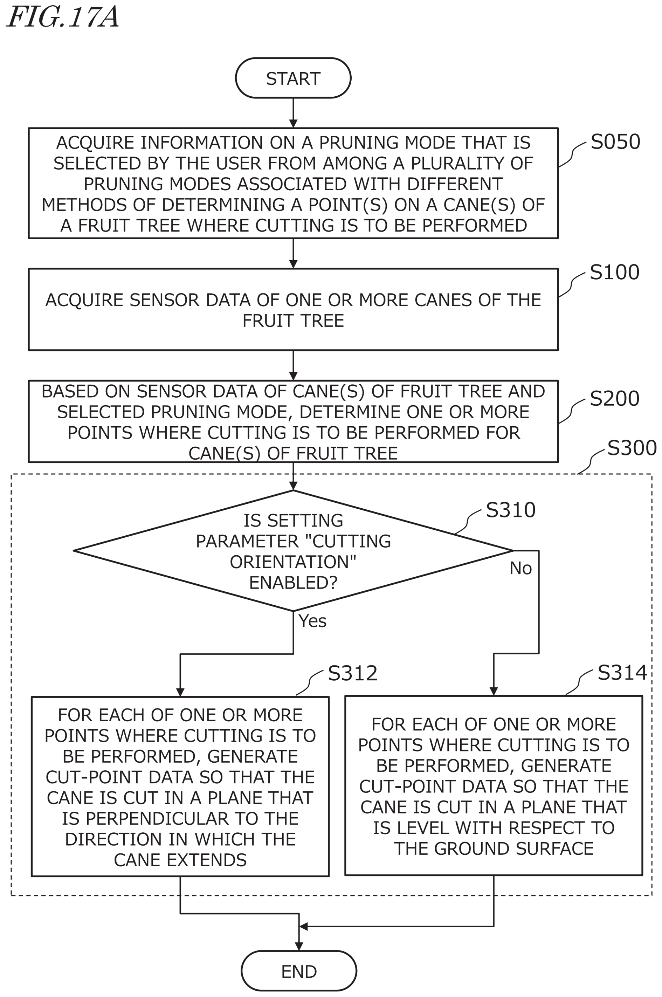

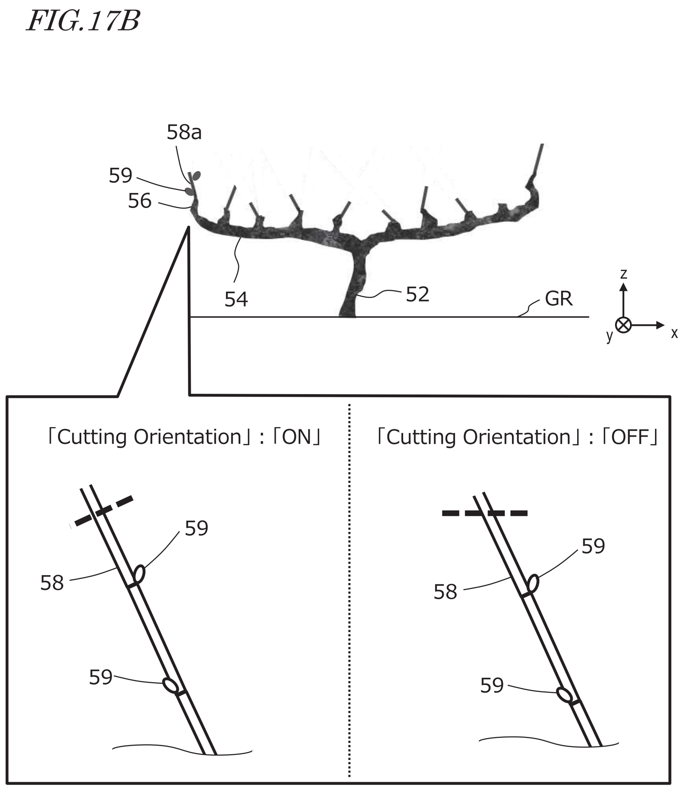

With reference to FIG. **17A** and FIG. **17B****,** the setting parameter "Cutting Orientation" will be described. FIG. **17A** is a flowchart showing an example procedure of generating cut-point data of canes of a fruit tree according to the present example embodiment. The flowchart of FIG. **17A** differs from the aforementioned example (e.g., the example of FIG. **1A****)** with respect to the process of step **S300.** FIG. **17B** is a schematic diagram for describing the setting parameter "Cutting Orientation", where a cutting plane in the cane **58** is shown by a broken line both in the case where the setting parameter "Cutting Orientation" is enabled ("ON") and in the case where it is disabled ("OFF").

The processes of step **S050,** step **S100,** and step **S200** are performed in similar manners to the aforementioned example (e.g., the example of FIG. **1A****).**

At step **S300,** as shown in FIG. **17B****,** the following process is performed. When the setting parameter "Cutting Orientation" is enabled ("Yes" from step **S310),** at step **S312,** for each of the one or more points where cutting is to be performed, cut-point data is generated so that the cane **58** will be cut in a plane that is perpendicular to the direction in which the cane **58** extends. If the setting parameter "Cutting Orientation" is disabled ("No" from step **S310),** at step **S314,** for each of the one or more points where cutting is to be performed, cut-point data is generated so that the cane **58** will be cut in a plane that is level with respect to the ground surface **GR.** In the figure, the ground surface **GR** is level with respect to the xy plane.

Example 4 of a common setting parameter is setting parameter "Leave Renewal Cane": an enabled/disabled setting as to determining at least two canes to be retained from among the one or more canes of the fruit tree that are the subject of processing.

It can be said that the setting parameter "Leave Renewal Cane" is a setting as to whether, in addition to fruiting canes, reserve canes (which may be referred to as renewal canes) are to be further left as canes to be retained. In this example, the one or more canes that are the subject of processing may be two or more canes. When the setting parameter "Leave Renewal Canes" is enabled, renewal canes can be used in the case where fruiting canes did not work well, etc., thus improving fruit yield. On the other hand, enabling the setting parameter "Leave Renewal Canes" may increase the processing load and the processing time for the cut-point generation system. Thus, disabling the setting parameter "Leave Renewal Canes" can reduce the processing load and the processing time.

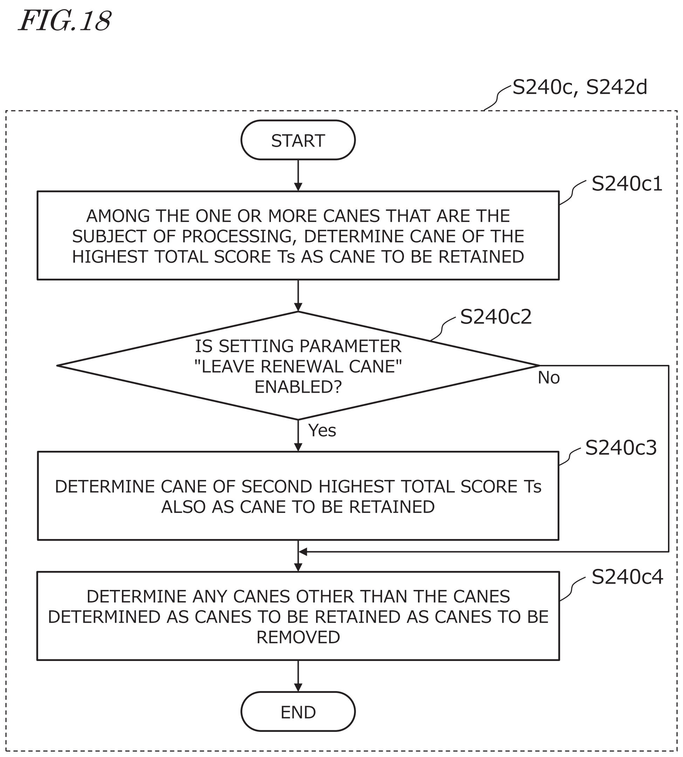

With reference to FIG. **18****,** the setting parameter "Leave Renewal Cane" will be described. FIG. **18** is a flowchart for describing an example procedure of generating cut-point data of canes of a fruit tree according to the present example embodiment, and is a flowchart showing a procedure that may be performed in step **S240c** of FIG. **14** (step of determining each of one or more canes as a cane to be removed or a cane to be retained based on the total score Ts calculated for each of the one or more canes that are the subject of processing). The flowchart of FIG. **18** is also applicable to step **S242d** in FIG. **11****.**

At step **S240c1,** among the one or more canes that are the subject of processing, the cane of the highest total score Ts as calculated at step **S240b** is determined as a cane to be retained. The cane of the highest total score Ts can be selected as the cane to be retained (e.g., a fruiting cane).

When the factor score of each cane regarding each attribute is determined such that it is higher as the cane is in a more preferable state as a fruiting cane regarding that attribute, it is considerable that a cane is more desirable as a fruiting cane if a total score Ts of the sum of these is higher. By selecting a cane of the highest total score Ts as a fruiting cane, a cane that is expected to bear fruits of a highest quality in that season or the next season can be selected as a fruiting cane among the one or more canes that are the subject of processing. Therefore, while maintaining the fruit yield and quality, automation of pruning work can be promoted.

If the setting parameter "Leave Renewal Cane" is enabled ("Yes" from step **S240c2),** at step **S240c3,** the cane of the second highest total score Ts is also determined as a cane to be retained, among the one or more canes that are the subject of processing. In other words, when the setting parameter "Leave Renewal Cane" is enabled, at least two among the one or more canes that are the subject of processing are determined as canes to be retained. A cane of the second highest total score Ts is likely to be the second most desirable cane as a fruiting cane. By selecting a cane of the second highest total score Ts as a renewal cane, automation of pruning work can be promoted while maintaining the fruit yield and quality.

After step **S240c3,** control proceeds to step **S240c4.** If No at step **S240c2,** control proceeds to step **S240c4.**

At step **S240c4,** among the one or more canes that are the subject of processing, all canes other than the cane(s) determined as a cane(s) to be retained are determined as canes to be removed.

Example 5 of a common setting parameter is setting parameter "Count Basel Bud": a setting as to whether, in the determination of a number of buds to be retained on any cane determined as a cane to be retained among the canes of the fruit tree, a bud that is the closest to a base of the cane is to be included or not.

The setting parameter "Count Basel Bud" is a setting as to whether a basal bud that is located the closest to the base of each cane is to be included as a bud or not. If the setting parameter "Count Basel Bud" is enabled, the basal bud of each cane is included as a bud, and if the setting parameter "Count Basel Bud" is disabled, the basal bud of each cane is not included as a bud. In accordance with the needs and the situation, the user is able to switch the enabled/disabled setting as to the setting parameter "Count Basel Bud".

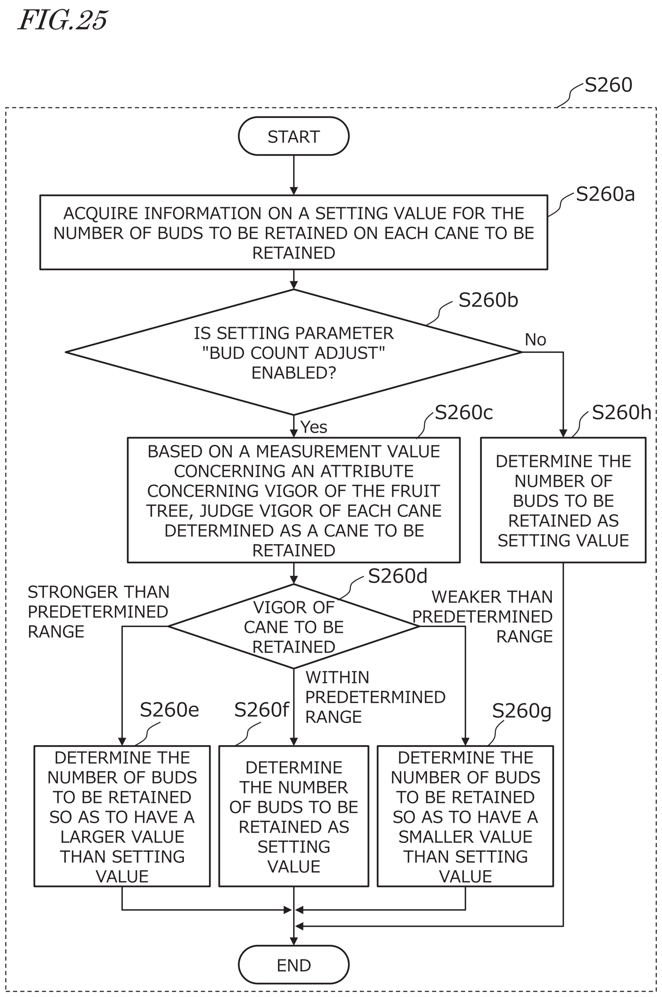

As for the setting parameter "Count Basel Bud", for example, its enabled/disabled setting may be allowed only when the setting parameter "Bud Count Adjust" (see FIG. **25****),** described below, is enabled.

Example 6 of a common setting parameter is setting parameter "Filter Healthy Cane": an enabled/disabled setting as to, before determining a cane(s) to be retained from among one or more canes of the fruit tree that are the subject of processing, excluding any unpromising cane that is not suited for selection as the cane(s) to be retained.

The setting parameter "Filter Healthy Cane" is a setting as to whether, from the one or more canes that are the subject of processing, any canes that are not suited for selection as canes to be retained (which may be referred to as "unpromising canes") are to be detected in advance and excluded from candidates of canes to be retained. By enabling the setting parameter "Filter Healthy Cane", canes having problems in their health status may be excluded from candidates of canes to be retained, for example. As mentioned above, canes to be retained include fruiting canes, for example. Because selecting canes having a poor health status as fruiting canes can be avoided, a decrease in the fruit yield and quality can be reduced or prevented. On the other hand, enabling the setting parameter "Filter Healthy Cane" may increase the processing load and the processing time for the cut-point generation system. Thus, disabling the setting parameter "Filter Healthy Cane" can reduce the processing load and the processing time.

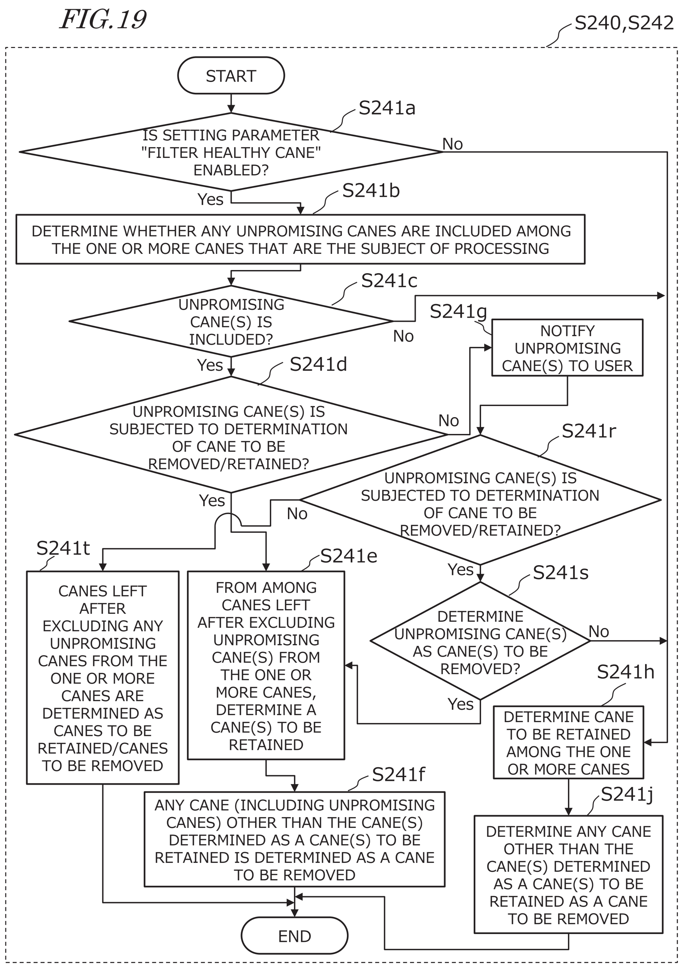

With reference to FIG. **19****,** the setting parameter "Filter Healthy Cane" will be described. FIG. **19** is a flowchart for describing an example procedure of generating cut-point data of canes of a fruit tree according to the present example embodiment, and is a flowchart showing a specific example of a procedure that may be performed in step **S240** of FIG. **13** (step of determining each of one or more canes as a cane to be removed or a cane to be retained based on measurement value). The flowchart of FIG. **19** is also applicable to step **S242** in FIG. **10****.**

As shown in FIG. **19****,** if the setting parameter "Filter Healthy Cane" is enabled ("Yes" from step **S241a),** control proceeds to step **S241b.** If the setting parameter "Filter Healthy Cane" is disabled ("No" from step **S241a),** control proceeds to step **S241h.** Step **S241h** and its subsequent step **S241j** may be performed in a similar manner to step **S240** shown in FIG. **14****,** for example.

At step **S241c,** based on the sensor data acquired in step **S100,** it is judged whether or not any unpromising canes are included among the one or more canes that are the subject of processing (e.g., one or more canes that were grouped into the same group among a plurality of groups).

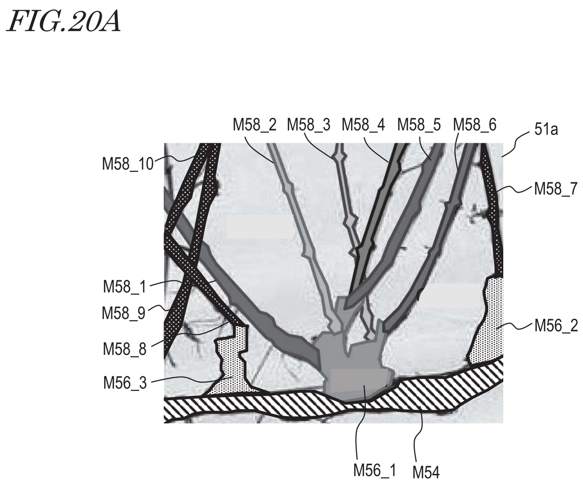

FIG. **20A** is an example of an image to be used by the cut-point data generation method and cut-point data generation system according to the present example embodiment. At step **S241c,** based on a segmented image **51a** as shown in FIG. **20A****,** for example, it is judged whether or not any unpromising canes are included among the six canes **58_1** to **58_6** that are grouped into the same group. An image **51a** shown in FIG. **20A** can be obtained through an instance segmentation being applied to an image of a fruit tree obtained with a camera. "Segmentation (division into regions)" is a general term for algorithms in which objects or instances that are contained in an image are classified in a pixel-by-pixel manner into classes or categories, for use in deep learning. Among other segmentations, instance segmentation is an algorithm that classifies instances contained in an image. By applying instance segmentation to an image containing canes of a fruit tree, individual sites of the fruit tree can be identified or extracted. The segmented image contains masks to extract respective sites (e.g., trunk, cordons, fruiting canes, canes, spurs, etc.) of a fruit tree within the input image data. For example, the segmented image **51a** contains: spur masks **M56_1, M56_2** and **M56_3** to extract spurs **56_1, 56_2** and **56_3,** respectively. Cane masks **M58_1, M58_2, M58_3, M58_4, M58_5** and **M58_6** to extract canes **58_1, 58_2, 58_3, 58_4, 58_5** and **58_6,** respectively, and a cordon mask **M54** to extract the cordon 54. In the figure, the region extracted by each mask is indicated with a hatching (or color) and a reference numeral for the mask. The cane masks **M58_1** to **M58_6** may be collectively referred to as cane masks **M58,** whereas the spur masks **M56_1** to **M56_3** may be collectively referred to as spur masks **M56.**

Based on the segmented image **51a** shown in FIG. **20A****,** for each of the six canes **58_1** to **58_6,** information concerning one or more attributes (e.g., a color of the cane, a shape of the cane, a thickness of the cane, a length of the cane, a cultivar of the fruit tree, an age of the fruit tree, a geographical status, etc.) is acquired, and it is judged to be an unpromising cane or not based on the acquired information. Specifically, for example, a healthy cane is usually brown, whereas a cane of poor health status may have an at least partially black or white surface. For instance, a cane whose surface area has been judged to be black or white in a predetermined range (or a predetermined proportion) may be detected as an unpromising cane (diseased cane). If any unpromising canes are included among the six canes **58_1** to **58_6** (Yes at step **S241c),** control proceeds to step **S241d.** If no unpromising canes are included among the six canes **58_1** to **58_6** (No at step **S241c),** control proceeds to step **S241h.**

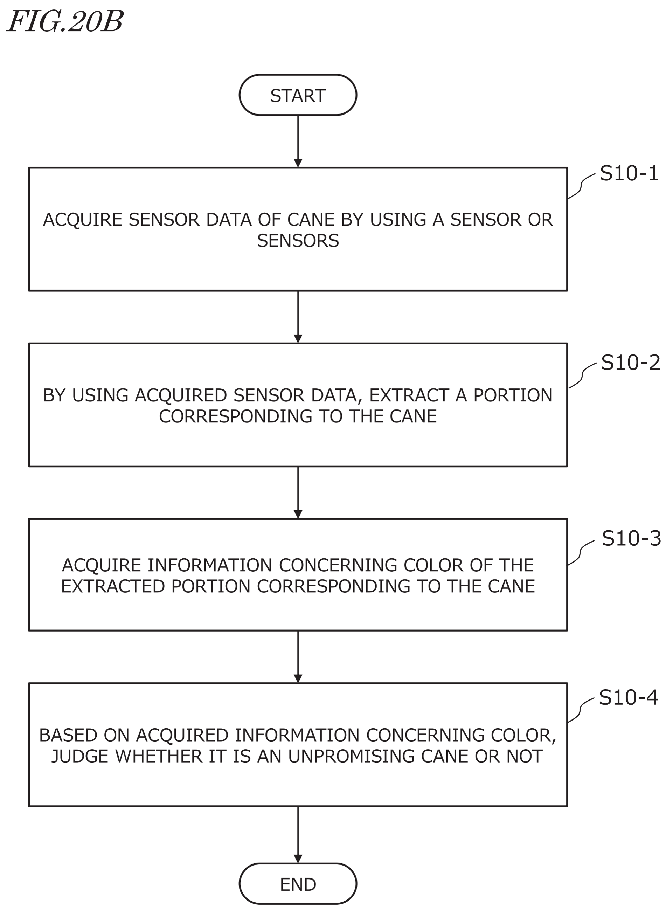

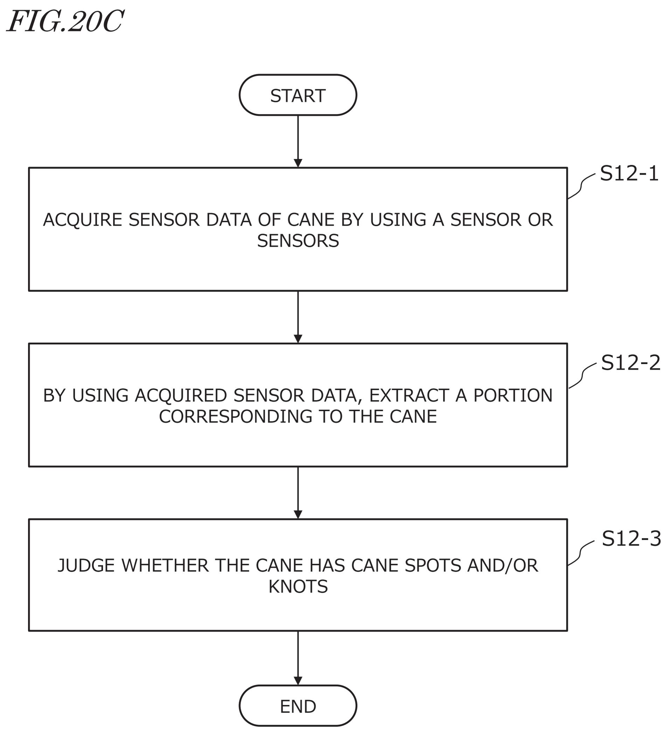

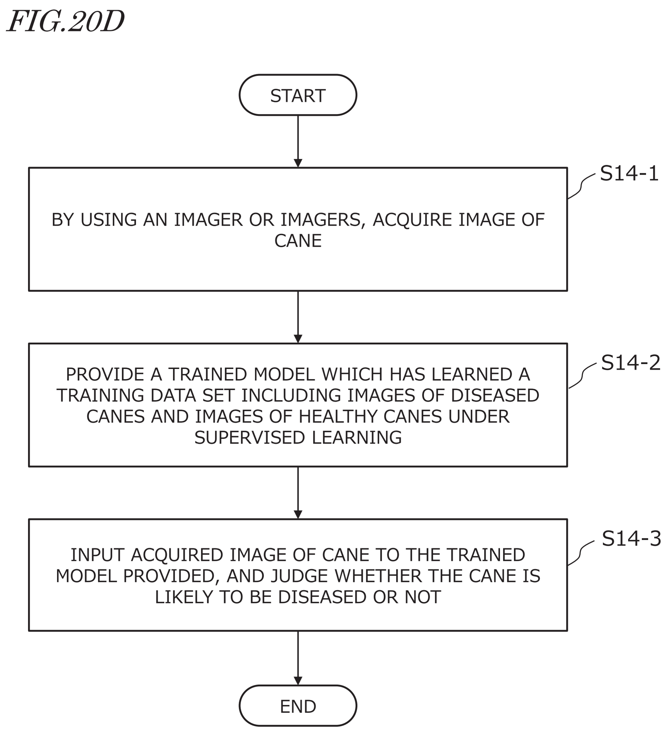

The judgment as to whether any unpromising canes are included among the one or more canes that are the subject of processing (e.g., the one or more canes that were grouped into the same group) may be made by any one of, or a combination of any one or more of, the following methods, for example.
(i) For example, by acquiring a measurement value regarding the color of the cane, it can be judged whether the cane is an unpromising cane or not. The judgment is made through the processes of the following steps shown in FIG. **20B****,** for example. FIG. **20B** is a flowchart describing an example of a process to be performed in step **S241c.**
   step S10-1: By using a sensor or sensors (e.g., a camera(s)), sensor data of the cane (e.g., an image containing the cane) is acquired.
   step S10-2: By using the acquired sensor data, a portion corresponding to the cane is extracted. For example, the acquired image is subjected to a segmentation (e.g., instance segmentation) using AI.
   step S10-3: Information concerning the color of the portion corresponding to the extracted cane (e.g., RGB values, HSL values, and their statistics) is acquired.
   step S10-4: Based on the acquired information concerning color, a judgement is made as to whether it is an unpromising cane or not. For example, a relationship between information concerning color and evaluation criteria as to whether a cane is unpromising or not (e.g., a table) may be stored in a storage device, and the judgement is made by referring to the stored information (table).
(ii) Based on whether the cane has cane spots and/or knots on its surface, it can be judged whether the cane is an unpromising cane or not because a cane having cane spots and/or knots on its surface is likely to be diseased. This may be combined with the method of judgment of (i) above. The judgment is made through the processes of the following steps shown in FIG. **20C****,** for example. FIG. **20C** is a flowchart describing an example of a process to be performed in step **S241c.**
   step S12-1: By using a sensor or sensors (e.g., a camera(s)), sensor data of the cane (e.g., an image containing the cane) is acquired.
   step S12-2 and step S12-3: By using the acquired sensor data, a portion corresponding to the cane is extracted (step S12-2), and it is judged whether the cane has cane spots and/or knots or not (step S12-3). For example, at step S12-2, the acquired image is subjected to a segmentation (e.g., instance segmentation) to extract a portion corresponding to the cane. Detection of cane spots and knots at step S12-3 can be made through an object detection using artificial intelligence (AI), for example.
(iii) By using a machine learning model, it can be judged whether the cane is an unpromising cane or not. The judgment is made through the processes of the following steps shown in FIG. **20D****,** for example. FIG. **20D** is a flowchart describing an example of a process to be performed in step **S241c.**
   step S14-1: By using an imager or imagers (e.g., a camera(s)), an image of the cane is acquired.
   step S14-2: Images of diseased canes and images of healthy canes are provided as a training data set, and a trained model which has learned this under supervised learning is provided. Note that the order of step S14-1 and step S14-2 may be arbitrary, and they may be performed concurrently (in parallel).
   step S14-3: The cane image acquired in step S14-1 is input to the trained model provided in step S14-2, and a judgement (output) is made as to whether the cane is likely to be diseased or not.
(iv) Based on inputs of other information, it is possible to judge whether the cane is an unpromising cane or not. For example, if information as to suspicions of disease that can be obtained during any non-pruning operation (e.g., quality measurement work, etc.) to be performed for that fruit tree, information of past diseases (history) of that fruit tree, disease prediction information, or the like has been obtained (or available), such information may be input and stored to the system. If such information has been input to the system, it can be judged whether the cane is an unpromising cane or not based on such information.

At step **S241d,** based on a user input, for example, it is judged whether or not unpromising canes are to be subjected to the process of determination as to a cane to be removed or a cane to be retained. For example, the user may previously input a setting, when an unpromising cane is detected, to automatically continue or not to continue on the process of determining any cane other than unpromising canes as a cane to be removed or a cane to be retained. If Yes at step **S241d** (e.g., a setting to automatically continue on the process of determining each unpromising cane as a cane to be removed or a cane to be retained has been made), control proceeds to step **S241e.**

At step **S241e,** from among the canes left after excluding any unpromising canes from the one or more canes that were grouped into the same group, a cane(s) to be retained is selected and determined. Thereafter, at step **S241f,** from among the canes left after excluding any unpromising canes from the one or more canes that are the subject of processing, any cane other than the cane(s) determined as a cane(s) to be retained is determined as a cane to be removed. At this time, any unpromising canes are also determined as canes to be removed.

If No at step **S241d** (e.g., a setting to not automatically continue on the process of determining each unpromising cane as a cane to be removed or a cane to be retained has been made), control proceeds to step **S241g.** At step **S241g,** the user is notified that an unpromising cane(s) has been detected. Information identifying the unpromising cane(s) may be further notified to the user.

After step **S241g,** as will be described with respect to the processes of step **S241r** and step **S241s** below, it is determined which of the following processes is applicable to the unpromising canes: they are determined as canes to be removed, they are to be subjected to the process of determination as to a cane to be removed or a cane to be retained, or they are not to be subjected to the process of determination as to a cane to be removed or a cane to be retained (e.g., information that they are neither canes to be removed nor canes to be retained is assigned to them, and cut-point data for unpromising canes is not generated). For example, upon receiving a notification that an unpromising cane has been detected, the user can check data such as an image of the detected unpromising cane, and select any one of the above processes and input it.

After step **S241g,** at step **S241r,** based on a user input, for example, it is judged whether or not unpromising canes are to be subjected to the process of determination as to a cane to be removed or a cane to be retained. If Yes at step **S241r,** at step **S241s,** based on a user input, for example, it is judged whether or not unpromising canes are determined as canes to be removed. If Yes at step **S241s,** control proceeds to the aforementioned step **S241e** and its subsequent step **S241f.** For example, in a case where any detected unpromising cane is determined as a cane to be removed right away, e.g., when the detected unpromising cane is likely to be a diseased cane, step **S241r** may be Yes and step **S241s** may be Yes. In this case, canes to be retained are selected from among the canes left after excluding any canes detected as unpromising canes at step **S241e** and step **S241f.** If No at step **S241s,** control proceeds to the aforementioned step **S241h** and its subsequent step **S241j,** where each of the one or more canes that are grouped into the same group is determined as a cane to be removed or a cane to be retained, including those canes which are detected as unpromising canes. For example, in a case where there is little need to immediately determine a detected unpromising cane as a cane to be removed, e.g., when the detected unpromising cane is unlikely to be a diseased cane, step **S241r** may be Yes and step **S241s** may be No. In this case, at step **S241h** and step **S241j,** a process of selecting a cane to be retained from among those canes which are detected as unpromising canes is performed.

If No at step **S241r,** i.e., unpromising canes are not to be subjected to the process of determination as to a cane to be removed or a cane to be retained, control proceeds to step **S241t.** At step **S241t,** each of the canes left after excluding any unpromising canes from the one or more canes that were grouped into the same group is determined as a cane to be removed or a cane to be retained. The aforementioned example is applicable in the determination as to a cane to be removed or a cane to be retained. For example, if it is difficult to judge whether a detected unpromising cane is a diseased cane or not, step **S241r** should be No, and control proceeds to step **S241t.** As for the detected unpromising cane, information that it is neither a cane to be removed nor a cane to be retained is assigned, and the determination as to a cane to be removed or a cane to be retained is withheld.

Example 7 of a common setting parameter is setting parameter "Bud Density": an enabled/disabled setting as to, after determining one or more canes of the fruit tree that are the subject of processing to be a cane(s) to be removed or a cane(s) to be retained, determining whether to maintain or change the determination as to a cane(s) to be removed or a cane(s) to be retained based on a distribution of buds on the cane(s) determined as a cane(s) to be retained.

The setting parameter "Bud Density" is a setting as to, after determining one or more canes that were grouped into the same group each as a cane to be removed or a cane to be retained (e.g., for each group), whether or not to redetermine (adjust) them to be canes to be removed or canes to be retained, in consideration of a distribution of remaining buds across a broader range (e.g., the entire fruit tree). By enabling the setting parameter "Bud Density", the distribution of buds to be retained on the cane(s) to be retained can be made more uniform, e.g., across the entire fruit tree. As a result, an improved fruit yield is expected. On the other hand, enabling the setting parameter "Bud Density" may increase the processing load and the processing time for the cut-point generation system. Thus, disabling the setting parameter "Bud Density" can reduce the processing load and the processing time.

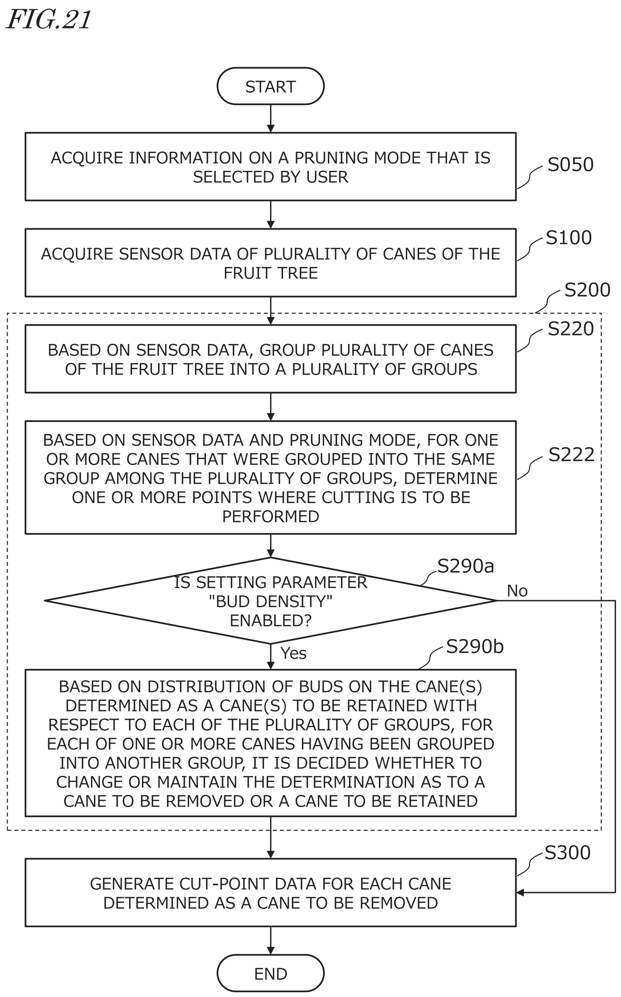

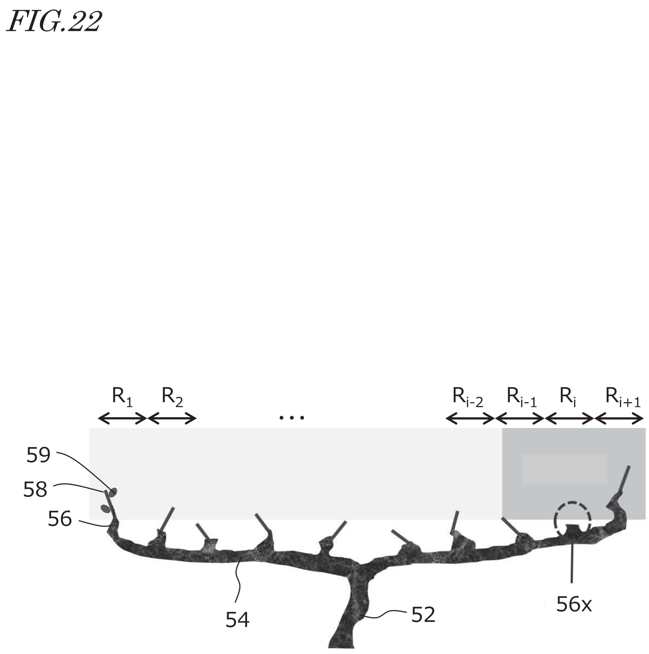

With reference to FIG. **21** and FIG. **22****,** the setting parameter "Bud Density" will be described. FIG. **21** is a flowchart showing an example procedure of generating cut-point data of canes of a fruit tree, according to the present example embodiment. The flowchart of FIG. **21** differs from the aforementioned example (e.g., the example of FIG. **1A****)** in that step **S220,** step **S222,** step **S290a** and step **S290b** are included as step **S200** of determining a point where cutting is to be performed. FIG. **22** is a schematic diagram for describing the processes in the flowchart of FIG. **21****.** FIG. **22** is diagram showing a state of an imaginary fruit tree when pruning has been performed based on the determination in step **S220.** For simplicity, buds **59** are only illustrated for less than all canes **58.** Note that FIG. **21** and FIG. **22** are mainly applicable to the case of spur pruning.

The processes of step **S050** and step **S100** are performed in similar manners to the aforementioned example (e.g., the example of FIG. **1A****).**

At step **S220,** based on the information on the pruning mode acquired in step **S050** and the sensor data acquired in step **S100,** the plurality of canes **58** of the fruit tree are grouped into a plurality of groups. Grouping of the plurality of canes **58** may be performed based on the respective base positions of the plurality of canes **58.** For example, the plurality of groups respectively correspond to the plurality of spurs **56** of the cordon **54** supporting the plurality of canes **58** of the fruit tree. Among the plurality of canes **58** of the fruit tree, any canes **58** growing from the same spur **56** may be grouped into the same group. Among the plurality of canes **58** of the fruit tree, any canes **58** growing from within a region spanning a predetermined range may be grouped into the same group. Alternatively, the plurality of groups may correspond to a plurality of regions **R1, R2,** etc., of the cordon **54** supporting the plurality of canes **58** of the fruit tree, these regions being arranged along the direction in which the cordon **54** extends (the right-left direction in the figure). Among the plurality of canes **58** of the fruit tree, any canes growing from the same region among the plurality of regions may be grouped into the same group. Details of the grouping process will be described below.

Next, at step **S222,** based on the sensor data acquired in step **S100,** each of the one or more canes that were grouped into the same group at step **S220** is determined as a cane to be removed or a cane to be retained. The process of step **S222** is performed for each group. In other words, at step **S222,** for each group, each of the one or more canes grouped into that group is determined as a cane to be removed or a cane to be retained.

If the setting parameter "Bud Density" is enabled ("Yes" from step **S290a),** then at step **S290b,** based on the distribution of buds on the cane(s) determined as a cane(s) to be retained at step **S222** with respect to each of the plurality of groups, for each of one or more canes having been grouped into the other groups, it is decided whether to change or maintain the determination as to a cane to be removed or a cane to be retained. The distribution of buds is the distribution of buds on the entire fruit tree, and is, for example, a density of placement of buds along a direction that is in line with the direction in which the cordon **54** supporting the cane **58** extends (the right-left direction in FIG. **22****).** Information on the distribution of buds on the cane(s) determined as a cane(s) to be retained at step **S222** may be acquired based on information on the cane(s) determined as a cane(s) to be retained at step **S222** and based on information on the number of buds to be retained on each cane to be retained. Information on the number of buds to be retained on each cane to be retained may be acquired based on a user input, for example.

The canes to be determined as canes to be retained at step **S290b** may include canes which were determined as canes to be removed in step **S222.** In other words, in addition to the cane(s) determined as a cane(s) to be retained in step **S222,** more canes to be retained may be determined at step **S290b.** By changing (redetermin-ing) a cane(s) that was determined as a cane(s) to be removed in step **S222** into a cane(s) to be retained at step **S290b,** the density of placement of buds on the canes to be retained can be made more uniform across the entire fruit tree.

An example of the process of step **S290b** will be described. Specifically, in addition to the cane(s) determined as a cane(s) to be retained in step **S222,** more canes to be retained may be determined in the following manner. For example, if a region exists in which the density of placement of the buds is locally low, among the plurality of canes of the fruit tree, more canes to be retained are determined from among one or more canes having been grouped into a group that is located near that region. For example, if the plurality of groups includes a first group into which no canes have been grouped, more canes to be retained are determined from among one or more canes that have been grouped into a group that is adjacent to the first group. Regarding one or more canes having been grouped into the group that is adjacent to the first group, more canes to be retained may be determined from among canes extending toward the first group. The first group may be, for example, a group corresponding to spurs from which no canes have grown. If the plurality of groups includes a second group which includes no canes to be retained, more canes to be retained are determined from among one or more canes that have been grouped into a group that is adjacent to the second group. Regarding one or more canes having been grouped into the group that is adjacent to the second group, more canes to be retained may be determined from among canes extending toward the second group. The second group may be, for example, a group in which all of the one or more canes being grouped into that group have been determined as canes to be removed.

Information on the cultivation method of the fruit tree may be acquired, and at step **S290b,** each of the plurality of canes of the fruit tree may be again subjected to a determination as to a cane to be removed or a cane to be retained based on the information on the cultivation method of the fruit tree and based on the distribution of buds on the cane(s) determined as a cane(s) to be retained in step **S222.**

Based on the determination in step **S290b,** the process of step **S300** is performed.

If the setting parameter "Bud Density" is disabled ("No" from step **S290a),** after step **S222,** control proceeds to step **S300.**

Example 1 of a specific setting parameter is a setting parameter "Retain Green Cane":
- attribute: a setting parameter concerning color of the cane
- enabled/disabled setting as to determining any cane whose color is green as a cane to be retained

The setting parameter "Retain Green Cane" is a setting as to whether any cane is immediately determined as a cane to be retained if the color of the cane is green. If the setting parameter "Retain Green Cane" is enabled, canes that are unsuitable for cutting (e.g., premature) can be prevented from being cut. By enabling the setting parameter "Retain Green Cane", the determination of a point where cutting is to be performed can be made with a good precision, and a good health status of the fruit tree can be maintained. On the other hand, enabling the setting parameter "Retain Green Cane" may increase the processing load and the processing time for the cut-point generation system. Thus, disabling the setting parameter "Retain Green Cane" can reduce the processing load and the processing time.

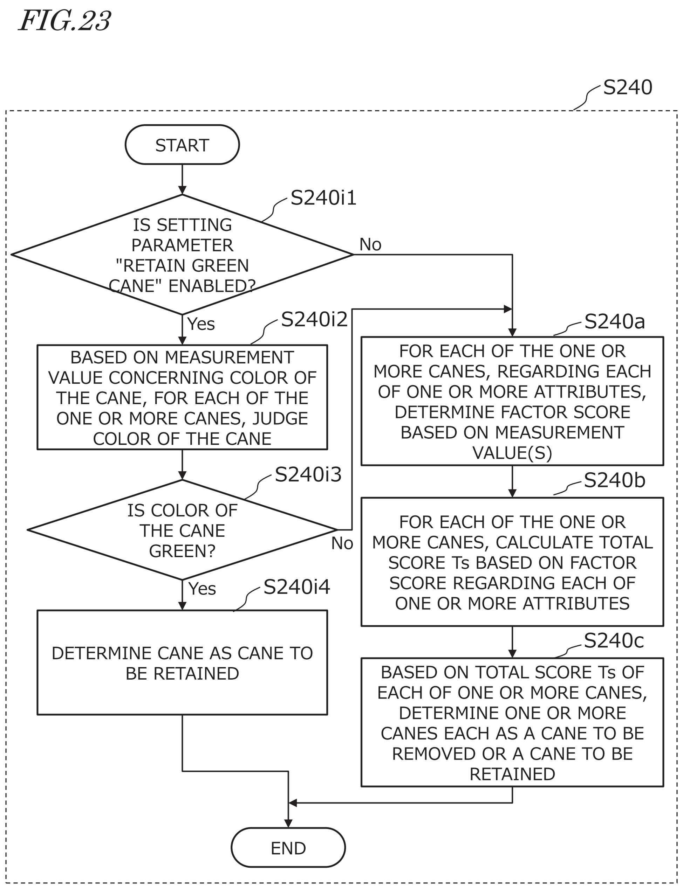

With reference to FIG. **23****,** the setting parameter "Retain Green Cane" will be described. FIG. **23** is a flowchart for describing an example procedure of generating cut-point data of canes of a fruit tree according to the present example embodiment, and is a flowchart showing a specific example of a process to be performed in step **S240** of FIG. 13 (step of determining each of one or more canes as a cane to be removed or a cane to be retained based on a measurement value(s) concerning one or more attributes). In this example, the one or more attributes include the color of the cane.

If the setting parameter "Retain Green Cane" is enabled ("Yes" from step **S240i1),** then at step **S240i2,** based on a measurement value concerning the color of the cane, for each of the one or more canes, the color of the cane is judged. If the color of the cane is judged to be green ("Yes" from step **S240i3),** then at step **S240i4,** that cane is determined as a cane to be retained. The judgement as to the color of the cane can be made in a similar manner to the case of enabling the setting parameter "Filter Healthy Cane", for example.

If the setting parameter "Retain Green Cane" is disabled ("No" from step **S240i1),** control proceeds to step **S240a,** step **S240b,** and step **S240c.** The processes of step **S240a,** step **S240b,** and step **S240c** may be performed in similar manner to the example of FIG. **14****.** When the color of the cane is not judged to be green, too ("No" from step **S240i3),** control also proceeds to step **S240a,** step **S240b,** and step **S240c.**

Example 2 of a specific setting parameter is a setting parameter "Bud Count Adjust":
- a setting parameter concerning an attribute concerning vigor of the fruit tree
- enabled/disabled setting as to adjusting the number of buds to be retained on each cane determined as a cane to be retained, based on a measurement value concerning an attribute concerning vigor of the fruit tree

The setting parameter "Bud Count Adjust" is a setting as to whether or not to adjust the number of buds to be retained on each cane determined as a cane to be retained. By enabling the setting parameter "Bud Count Adjust", the number of buds to be retained can be adjusted in accordance with the vigor of each cane determined as a cane to be retained (e.g., a fruiting cane). If the vigor of the fruiting cane is weaker than the predetermined range, the fruit yield and quality may deteriorate. Thus, the point(s) where cutting is to be performed is determined so that the number of buds to be retained is smaller than a setting value (e.g., a user-input value), such that a decrease in the fruit yield and quality can be reduced or prevented. If the vigor of the fruiting cane is stronger than the predetermined range, the point(s) where cutting is to be performed is determined so that the number of buds to be retained is greater than the setting value, such that a greater yield can be expected without allowing the quality to deteriorate. Thus, a decrease in the fruit yield and quality can be reduced or prevented by determining the point(s) where cutting is to be performed while adjusting the number of buds to be retained in accordance with the vigor of the fruit tree. On the other hand, enabling the setting parameter "Bud Count Adjust" may increase the processing load and the processing time for the cut-point generation system. Thus, disabling the setting parameter "Bud Count Adjust" can reduce the processing load and the processing time.

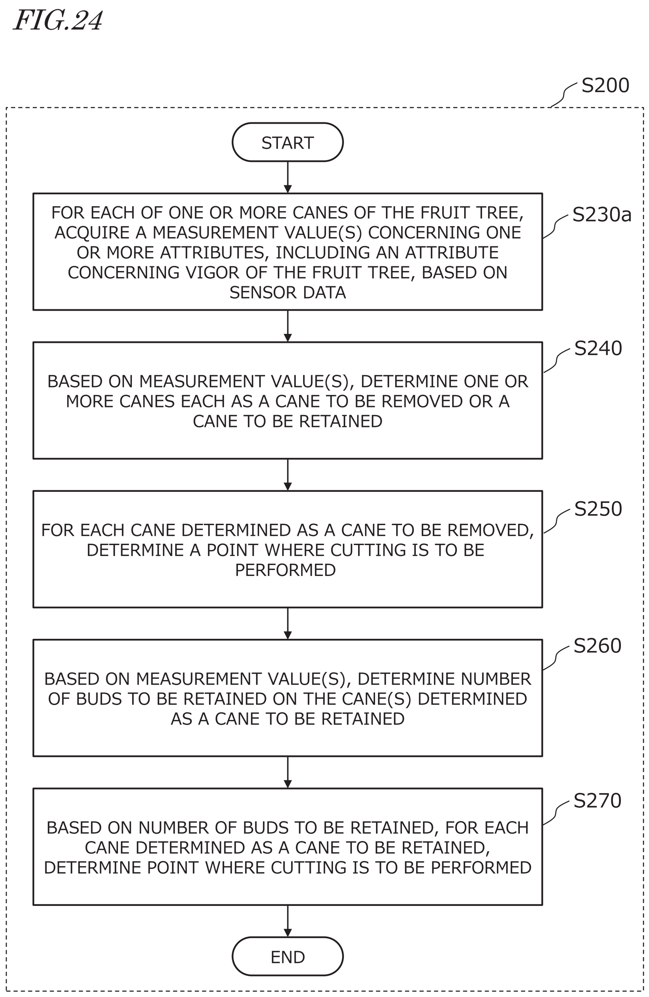

With reference to FIG. **24** and FIG. **25****,** the setting parameter "Bud Count Adjust" will be described. FIG. **24** is a flowchart for describing an example procedure of generating cut-point data of canes of a fruit tree according to the present example embodiment, and is a flowchart showing a specific example of a process to be performed in step **S200** (step of determining one or more points where cutting is to be performed for a cane(s) of the fruit tree based on information on the pruning mode and the sensor data). FIG. **25** is a flowchart for describing an example procedure of generating cut-point data of canes of a fruit tree according to the present example embodiment, and is a flowchart showing a specific example of a process to be performed in step **S260** of FIG. **24** (step of determining the number of buds to be retained on each cane determined as a cane to be retained based on a measurement value(s) concerning one or more attributes).

In the example of FIG. **24****,** at step **S200,** the processes of step **S230a,** step **S240,** step **S250,** step **S260,** and step **S270** are performed.

At step **S230a,** based on the sensor data acquired in step **S100,** for each of one or more canes of the fruit tree, a measurement value(s) concerning one or more attributes is acquired, including an attribute concerning vigor of the fruit tree. Attributes concerning vigor of the fruit tree include at least one of a thickness of the cane, a size of buds on the cane, or a length between nodes of the cane, for example. The process of step **S230a** may be performed in similar manner to the process of step **S230** in FIG. **10****,** for example.

At step **S240,** based on the measurement value(s) acquired in step **S230,** one or more canes are each determined as a cane to be removed or a cane to be retained. The process of step **S240** may be performed in similar manner to the process of step **S240** in FIG. **13****,** for example.

At step **S250,** for each cane determined as a cane to be removed in step **S240,** a point(s) where cutting is to be performed is determined. The point(s) where cutting is to be performed for any cane to be removed is determined so that each cane **58** determined as a cane to be removed does not possess any buds after being cut (i.e., so that zero buds will be possessed after being cut). For example, in the case of spur pruning and cordon training, a point(s) where cutting is to be performed is determined so that cutting will be made at a position close to a spur **56** at the base of that cane **58.** For example, a point(s) where cutting is to be performed is determined so that cutting is made between the spur **56** at the base of that cane **58** and the bud **59** that is the closest to the spur **56** among the buds **59** on that cane **58.** In the case of head training (e.g., in the case of cane pruning), a point(s) where cutting is to be performed is determined so that cutting is made at a position close to a head **53** at the base of that cane **58.** For example, a point(s) where cutting is to be performed is determined so that cutting is made between the head **53** at the base of that cane **58** and the bud **59** that is the closest to the head **53** among the buds **59** on that cane **58.**

At step **S260,** based on the measurement value(s) acquired in step **S230a,** the number of buds to be retained on each cane determined as a cane to be retained in step **S240** is determined. Details of the process to be performed in step **S260** will be described with reference to FIG. **25****.** In the determination of the number of buds to be retained at step **S260,** if the aforementioned setting parameter "Count Basel Bud" is enabled, the number of buds to be retained is determined by counting a bud that is the closest to the base of each cane determined as a cane to be retained into the number of buds to be retained.

At step **S270,** based on the number of buds to be retained as determined in step **S260,** a point(s) where cutting is to be performed is determined for each cane determined as a cane to be retained in step **S240.**

With reference to FIG. **25****,** the process to be performed in step **S260** will be described.

At step **S260a,** information on a setting value for the number of buds to be retained on each cane to be retained is acquired. Information on a setting value for the number of buds to be retained is acquired based on a user input, for example. For example, in accordance with the cultivar of the fruit tree, the pruning method, the training method, the cultivation plan based on a yield plan, the field design (e.g., vineyard design, if the fruit tree is a grape vine), or the like, a user is able to input a setting value for the number of buds to be retained on each cane to be retained. The field design and the vineyard design may be determined based on a factor including at least one of the shape of the trellis system, the pruning method, or the training method, for example.

If the setting parameter "Bud Count Adjust" is enabled ("Yes" from step **S260b),** then at step **S260c,** based on the measurement value(s) acquired in step **S230c,** strength of the vigor of each cane determined as a cane to be retained in step **S240** is judged. For example, when the thickness of the cane is thinner than a predetermined value or when the size of buds is smaller than a predetermined value, it is judged that the vigor is weaker than a predetermined range, and when the thickness of the cane is thicker than a predetermined value or when the size of buds is larger than a predetermined value, it is judged that the vigor is stronger than the predetermined range. For example, when the thickness of the cane is within a predetermined range or when the size of buds is within a predetermined range, it is judged that the vigor is within the predetermined range.

At step **S260c,** the strength of the vigor of each cane determined as a cane to be retained may be judged based on, for example, a factor score that is determined based on thickness of the cane and/or the size of buds as determined for each of the one or more canes in step **S240.** For example, if the factor score regarding the thickness of the cane is smaller than a predetermined value, or if the factor score regarding the size of buds is smaller than a predetermined value, it is judged that the vigor is weaker than the predetermined range. If the factor score regarding the thickness of the cane is larger than a predetermined value, or if the factor score regarding the size of buds is larger than a predetermined value, it is judged that the vigor is stronger than the predetermined range. Example methods of determining factor scores regarding the respective attributes will be described below.

At step **S260d,** if it is judged that the vigor is stronger than the predetermined range, control proceeds to step **S260e.** At step **S260e,** the number of buds to be retained is increased. Specifically, at step **S260e,** the number of buds to be retained is determined so as to have a larger value than the setting value acquired in step **S260a.**

At step **S260d,** if it is judged that the vigor is weaker than the predetermined range, control proceeds to step **S260g.** At step **S260g,** the number of buds to be retained is decreased. Specifically, at step **S260g,** the number of buds to be retained is determined so as to have a smaller value than the setting value acquired in step **S260a.**

At step **S260d,** if it is judged that the vigor is within the predetermined range, control proceeds to step **S260f.** At step **S260f,** the number of buds to be retained is set to the setting value acquired in step **S260a.**

If the setting parameter "Bud Count Adjust" is disabled ("No" from step **S260b),** control proceeds to step **S260h.** At step **S260h,** the number of buds to be retained is set to the setting value acquired in step **S260a.**

### <relationship between pruning modes>

In the cut-point data generation method and cut-point data generation system according to the present example embodiment, a plurality of pruning modes associated with different methods of determining a point on a cane of a fruit tree where cutting is to be performed include a first pruning mode, and a second pruning mode in which priority level settings as to two or more attributes of the canes of the fruit tree in the determination of a point where cutting is to be performed are identical to those in the first pruning mode and in which an enabled/disabled setting(s) as to one or more setting parameters capable of being enabled or disabled in the determination of the point or points where cutting is to be performed is different from that/those in the first pruning mode. For example, in the example of FIG. 8, in each of Quality mode, Shape mode, and Yield mode, Normal Type and Speed Type are identical with respect to their priority level settings as to two or more attributes of the canes of a fruit tree and mutually differ with respect to their enabled/disabled settings as to setting parameters. In other words, in each of Quality mode, Shape mode, and Yield mode, Normal Type and Speed Type are examples of the first pruning mode and the second pruning mode as aforementioned.

In the cut-point data generation method and cut-point data generation system according to the present example embodiment, the plurality of pruning modes may further include a third pruning mode in which priority level settings as to attributes are different from those in the first pruning mode and which is identical to the first pruning mode with respect to their enabled/disabled settings as to setting parameters. In the example of FIG. 8, for example, Normal Type of Quality mode and Normal Type of Shape mode mutually differ with respect to their priority level settings as to attributes, and are identical with respect to their enabled/disabled settings as to setting parameters. In other words, if Normal Type of Quality mode is the first pruning mode, Normal Type of Shape mode is an example of the third pruning mode. If Speed Type of Quality mode is the first pruning mode, Speed Type of Shape mode and Speed Type of Yield mode are possible third pruning modes.

### <characteristic aspects of each pruning mode>

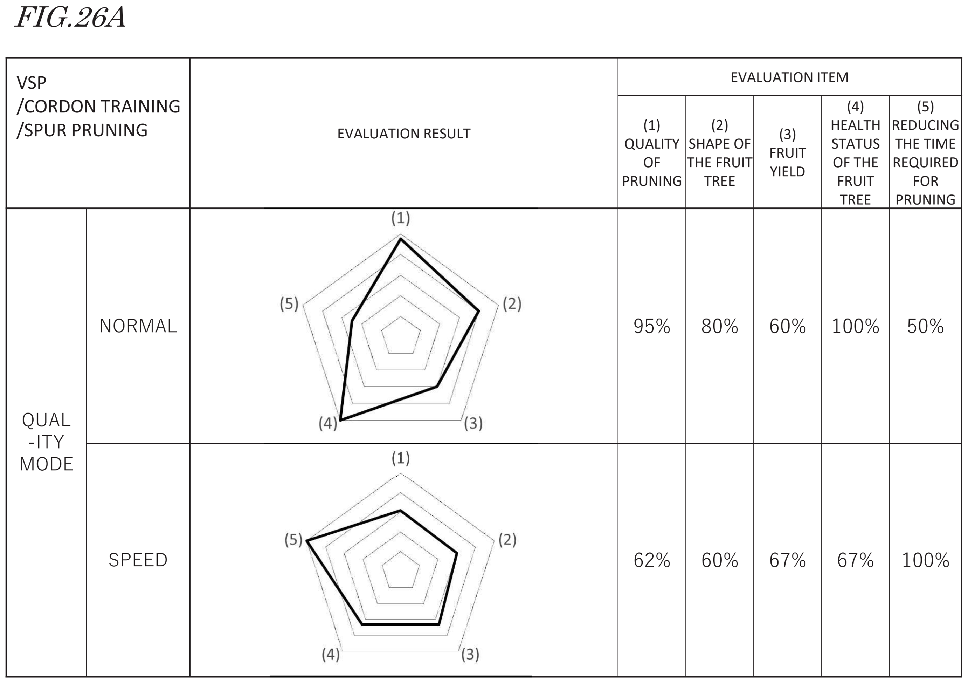

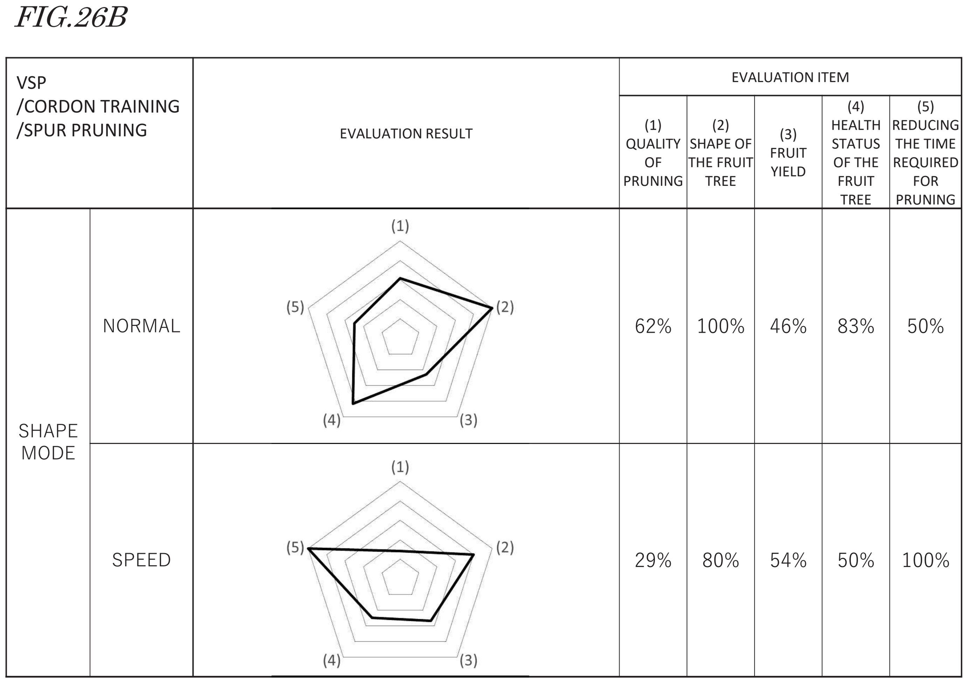

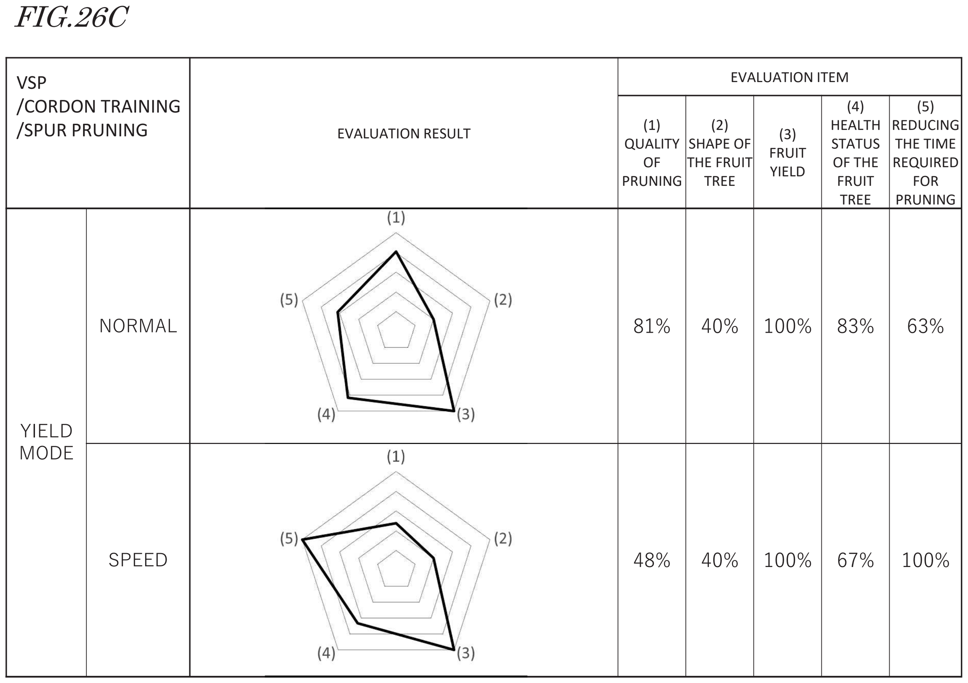

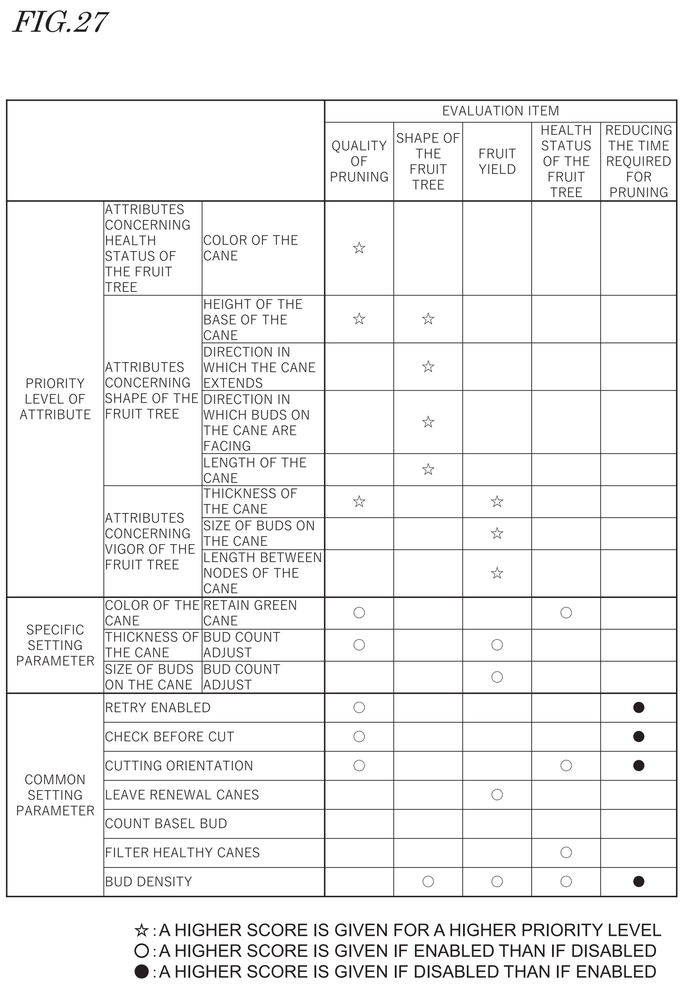

With reference to FIGS. **26A** to **26C****,** the respective pruning modes shown in FIG. **8** will be compared, thus describing characteristic elements, steps, features, etc., of each pruning mode. FIGS. **26A** to **26C** show results of evaluating the respective pruning modes shown in FIG. **8** with respect to a plurality of evaluation items. The plurality of evaluation items include the following five: (1) quality of pruning, (2) shape of the fruit tree, (3) fruit yield, (4) health status of the fruit tree, and (5) reducing the time required for pruning. In FIG. **26A****,** FIG. **26B****,** and FIG. **26C****,** evaluation results regarding the respective evaluation items are shown by numerical values, and also by graphs. The higher the numerical value of an evaluation result for each evaluation item is, the higher the evaluation result for that evaluation item is. Note that the numerical values of the evaluation results in FIGS. **26A** to **26C** are mere examples. FIG. **27** is a diagram for describing example evaluation methods for the respective evaluation items in each pruning mode.

Normal Type of Yield mode will be discussed in comparison with Normal Type of Quality mode. Note that the following similarly applies to a comparison between Speed Type of Yield mode and Speed Type of Quality mode. As mentioned above, their relationship is that of the third pruning mode and the first pruning mode as aforementioned.

Yield mode is a pruning mode associated with a high evaluation result regarding "fruit yield" among the five evaluation items, relative to Quality mode. In the example of FIG. **8****,** relative to Quality mode, a high priority level is set in Yield mode for the attributes concerning vigor of the fruit tree. The attributes concerning vigor of the fruit tree include at least one of a thickness of the cane, sizes of buds on the cane, or a length between nodes of the cane. It may be said that attributes concerning vigor of the fruit tree are attributes concerning fruit yield. In Yield mode, contributions of the attributes concerning vigor of the fruit tree are increased in the determination of canes to be retained relative to Quality mode, thus improving fruit yield.

FIG. **27** shows example evaluation methods (e.g., methods of determining scores indicating the evaluation results) for the respective evaluation items in each pruning mode. In the table of FIG. **27****,** "☆" indicates that a higher score (i.e., higher evaluation) is given for attributes of a higher priority level, whereas "○" indicates that a higher score (i.e., higher evaluation) is given when the setting parameter is enabled than when it is disabled, whereas "●" indicates that a higher score (i.e., higher evaluation) is given when the setting parameter is disabled than when it is enabled.

As shown in FIG. **27****,** evaluation results (e.g., scores indicating evaluation results) for the pruning modes regarding fruit yield may be determined based on a combination of one or more of the following:
· determined so as to be higher as a higher priority level is set for the attribute concerning vigor of the fruit tree.
· determined so as to be higher when the setting parameter "Bud Count Adjust" is enabled than when the setting parameter "Bud Count Adjust" is disabled.
· determined so as to be higher when the setting parameter "Leave Renewal Canes" is enabled than when the setting parameter "Leave Renewal Canes" is disabled.

The relationship between fruit yield and the priority levels of attributes concerning vigor of the fruit tree is as described above. By enabling the setting parameter "Bud Count Adjust", as described above, the number of buds to be retained can be adjusted in accordance with the vigor of each cane determined as a cane to be retained (e.g., a fruiting cane), thus improving fruit yield. By enabling the setting parameter "Leave Renewal Canes", as described above, renewal canes can be used in the case where fruiting canes did not work well, etc., thus improving fruit yield.

Normal Type of Shape mode will be discussed in comparison with Normal Type of Quality mode. As mentioned above, their relationship is that of the third pruning mode and the first pruning mode as aforementioned. Note that the following similarly applies to a comparison between Speed Type of Shape mode and Speed Type of Quality mode.

Shape mode is a pruning mode associated with a high evaluation result regarding "shape of the fruit tree" among the five evaluation items, relative to Quality mode. In the example of FIG. **8****,** relative to Quality mode, a high priority level is set in Shape mode for the attributes concerning the shape of the fruit tree. The attributes concerning shape of the fruit tree include at least one of: direction in which the cane extends, height of the base of the cane, direction in which buds on the cane are facing, and length of the cane. In Shape mode, contributions of the attributes concerning shape of the fruit tree are increased in the determination of canes to be retained relative to Quality mode, thus tailoring the shape of the fruit tree after pruning work.

As shown in FIG. **27****,** evaluation results for the pruning modes regarding the tree shape of the fruit tree may be determined based on a combination of one or more of the following:
· determined so as to be higher when a higher priority level is set for the attribute concerning the shape of the fruit tree.
· determined so as to be higher when the setting parameter "Bud Density" is enabled than when the setting parameter "Bud Density" is disabled.

By enabling the setting parameter "Bud Density", as described above, the distribution of buds to be retained on the cane(s) to be retained can be made more uniform across the entire fruit tree, thus better tailoring the shape of the fruit tree after pruning work.

Normal Type of Quality mode will be discussed in comparison with Normal Type of Yield mode and Normal Type of Shape mode. Note that the following similarly applies to a comparison between Speed Type of Quality mode against Speed Type of Yield mode and Speed Type of Shape mode. As mentioned above, their relationship is that of the first pruning mode and the third pruning mode as aforementioned.

Quality mode is a pruning mode associated with high evaluation results regarding "health status of the fruit tree" and "quality of pruning" among the five evaluation items, relative to Yield mode and Shape mode. In the example of FIG. **8****,** relative to Yield mode and Shape mode, a high priority level is set in Quality mode for the attributes concerning the health status of the fruit tree. The attributes concerning the shape of the fruit tree include color of the cane. In Quality mode, contributions of the attributes concerning the health status of the fruit tree are increased in the determination of canes to be retained relative to Yield mode and Shape mode, thus maintaining a good health status of the fruit tree after pruning and reducing influences of pruning work on the health status of the fruit tree.

As shown in FIG. **27****,** evaluation results for the pruning modes regarding the health status of the fruit tree may be determined based on a combination of one or more of the following:
· determined so as to be higher when a higher priority level is set for the attribute concerning the health status of the fruit tree.
· determined so as to be higher when the setting parameter "Retain Green Cane" is enabled than when the setting parameter "Retain Green Cane" is disabled.
· determined so as to be higher when the setting parameter "Cutting Orientation" is enabled than when the setting parameter "Cutting Orientation" is disabled.
· determined so as to be higher when the setting parameter "Filter Healthy Canes" is enabled than when the setting parameter "Filter Healthy Canes" is disabled.
· determined so as to be higher when the setting parameter "Bud Density" is enabled than when the setting parameter "Bud Density" is disabled.

By enabling the setting parameter "Retain Green Cane", as described above, canes that are unsuitable for cutting (e.g., premature) can be prevented from being cut, and a good health status of the fruit tree can be maintained. As described above, enabling the setting parameter "Cutting Orientation" can restrain moisture from gathering at the cutting plane, such that the canes are restrained from becoming diseased. As described above, enabling the setting parameter "Filter Healthy Canes" makes it possible to exclude canes having problems in their health status from candidates of canes to be retained (e.g., fruiting canes).

By enabling the setting parameter "Bud Density", as described above, the distribution of buds to be retained on the cane(s) to be retained can be made more uniform across the entire fruit tree, such that sun exposure, ventilation, etc., can be made uniform, and a good health status of the fruit tree can be expected.

For each of Quality mode, Shape mode, and Yield mode, a comparison between Normal Type and Speed Type will be discussed. As mentioned above, their relationship is that of the first pruning mode and the second pruning mode as aforementioned. In each of Quality mode, Shape mode, and Yield mode, the Speed Type is a pruning mode associated with a high evaluation result regarding "reducing the time required for pruning" among the five evaluation items, relative to the Normal Type.

As shown in FIG. **27****,** evaluation results for the pruning modes regarding reducing the time required for pruning may be determined based on a combination of one or more of the following:
· determined so as to be higher when the setting parameter "Retry Enabled" is disabled than when the setting parameter "Retry Enabled" is enabled.
· determined so as to be higher when the setting parameter "Check Before Cut" is disabled than when the setting parameter "Check Before Cut" is enabled.
· determined so as to be higher when the setting parameter "Cutting Orientation" is disabled than when the setting parameter "Cutting Orientation" is enabled.
· determined so as to be higher when the setting parameter "Bud Density" is disabled than when the setting parameter "Bud Density" is enabled.

When these setting parameters are disabled, a greater effect of reducing the time required for the processing performed by the cut-point generation system is obtained than when they are enabled.

### <pruning modes allocated to cultivation methods of the fruit tree>

In the cut-point data generation method and cut-point data generation system according to the present example embodiment, a cultivation method of a fruit tree is allocated to each of a plurality of pruning modes associated with different methods of determining a point on a cane of the fruit tree where cutting is to be performed, such that the method of determining a point on a cane of the fruit tree where cutting is to be performed is made to differ depending on the cultivation method of the fruit tree. In other words, the plurality of pruning modes provided in the cut-point data generation method and cut-point data generation system according to the present example embodiment include two or more pruning modes that are allocated to different cultivation methods and have respectively different methods of determining a point on a cane of a fruit tree where cutting is to be performed.

The cultivation method of the fruit tree includes at least one of the shape of the trellis system of the fruit tree, the pruning method for the fruit tree, or the training method of the fruit tree. The cultivation method of the fruit tree is said to differ when at least one of the shape of the trellis system of the fruit tree, the pruning method for the fruit tree, and the training method of the fruit tree differs. The cultivation method of the fruit tree is inclusive of the field design. For example, in a case where the fruit tree is a grape vine, the cultivation method of the grape vine includes the vineyard design. The field design and the vineyard design may be based on a factor including at least one of: the shape of the trellis system, the pruning method, and the training method.

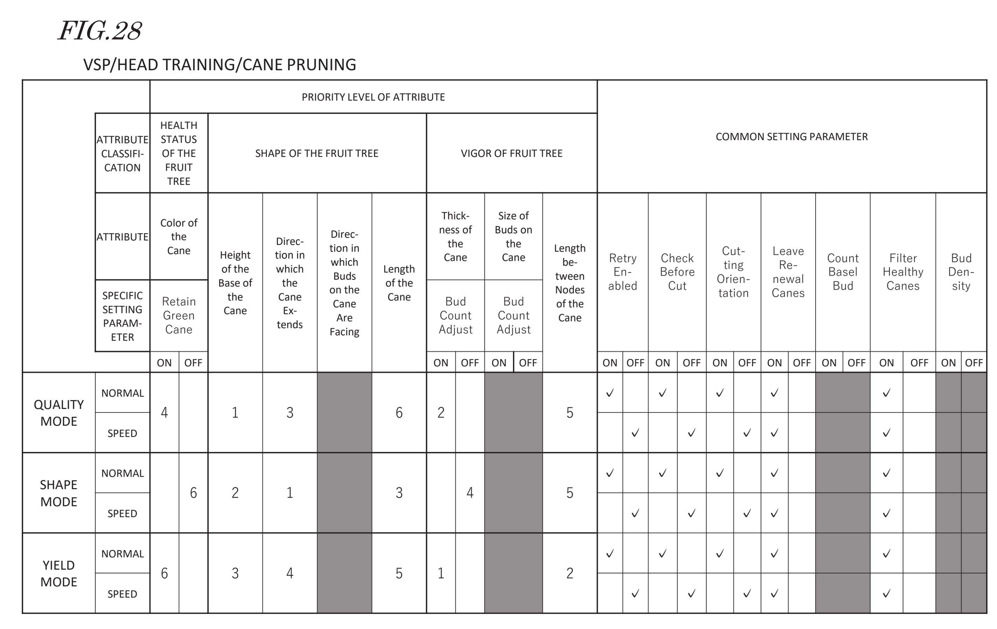

With reference to FIG. **8** and FIG. **28****,** examples of a plurality of pruning modes provided in the cut-point data generation system according to the present example embodiment will be described. In the cut-point data generation system according to the present example embodiment, a total of twelve kinds of pruning modes as shown in FIG. **8** and FIG. **28** are provided.

As described above, the example shown in FIG. **8** is an example of six kinds of pruning modes provided for a cultivation method of the fruit tree that is determined by the combination: trellis system = VSP; training method = cordon training; pruning method = spur pruning (which hereinafter may be referred to as "Cultivation Method 1"). In other words, in the present example embodiment, each of the six kinds of pruning modes in FIG. **8** is allocated to Cultivation Method 1. FIG. **28** shows an example of a plurality of pruning modes that are provided for a cultivation method of the fruit tree that is determined by the combination: trellis system = VSP; training method = head training; pruning method = cane pruning (which hereinafter may be referred to as "Cultivation Method 2"). In other words, each of the six kinds of pruning modes in FIG. **28** is allocated to Cultivation Method 2. As shown in FIG. **28****,** six kinds of pruning modes are provided for Cultivation Method 2, similarly to the example of FIG. **8** (Cultivation Method 1). The six kinds of pruning modes for Cultivation Method 2 are generally classified into the three kinds of Quality mode in which the quality of pruning has priority, Shape mode in which the shape of the fruit tree has priority, and Yield mode in which the fruit yield has priority. For each of the three kinds, Normal Type and Speed Type are provided, where Speed Type gives priority to reducing the amount of time required for pruning work relative to Normal Type.

As can be seen from FIG. **8** and FIG. **28****,** for each of the six kinds of pruning modes, the method of determining a point where cutting is to be performed differs between pruning modes allocated to Cultivation Method 1 and pruning modes allocated to Cultivation Method 2. Even within the same Normal Type of Quality mode, the method of determining a point where cutting is to be performed differs between the pruning modes allocated to Cultivation Method 1 and the pruning modes allocated to Cultivation Method 2. In other words, the method of determining a point where cutting is to be performed differs depending on the cultivation method of the fruit tree.

For each of the six kinds of pruning modes in FIG. **8** and FIG. **28****,** the pruning modes allocated to Cultivation Method 1 will be discussed in comparison with the pruning modes allocated to Cultivation Method 2. Between the pruning modes allocated to Cultivation Method 1 and the pruning modes allocated to Cultivation Method 2, the combination of cane attributes used in the determination of a point where cutting is to be performed mutually differs, for which reason the method of determining a point where cutting is to be performed mutually differs. In the case of Cultivation Method 1 (spur pruning) in FIG. **8****,** the attributes "length of the cane" and "length between nodes of the cane" are not included among the attributes that are used in the determination of a point where cutting is to be performed. On the other hand, in the case of Cultivation Method 2 (cane pruning) in FIG. **28****,** the attributes "length of the cane" and "length between nodes of the cane" are included among the attributes that are used in the determination of a point where cutting is to be performed, whereas the attributes "direction in which buds on the cane are facing" and "size of buds on the cane" are not included among the attributes that are used in the determination of a point where cutting is to be performed.

It can also be said that the priority level settings as to cane attributes used in the determination of a point where cutting is to be performed mutually differ between the pruning modes allocated to Cultivation Method 1 and the pruning modes allocated to Cultivation Method 2. In other words, it may be ensured that priority level settings as to cane attributes used in the determination of a point where cutting is to be performed mutually differ depending on the cultivation method of the fruit tree. In the examples of FIG. **8** and FIG. **28****,** for example, the priority levels of the attributes "length of the cane" and/or "length between nodes of the cane" are made to differ depending on the pruning method for the fruit tree. In the examples of FIG. **8** and FIG. **28****,** for example, the priority levels of the attributes "direction in which buds on the cane are facing" and/or "size of buds on the cane" are made to differ depending on the pruning method for the fruit tree.

Furthermore, between the pruning modes allocated to Cultivation Method 1 and the pruning modes allocated to Cultivation Method 2, the combination of setting parameters that are capable of being enabled or disabled and being used in the determination of a point where cutting is to be performed mutually differs, for which reason the method of determining a point where cutting is to be performed mutually differs. In the case of Cultivation Method 2 (cane pruning) in FIG. **28** differs from the case of Cultivation Method 1 (spur pruning) in FIG. **8** in that the setting parameter "Bud Density" is not included in the method of determining a point where cutting is to be performed. In the case of cane pruning, because the cane attribute "length between nodes of the cane" is included among the attributes that are used in the determination of a point where cutting is to be performed, the distribution of buds to be retained on the cane(s) to be retained can be made more uniform across the entire fruit tree, as in the case of enabling the setting parameter "Bud Density". Thus, the enabled/disabled selection of the setting parameter "Bud Density" can be omitted. Note that the setting parameter "Bud Density" may be disabled for all pruning modes in cane pruning. Under such settings, it can be said that what mutually differs between the pruning modes allocated to Cultivation Method 1 and the pruning modes allocated to Cultivation Method 2 is the enabled/disabled settings as to setting parameters used in the determination of a point where cutting is to be performed.

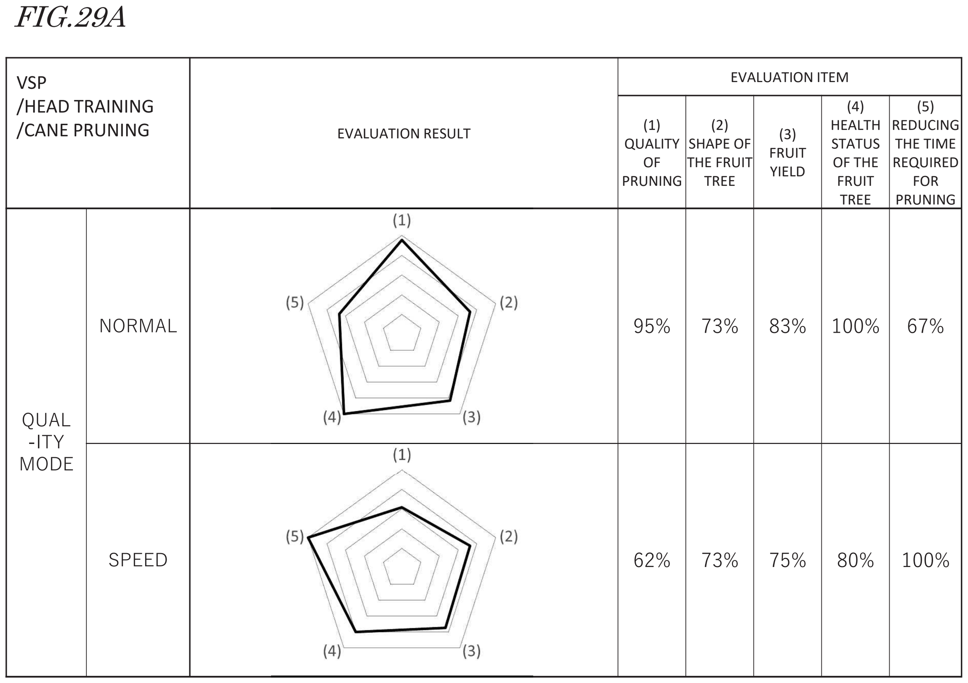

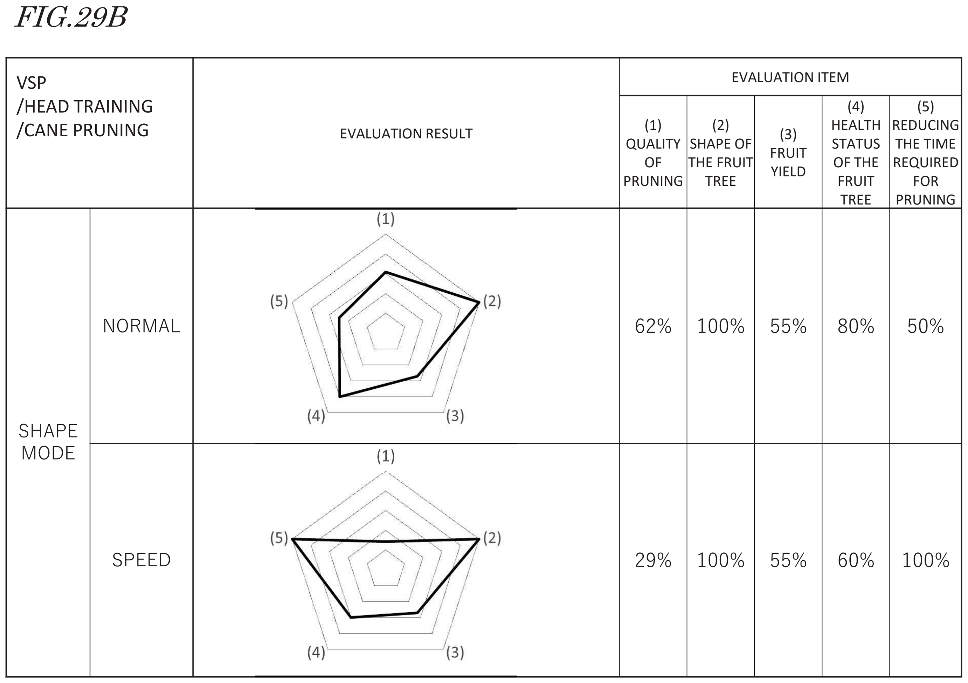

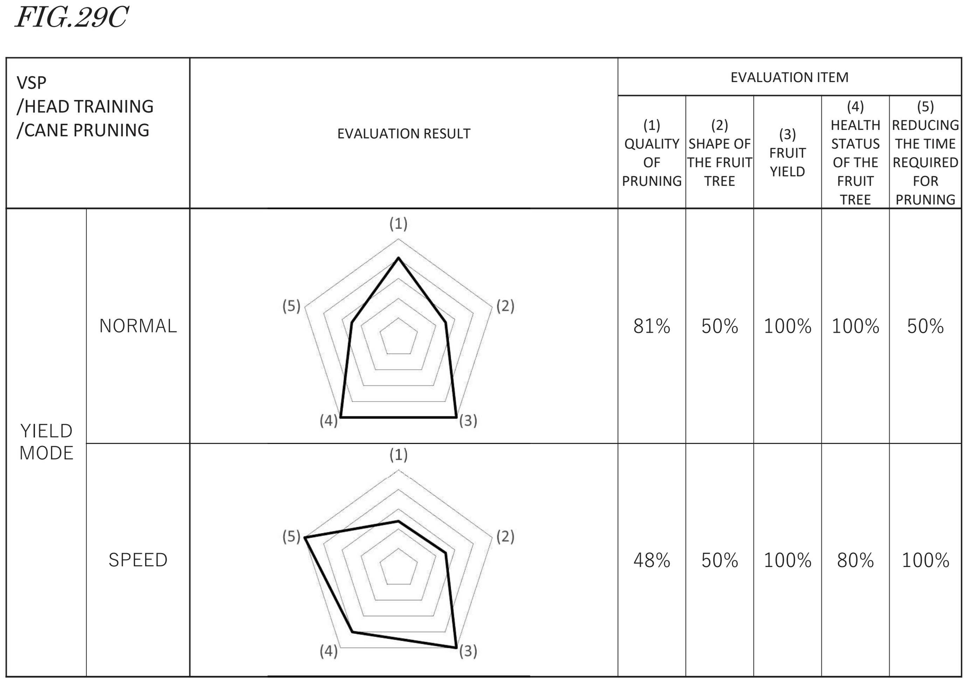

In FIG. **29A****,** FIG. **29B****,** and FIG. **29C****,** results of evaluating each pruning mode in FIG. **28** with respect to a plurality of evaluation items are shown. FIGS. **29A** to **29C** show evaluation results similarly obtained to FIGS. **26A** to **26C** regarding the example shown in FIG. **8****.** As indicated by FIGS. **29A** to **29C****,** what was described with reference to FIGS. **26A** to **26C** regarding the pruning modes shown in FIG. **8** basically applies likewise to the pruning modes shown FIG. **28****.** The evaluation method shown in FIG. **27** is also applicable to the example of FIG. **28****,** irrespective of the cultivation method of the fruit tree.

### <example screen images on operational terminal>

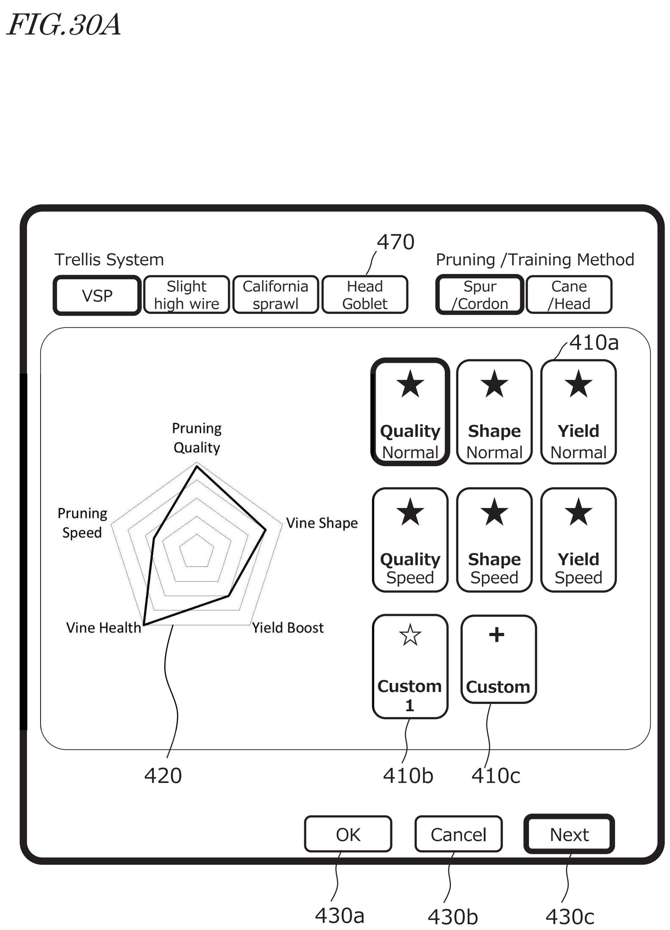

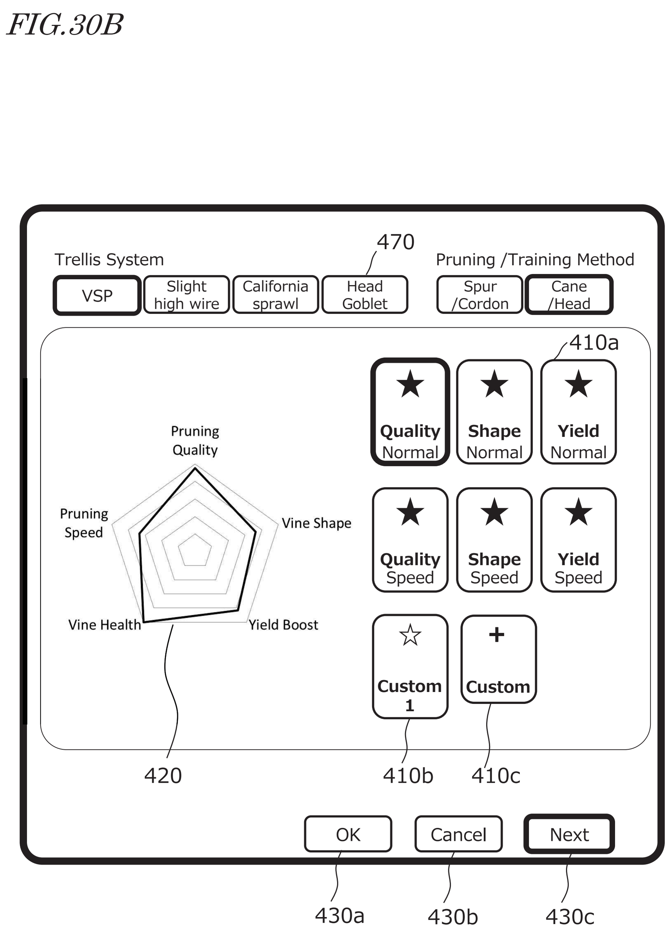

FIG. **30A** and FIG. **30B** show example screen images on the operational terminal **400** in the case where the plurality of pruning modes in FIG. **8** and FIG. **28** are provided. In the cut-point data generation system according to an example embodiment of the present disclosure, in a screen image on the operational terminal **400** operated by the user, a graphical user interface (GUI) which allows the user to select a pruning mode from among a plurality of pruning modes is displayed. With reference to FIG. **30A** and FIG. **30B****,** an example of such a GUI will be described. Differences from the example that has been described with reference to FIGS. **9A** to **9C** will mainly be described.

The example of FIG. **30A** differs from the screen image of FIG. **9A** in that buttons **470** for selecting a cultivation method of the fruit tree is further displayed in a screen image on the operational terminal **400.** The example of FIG. **30A** illustrates a state where Cultivation Method 1 (trellis system = VSP; training method = cordon training; pruning method = spur pruning) is selected and where Normal Type of Quality mode is selected. The example of FIG. **30B** illustrates a state where Cultivation Method 2 (trellis system = VSP; training method = head training; pruning method = cane pruning) is selected and where Normal Type of Quality mode is selected. As in the example of FIG. **30A** and FIG. **30B****,** as the buttons **470** of choice for the cultivation method are switched, the indications on the graph **420** showing the characteristic elements, steps, features, etc., of the corresponding pruning mode are switched accordingly. Thus, depending on the pruning method for the fruit tree, different pruning modes are being displayed. The screen image of FIG. **30A** or FIG. **30B** can transition to a screen image similar to that of FIG. **9B** or FIG. **9C****.** In the screen image similar to that of FIG. **9B** or FIG. **9C****,** the user is able to change and save the method of determining a point where cutting is to be performed in each pruning mode.

### <presenting a candidate for the pruning mode>

In the cut-point data generation method and cut-point data generation system according to the present example embodiment, a candidate for the pruning mode may be presented to the user, based on information on the fruit tree.

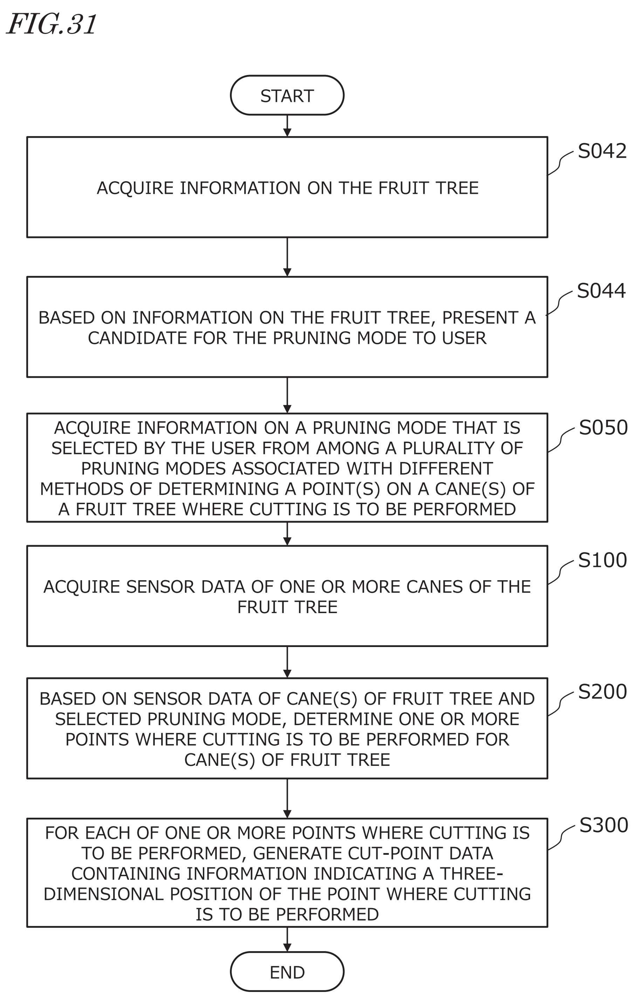

FIG. **31** is a flowchart showing an example procedure of generating cut-point data of canes of a fruit tree according to the present example embodiment. The flowchart of FIG. **31** differs from the aforementioned example (e.g., the example of FIG. **1A****)** in that step **S042** and step **S044** are further included before step **S050** (i.e., the step of acquiring information on the pruning mode that is selected by the user).

At step **S042,** information on the fruit tree is acquired. The information on the fruit tree includes at least one of information on the cultivation method of the fruit tree, information on the cultivar of the fruit tree, information on the age of the fruit tree, or information on a field in which the fruit tree is located. The information on the fruit tree may be acquired based on sensor data of canes of the fruit tree acquired by a sensor or sensors, or based on a user input, or both of these may be used together. Sensor data of canes of the fruit tree can be acquired in a similar manner to the acquisition of sensor data in step **S100,** for example. The information on the fruit tree may be acquired based on sensor data of a field in which the fruit tree is located (e.g., image data acquired by an imager(s)).

At step **S044,** based on the information on the fruit tree acquired in step **S042,** a candidate for the pruning mode is presented to the user. For example, the candidate for the pruning mode is displayed on the operational terminal being operated by the user.

After step **S044,** at step **S050,** information on a pruning mode that is selected by the user is acquired. The user may select a pruning mode by acknowledging the candidate for the pruning mode presented at step **S044.** In the case of not acknowledging the candidate for the pruning mode presented at step **S044,** the user may select another pruning mode.

The processes of step **S100,** step **S200,** and step **S300** are performed in similar manners to the aforementioned example (e.g., the example of FIG. **1A****).**

### <grouping process>

In example embodiments of the present disclosure, as in the example shown in FIG. **21****,** a plurality of canes of the fruit tree may be grouped into a plurality of groups. At this time, the one or more canes that were grouped into the same group may be treated as one or more canes that are the subject of processing in the aforementioned example, in performing the other processes. For example, from among one or more canes that were grouped into the same group, a cane(s) may be selected and determined as a cane to be retained, and any other cane than the cane(s) determined as the cane(s) to be retained may be determined as canes to be removed. Because canes to be retained (e.g., fruiting canes) can be selected from among the one or more canes that were grouped into the same group within the plurality of canes of the fruit tree, pruning work can be efficiently performed while maintaining the fruit yield and quality. When the plurality of groups corresponds to the plurality of spurs, it becomes possible to select a fruiting cane(s) for each spur, such that cut-point data that is better adapted to the needs in pruning work can be generated.

Grouping of the plurality of canes may be performed based on the respective base positions of the plurality of canes. For example, in the case of spur pruning and cordon training, the plurality of groups respectively corresponds to a plurality of spurs of the fruit tree. Among the plurality of canes of the fruit tree, any canes growing from the same spur may be grouped into the same group. Among the plurality of canes of the fruit tree, any canes growing from within a region spanning a predetermined range may be grouped into the same group.

In the case of cane pruning and/or head training, the plurality of canes of the fruit tree are grouped into a group or groups, of a varying number depending on the number of canes to be retained as fruiting canes, for example. Example combinations of the number Nn of canes to be retained as fruiting canes and the number Ng of groups are: (Nn,Ng) = (1,1); (2,2); (3,3 or 2); (4 or more,2); and so on. For instance, in the case of using a training method (double guyot) where two fruiting canes extend from the head, the plurality of canes of the fruit tree can be grouped into two groups. When the plurality of canes of one fruit tree include canes extending in a direction (e.g., one of the right or left direction) with respect to a head or a trunk in the center and canes extending in an opposite direction (e.g., the other of the right or left direction) from the head or trunk, one or more canes extending in one direction are grouped into a first group and one or more canes extending in the other direction are grouped into a second group. When the plurality of canes of one fruit tree extend only in one direction with respect to a head or a trunk in the center (e.g., in the case of single guyot), all canes are treated as one group, that is, the aforementioned grouping process may be omitted.

In the grouping process, based on the segmented image **51a** as shown in FIG. **20A****,** for example, the plurality of canes **58** of the fruit tree can be grouped into a plurality of groups. Based on the segmented image **51a,** each cane **58** may be associated with its corresponding spur **56.** Canes **58** that are associated with an identifier indicating the same spur **56** are grouped into the same group. For example, each cane mask **M58** may be associated with the nearest spur mask **M56.** For example, as a pixel(s) that is contained in both a cane mask **M58** and a spur mask **M56** becomes identified, an overlap between the cane mask **M58** and the spur mask **M56** is known, such that a connection point between the cane mask **M58** and the spur mask **M56** becomes identified. As the connection point between the cane masks **M58** and the spur masks **M56** becomes identified, each cane mask **M58** allows itself to be associated with the spur mask **M56** that it adjoins via a connection point. For example, in the example of FIG. **20A****,** as the cane masks **M58_1** to **M58_6** are associated with the spur mask **M56_1,** it is recognized that the six canes **58_1** to **58_6** indicated by the cane masks **M58_1** to **M58_6** are growing from the spur **56_1** indicated by the spur mask **M56_1.** Thus, the six canes **58_1** to **58_6** growing from the spur **56_1** are grouped into a group that is associated with the spur **56_1.**

Although FIG. **20A** shows example images that only contain the neighborhood of the spur **56_1** in the fruit tree, in practice, images containing a broader range may be used in the grouping process. Images containing the entire fruit tree may be used.

Similarly to the example of FIG. **20A****,** buds on a cane may be identified or extracted by applying instance segmentation to an image containing canes of the fruit tree, or identified or detected through object detection. For each of the buds identified through instance segmentation or object detection, an identifier (e.g., a cane mask **M58)** indicating the corresponding cane is associated. When buds are identified through instance segmentation, by identifying a pixel(s) contained in both of a bud mask to extract a bud and a cane mask **M58,** a connection point between the bud mask and the cane mask **M58** is identified. The bud mask for each bud may be associated with a cane mask **M58** that it adjoins via the connection point. For the object detection process, an object detection model that has been trained by using an algorithm based on deep learning can be used. Moreover, object detection algorithms such as YoloV5 and Yolov4 can be used. An image to which an object detection process has been applied may contain bounding boxes of a rectangular shape for detecting respective buds. The center point of a bounding box, or any of the four vertices of the rectangle, may be used as reference coordinates indicating the position of a bud. Based on the relative positioning between the position (reference coordinates) of each bud and the cane masks **M58,** each bud may be associated with the nearest cane mask **M58.**

All of the one or more canes **58** that were grouped into the same group may possibly be determined as canes to be removed. For example, if canes to be retained cannot be selected from among the one or more canes **58** that were grouped into the same group, or if there is no cane **58** that qualifies as a cane to be retained, all of the one or more canes **58** may be determined as canes to be removed. On the other hand, all of the one or more canes **58** that were grouped into the same group may be determined as canes to be retained. For example, if all of the one or more canes **58** that were grouped into the same group are judged unsuitable for pruning (cutting) (e.g., premature), all of the one or more canes **58** may be determined as canes to be retained. In this case, generation of cut-point data does not need to be performed.

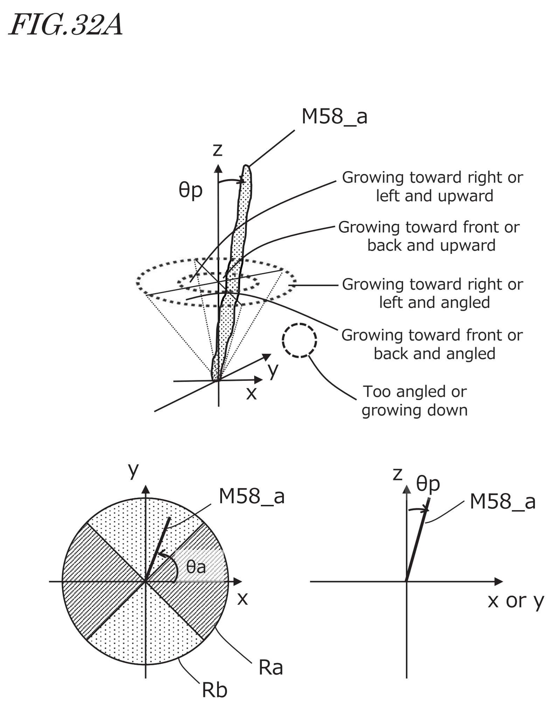

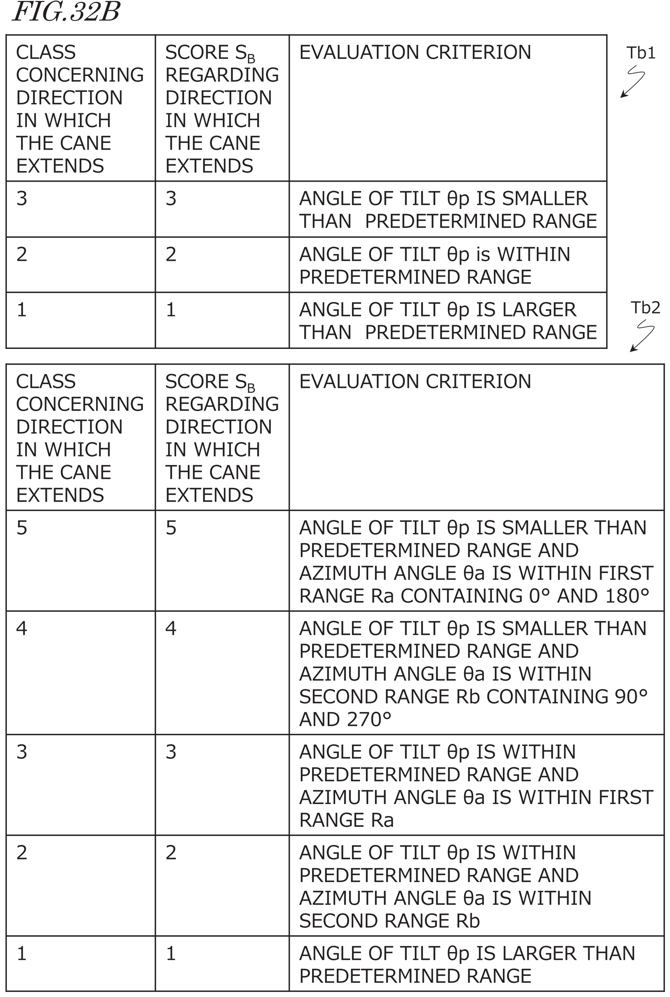

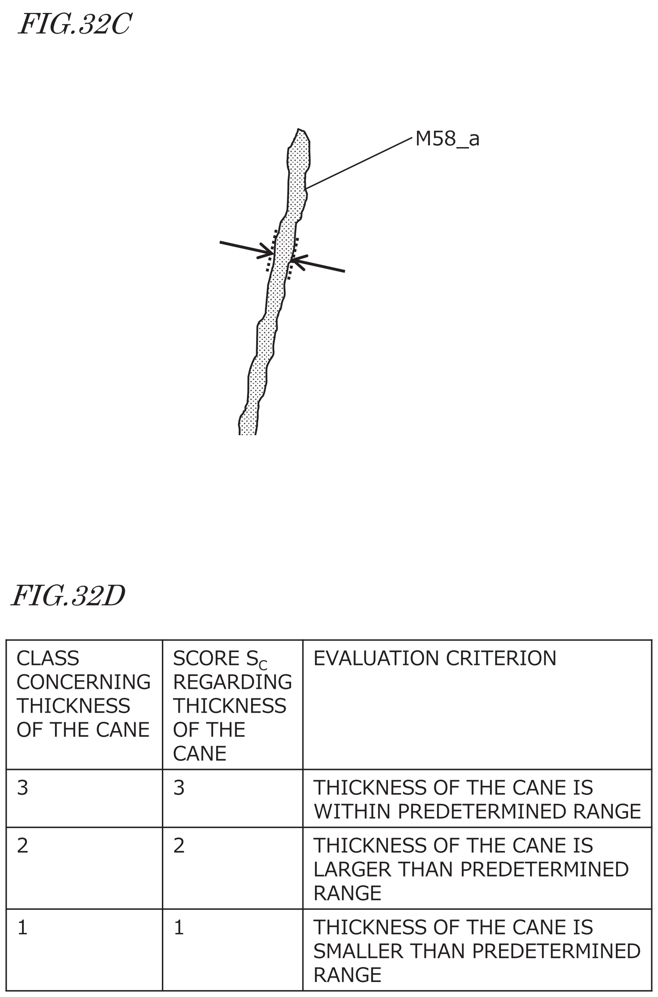

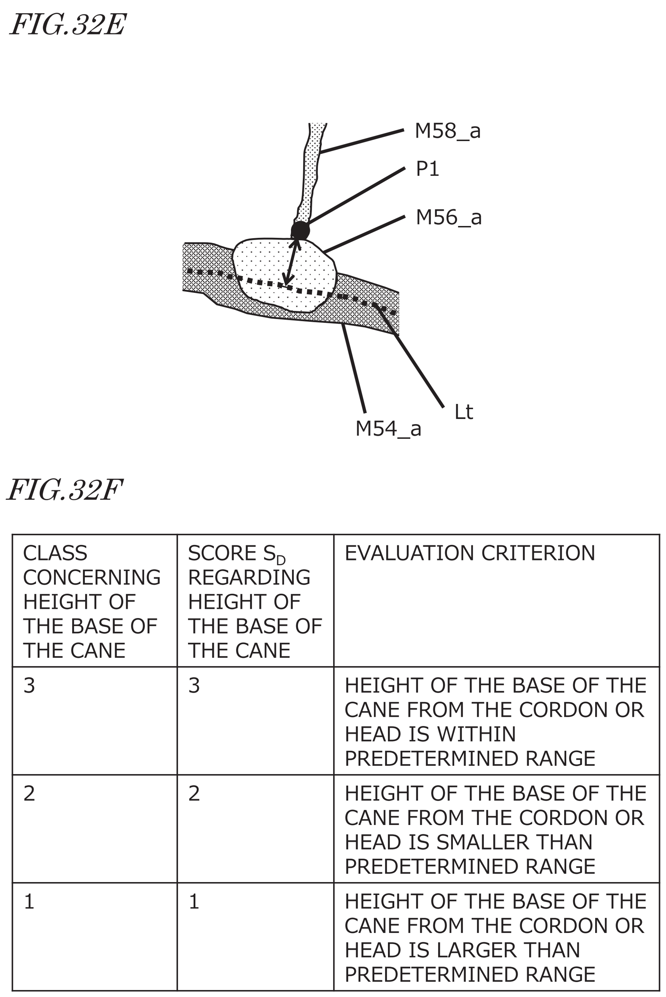

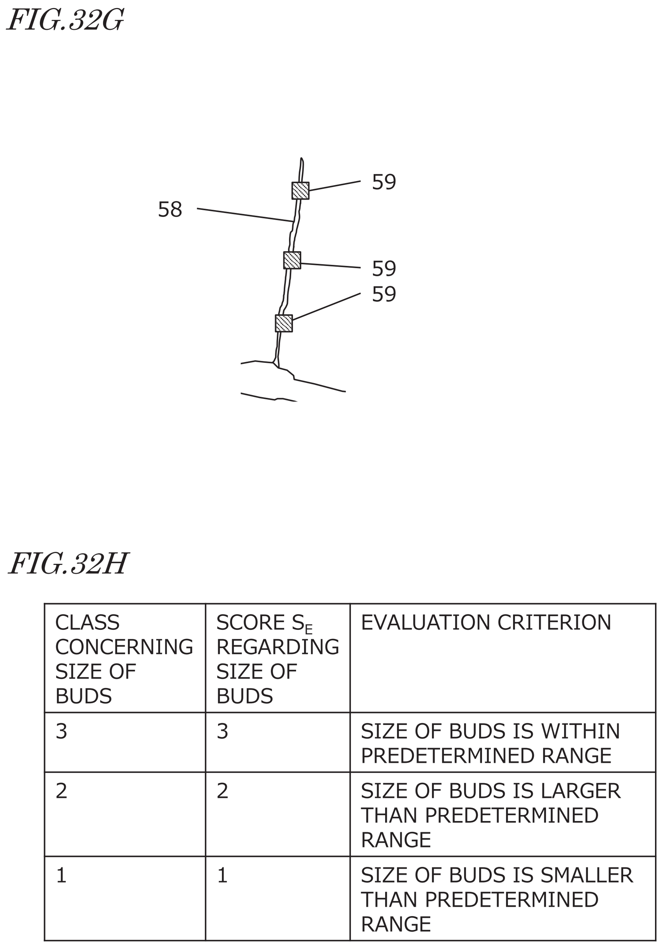

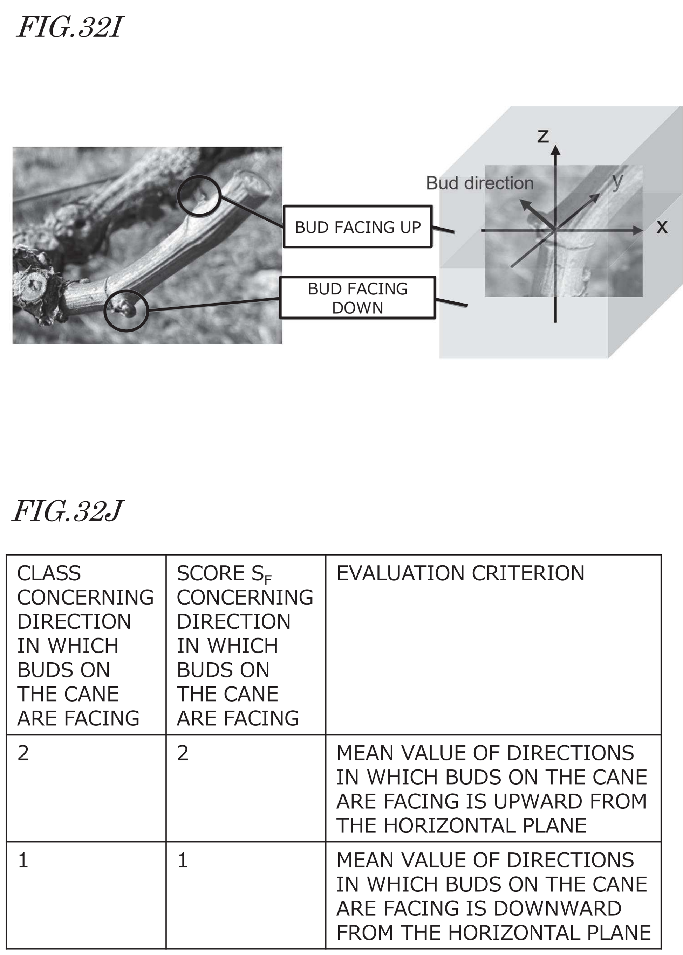

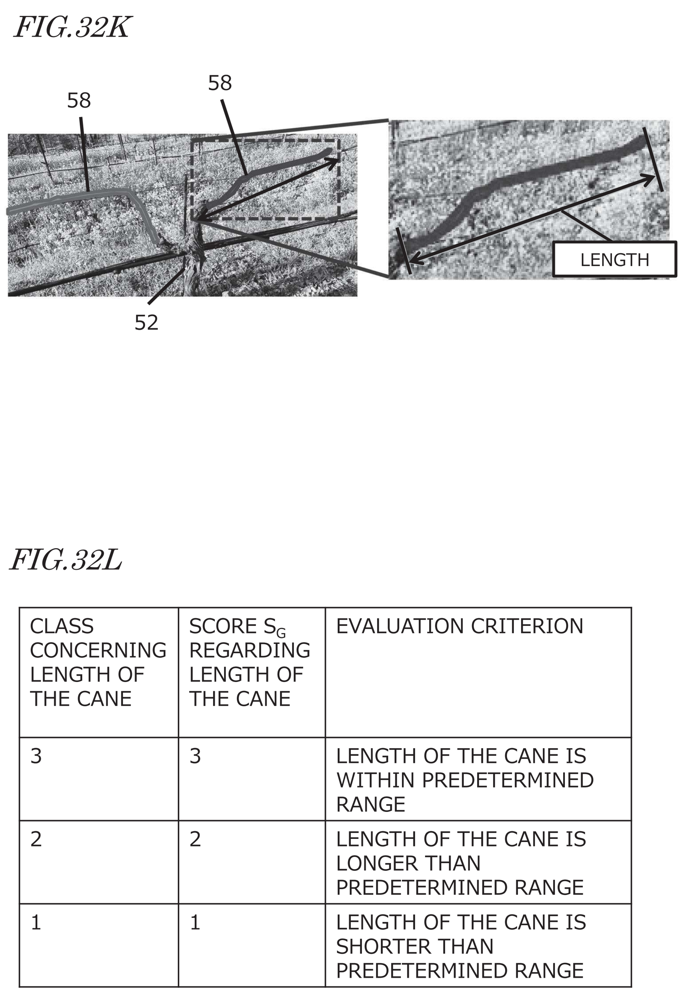

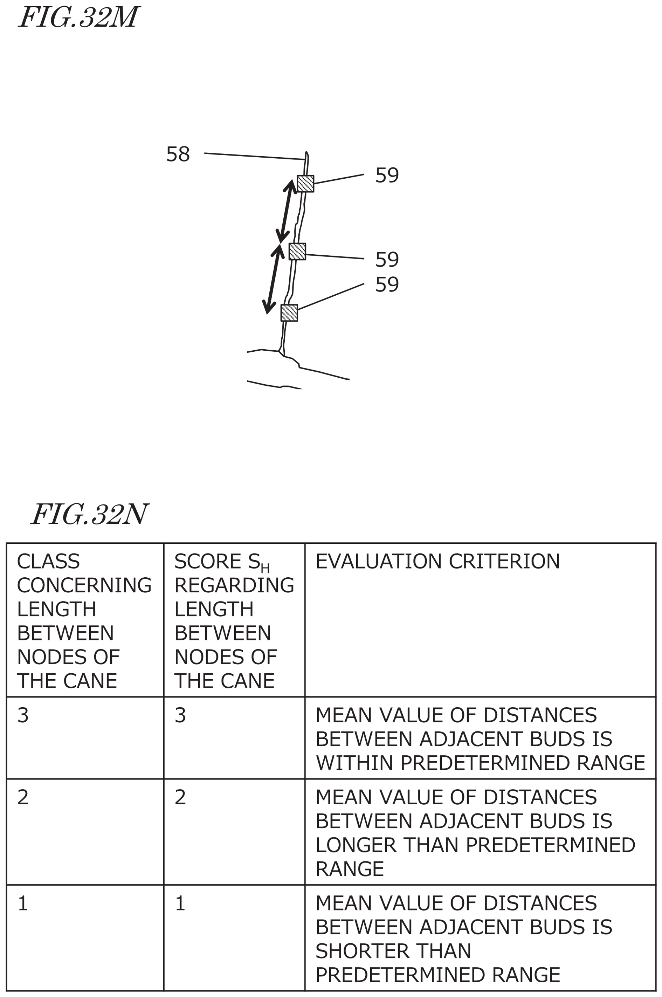

With reference to FIG. **32A** to FIG. **32N****,** specific examples of evaluation criteria for each attribute illustrated above will be described. FIG. **32A****,** FIG. **32C****,** FIG. **32E****,** FIG. **32G****,** FIG. **32I**, FIG. **32K****,** and FIG. **32M** each show a schematic diagram for describing the acquisition of a measurement value or an image that is used for acquiring a measurement value concerning the respective attribute. FIG. **32B****,** FIG. **32D****,** FIG. **32F****,** FIG. **32H****,** FIG. **32J****,** FIG. **32L****,** and FIG. **32N** each show a table illustrating examples of a plurality of classes, an evaluation criterion for each of the plurality of classes, and a score corresponding to each of the plurality of classes, regarding the respective attribute. A factor score of each cane regarding each attribute may be determined based on these tables. For example, based on these tables, a factor score of each cane regarding each attribute can be calculated.

For each of the one or more canes that are the subject of processing, a measurement value concerning the color of the cane is acquired by using a segmented image as shown in FIG. **20A****,** for example. Based on the measurement value concerning the color of the cane, a factor score regarding the color of the cane may be determined. The factor score regarding the color of the cane is determined so as to be higher as the color of the cane is closer to brown, for example. If the outer color of the cane is brown, the cane is dry and therefore suitable for pruning; on the other hand, for example, a green cane is often too soon for pruning and therefore not suitable for pruning. For example, if the factor score regarding the color of the cane is lower than a predetermined value, it may be detected as an unpromising cane that is not suited for selection as a cane to be retained. If the factor score regarding the color of the cane is lower than the predetermined value, the user may be notified that an unpromising cane exists.

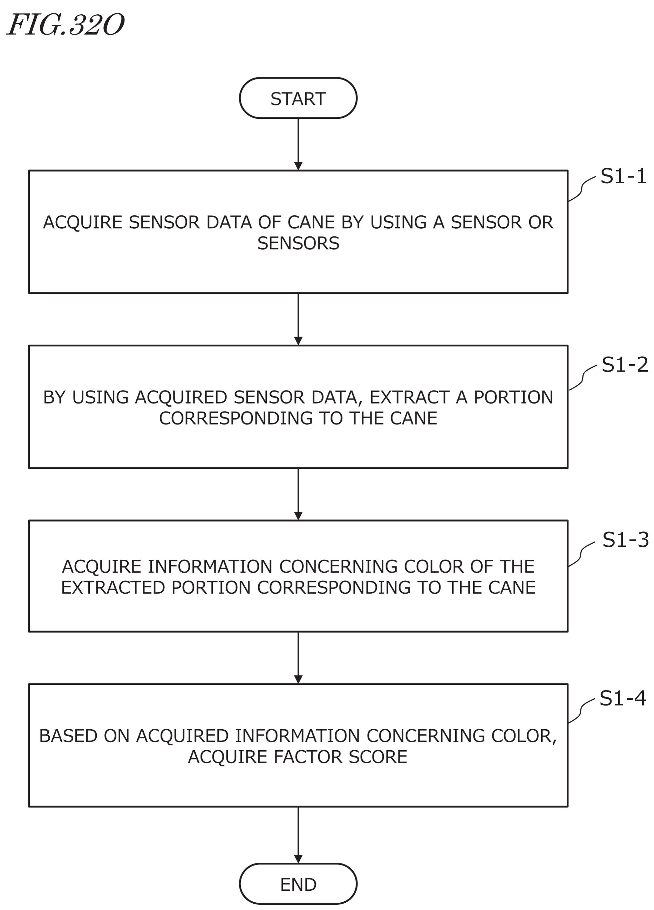

For each of the one or more canes that are the subject of processing, the factor score regarding the color of the cane is determined through the processes of the following steps shown in FIG. **32O****,** for example. FIG. **32O** is a flowchart showing an example of a process of determining a factor score regarding the color of a cane.
step S1-1: By using a sensor or sensors (e.g., a camera(s)), sensor data of the cane (e.g., an image containing the cane) is acquired.
step S1-2: By using the acquired sensor data, a portion corresponding to the cane is extracted. For example, the acquired image is subjected to a segmentation (e.g., instance segmentation) using Al.
step S1-3: Information concerning the color of the portion corresponding to the extracted cane (e.g., RGB values, HSL values, and their statistics) is acquired.
step S1-4: A factor score is obtained based on the acquired information concerning color. For example, a table representing a relationship between information concerning color and factor scores may be stored in a storage device, and a factor score may be obtained by referring to the table.

For each of the one or more canes that are the subject of processing, a measurement value concerning the direction in which the cane extends is acquired by using a segmented image as shown in FIG. **20A****,** for example. FIG. **32A** is a segmented image containing a portion of a fruit tree (cane). For each cane, an angle of tilt **θp** of that cane with respect to an opposite direction of the direction of gravity (the +z direction in the figure) and an azimuth angle **θa** of that cane in a horizontal plane that is orthogonal to the direction of gravity (the xy plane in the figure) are calculated. The calculation of the angle of tilt **θp** and the azimuth angle **θa** is preferably performed by using a portion that is close to the base of the cane (i.e., a portion of the cane that is close to the spur). Based on the angle of tilt **θp** and the azimuth angle **θa**, a factor score regarding the direction in which the cane extends can be determined. When the shape of the trellis system of the fruit tree is VSP (vertical shoot position), the angle of tilt **θp** is preferably small. As for the azimuth angle **θa,** a tilt along the right-left direction (the ±x direction in the figure) may in some cases be more preferable than a tilt along the front-rear direction (the ±y direction in the figure). For example, a cane that is going to be cut may be located ahead (in the +y direction in the figure) of a cutter that cuts canes of the fruit tree. If the xy plane were a clock face, with the +x direction being the 3 o'clock direction and the +y direction being the 0 o'clock direction, and if one were to express the azimuth angle **θa** by defining the 3 o'clock direction as 0° and the counterclockwise direction as positive, it would be more preferable for the azimuth angle **θa** to be in a first range **Ra** containing 0° and 180° (e.g., 0° to 45°, 135° to 225°, and 315° to 360°) than in a second range **Rb** containing 90° and 270° (e.g., 45° to 135°, and 2255° to 315°), for example.

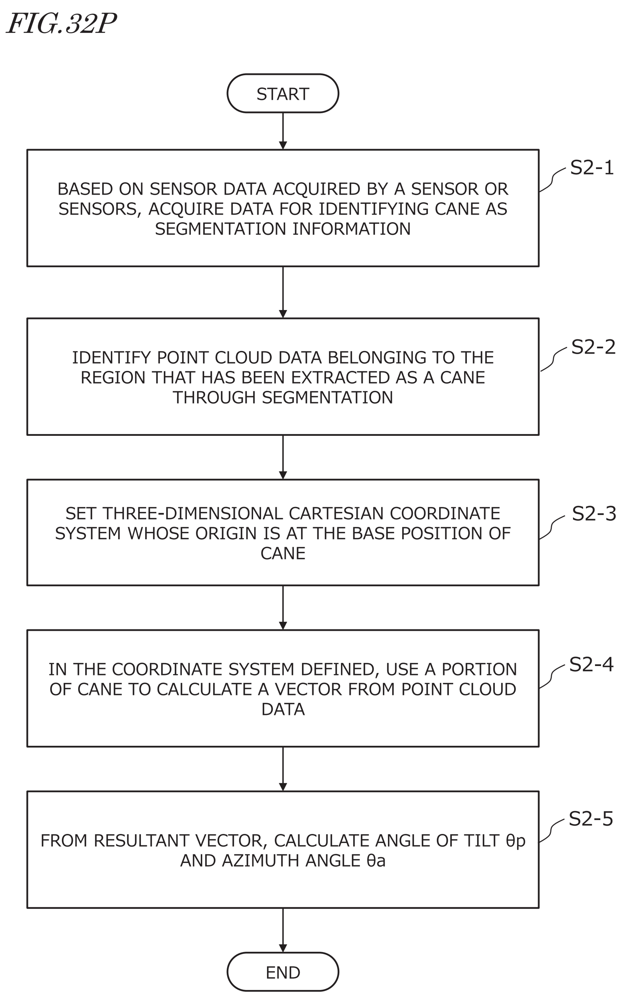

The angle of tilt **θp** and the azimuth angle **θa** of each cane are calculated through the processes of the following steps shown in FIG. **32P****,** for example. FIG. **32P** is a flowchart showing an example of a process of calculating the angle of tilt **θp** and the azimuth angle **θa** of each cane.
step S2-1: With a sensor or sensors, sensor data containing information indicating a three-dimensional structure of a cane is acquired, and the sensor data is subjected to segmentation in order to acquire data for identifying the cane as segmentation information. Acquisition of the sensor data may be achieved by acquiring point cloud data of the cane with a LiDAR sensor, or acquiring an image of the cane with an imager (camera), for example. Acquisition of the segmentation information may be achieved by acquiring information obtained through segmentation of two-dimensional image data, or acquiring information obtained through segmentation of point cloud data. In a case where a two-dimensional image is used in addition to point cloud data, a step of matching the coordinate system of the two-dimensional image and the coordinate system of the point cloud data is further performed.
step S2-2: Point cloud data belonging to the region that has been extracted as the cane through segmentation is identified.
step S2-3: A three-dimensional Cartesian coordinate system is set whose origin is at the base position of the cane. It is assumed that the +z axis direction is in the opposite direction (i.e., vertically upward) of the direction of gravity. In the case of spur pruning, for example, a boundary (connection point) between a cane and a spur or a cordon is identified by using segmentation information, and the connection point between the cane and the spur or cordon is defined as the base position of the cane. In the case of cane pruning, a boundary (connection point) between a cane and a head is identified by using segmentation information, and the connection point between the cane and the head is defined as the base position of the cane.
step S2-4: In the coordinate system defined at step S2-3, a portion in a range of, for example, about 50 cm to about 60 cm from the base of the cane is used to calculate a vector from the point cloud data. Although the vector can be calculated by using the entire cane, it is preferable to use a range near the base of the cane. For example, by using singular value decomposition (SVD), the structure of a local portion (range near the base) of the cane may be extracted from point cloud data, and this portion may be used in calculating the vector.
step **S**2-5: From the resultant vector, the angle of tilt **θp** and the azimuth angle **θa** are determined.

FIG. **32B** shows Table Tb1 and Table Tb2, as examples of a plurality of classes concerning the direction in which the cane extends, scores corresponding to the respective classes, and evaluation criteria for the respective classes. In a case where the shape of the trellis system of the fruit tree is VSP, for example, the factor score regarding the direction in which the cane extends is determined so that the factor score is higher as the angle of tilt **θp** is smaller. For example, in a case where the shape of the trellis system of the fruit tree is VSP, the factor score may be determined so as to be in descending order of, if the angle of tilt **θp** is smaller than a predetermined range, if the angle of tilt **θp** is within the predetermined range, and if the angle of tilt **θp** is larger than the predetermined range. Alternatively, in a case where the shape of the trellis system of the fruit tree is VSP, the factor score may be determined so as to be in descending order of: if the angle of tilt **θp** is smaller than a predetermined range and the azimuth angle **θa** is within the first range **Ra** containing 0° and 180°, if the angle of tilt **θp** is smaller than the predetermined range and the azimuth angle **θa** is within the second range **Rb** containing 45° and 135°, if the angle of tilt **θp** is within the predetermined range and the azimuth angle **θa** is within the first range **Ra** containing 0° and 180°, if the angle of tilt **θp** is within the predetermined range and the azimuth angle **θa** is within the second range **Rb** containing 45° and 135°, and if the angle of tilt **θp** is larger than the predetermined range.

Note that, for example, the trunk of the fruit tree may be tilted with respect to an opposite direction of the direction of gravity (the +z direction in the figure). Even in such a case, the factor score regarding the direction in which the cane extends may be determined based on the angle of tilt **θp** of that cane with respect to an opposite direction of the direction of gravity and the azimuth angle **θa** of that cane in a horizontal plane that is orthogonal to the direction of gravity.

In cases where the shape of the trellis system of the fruit tree is not VSP, the factor score regarding the direction in which the cane extends can be determined based on evaluation criteria that are different from the exemplified evaluation criteria.

For each of the one or more canes that are the subject of processing, a measurement value concerning the thickness of the cane is acquired by using a segmented image as shown in FIG. **20A****,** for example. FIG. **32C** is an image showing enlarged a portion of a segmented image, containing a cane mask **M58_a.** By using such a cane mask contained in a segmented image, for example, a measurement value of the thickness of each cane is acquired. The measurement value concerning the thickness of the cane is obtained by calculating, for every predetermined distance from the base of the cane, a length along a direction that is orthogonal to the direction in which the cane extends, and calculating a mean value, for example. The calculation of a length along a direction that is orthogonal to the direction in which the cane extends may be performed by using a portion of the cane other than the portion having buds, i.e., by using a portion of the cane not having any buds.

Based on the measurement value concerning the thickness of the cane, a factor score regarding the thickness of the cane can be determined. FIG. **32D** shows examples of a plurality of classes concerning the thickness of the cane, scores corresponding to the respective classes, and example evaluation criteria for the respective classes. The factor score regarding the thickness of the cane is determined so as to be in descending order of: if the thickness of the cane (e.g., the aforementioned mean value) is within a predetermined range; if the thickness of the cane (e.g., the aforementioned mean value) is larger than the predetermined range; and if the thickness of the cane (e.g., the aforementioned mean value) is smaller than the predetermined range, for example.

For each of the one or more canes that are the subject of processing, a measurement value concerning the height of the base of the cane is acquired by using a segmented image as shown in FIG. **20A****,** for example. FIG. **32E** is an image showing enlarged a portion of a segmented image, containing a cane mask **M58_a,** a spur mask **M56_a** to extract a spur from which a cane corresponding to the cane mask **M58_a** is growing, and a cordon mask **M54_a.** When the pruning method for the fruit tree is spur pruning, a measurement value of the height of the base position of the cane from the cordon is acquired by using such a segmented image, for example. For instance, a distance **Dt** between a position **P1** of the base (i.e., a site of contact with the spur mask **M56_a)** of the cane mask **M58_a** and a center line Lt of the cordon mask **M54_a** is calculated. At this time, similarly to the case of performing a grouping process as has been described with reference to FIG. **20A****,** each cane **58** may be associated with its corresponding spur **56,** based on the segmented image. When the pruning method for the fruit tree is cane pruning, a measurement value of the height of the base position of the cane from the head is acquired by using a segmented image, for example.

Based on the measurement value concerning the height of the base of the cane, a factor score regarding of the height of the base of the cane can be determined. FIG. **32F** shows examples of a plurality of classes concerning the height of the base of the cane, scores corresponding to the respective classes, and example evaluation criteria for the respective classes. When the shape of the trellis system of the fruit tree is VSP (vertical shoot position) and the pruning method for the fruit tree is spur pruning or cane pruning, for example, the factor score regarding the height of the base of the cane is determined so as to be in descending order of: if the height of the base of the cane is within a predetermined range, the height of the base of the cane is lower than the predetermined range, and if the height of the base of the cane is higher than the predetermined range. The reason is that, when the shape of the trellis system of the fruit tree is VSP, it is preferable to bear fruits within a predetermined range from the cordon or head (e.g., in a region of about 10 cm from the cordon). As described above, in the case of spur pruning, the height of the base of the cane is evaluated in terms of height of the base position of the cane from the cordon; and in the case of cane pruning, it is evaluated in terms of height of the base position of the cane from the head. In cases where the shape of the trellis system of the fruit tree is not VSP, the factor score regarding the height of the base of the cane can be determined based on evaluation criteria that are different from the exemplified evaluation criteria.

For each of the one or more canes that are the subject of processing, a measurement value concerning the size of buds on the cane is acquired by using a segmented image as shown in FIG. **20A****,** for example. The size of buds on the cane measurement value concerning is obtained by calculating a mean value of sizes of a predetermined number of buds among the buds on that cane, for example. The predetermined number may be a setting value for the number of buds to be retained on a cane to be retained, for example. Before acquiring a measurement value concerning the size of buds on the cane, information on a setting value for the number of buds to be retained on a cane to be retained is acquired based on a user input, for example. FIG. **32G** shows an image depicting a portion of a fruit tree (cane). From the closest bud to the base of the cane (i.e., the closest bud to spur or cordon), sizes of a predetermined number (e.g., two) of buds are determined and their mean value is calculated. The measurement value of a size of a bud is obtained by calculating an area of a region of the bud mask to extract the bud in the segmented image, for example.

Based on the measurement value concerning the size of buds on the cane, a factor score regarding the size of buds on the cane can be determined. FIG. **32H** shows examples of a plurality of classes concerning the size of buds on the cane, scores corresponding to the respective classes, and example evaluation criteria for the respective classes. The factor score regarding the size of buds on the cane is determined so as to be in descending order of: if the size of buds on the cane (e.g., the aforementioned mean value) is within a predetermined range; if the size of buds on the cane (e.g., the aforementioned mean value) is larger than the predetermined range; and if the size of buds on the cane (e.g., the aforementioned mean value) is smaller than the predetermined range, for example.

For each of the one or more canes that are the subject of processing, a measurement value concerning the direction in which buds on the cane are facing is acquired by using a segmented image as shown in FIG. **20A****,** for example. The measurement value concerning the direction in which buds on the cane are facing is obtained by, among buds on that cane, calculating a mean value of the directions in which a predetermined number of buds are facing, for example. The predetermined number may be a setting value for the number of buds to be retained on a cane to be retained, for example. Before acquiring a measurement value concerning the size of buds on the cane, information on a setting value for the number of buds to be retained on a cane to be retained is acquired based on a user input, for example. FIG. **32I** shows an image depicting a portion of a fruit tree (cane). From the closest bud to the base of the cane, directions in which a predetermined number (e.g., two) of buds are facing are determined and their mean value is calculated. As the measurement value of a direction in which a bud is facing, an angle of tilt of the bud with respect to a direction (the ±z direction in the figure) that is orthogonal to the horizontal plane (the xy plane in the figure) is determined, for example. As an example variation, among all buds on the cane, a ratio of the number of buds whose angles of tilt are in directions of values equal to or greater than a predetermined value regarding the z direction may be defined as the measurement value.

Based on the measurement value concerning the direction in which buds on the cane are facing, a factor score regarding the direction in which buds on the cane are facing can be determined. FIG. 32J shows examples of a plurality of classes concerning the direction in which buds on the cane are facing, scores corresponding to the respective classes, and example evaluation criteria for the respective classes. When the shape of the trellis system of the fruit tree is VSP (vertical shoot position), for example, the factor score regarding the direction in which buds on the cane are facing is determined so as to be in descending order of: if the direction in which buds on the cane are facing (e.g., the aforementioned mean value) is upward from the horizontal plane, and if the direction in which buds on the cane are facing (e.g., the aforementioned mean value) is downward from the horizontal plane. Note that the pruning method for the fruit tree may be either one of spur pruning or cane pruning. The reason is that VSP is configured so that shoots (or canes) extend upward along the vertical direction from the buds. In cases where the shape of the trellis system of the fruit tree is not VSP, the factor score regarding the direction in which buds on the cane are facing can be determined based on evaluation criteria that are different from the exemplified evaluation criteria.

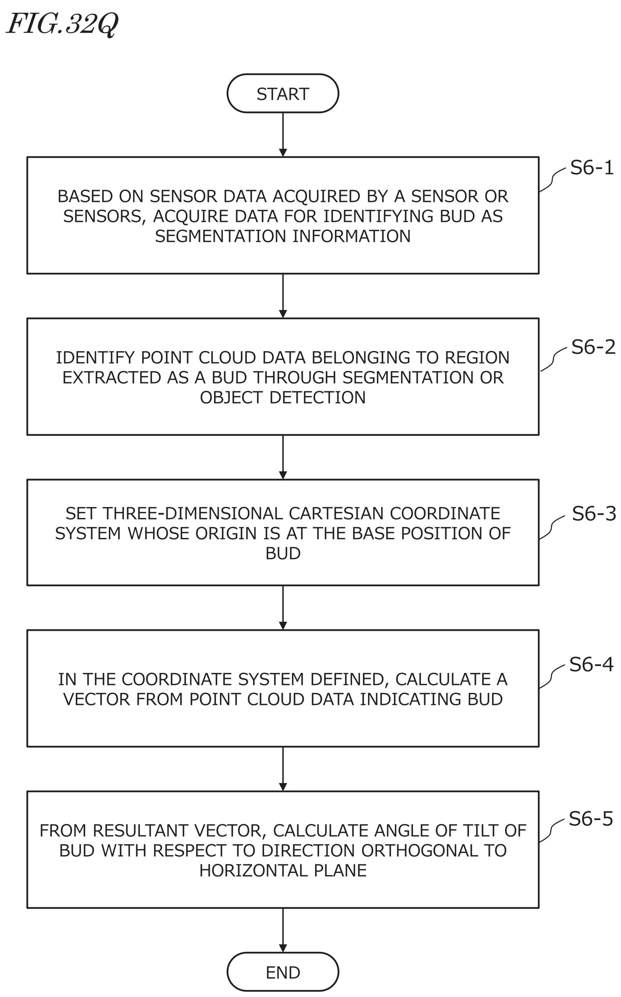

The angle of tilt of a bud with respect to a direction (the ±z direction in the figure) that is orthogonal to the horizontal plane (the xy plane in the figure) is calculated through the processes of the following steps shown in FIG. **32Q****,** for example. FIG. **32Q** is a flowchart showing an example of a process of angle of tilt of a bud with respect to a direction that is orthogonal to the horizontal plane.
step S6-1: With a sensor or sensors, sensor data containing information indicating a three-dimensional structure of the cane is acquired, and the sensor data is subjected to segmentation or object detection in order to acquire data for identifying a bud(s) as segmentation information. Acquisition of the sensor data may be achieved by acquiring point cloud data of the cane with a LiDAR sensor, for example. An image of the cane may be further acquired with an imager (camera). Acquisition of the segmentation information may be achieved by acquiring information obtained through segmentation of two-dimensional image data, or acquiring information obtained through segmentation of point cloud data. In a case where a two-dimensional image is used in addition to point cloud data, a step of matching the coordinate system of the two-dimensional image and the coordinate system of the point cloud data is further performed.
step S6-2: Point cloud data belonging to the region that has been classified as a bud(s) through segmentation or object detection is identified.
step S6-3: A three-dimensional Cartesian coordinate system is set whose origin is at the base position of each bud. It is assumed that the +z axis direction is in the opposite direction (i.e., vertically upward) of the direction of gravity. By identifying a boundary (connection point) between the bud and the cane by using segmentation information, the connection point between the bud and the cane is defined as the base position of the bud.
step S6-4: In the coordinate system defined at step S6-3, a vector is calculated from the point cloud data representing the bud.
step S6-5: From the resultant vector, the angle of tilt of the bud with respect to a direction that is orthogonal to the horizontal plane is determined.

For each of the one or more canes that are the subject of processing, a measurement value concerning the length of the cane is acquired by using a segmented image as shown in FIG. **20A****,** for example. FIG. **32K** shows an image depicting a portion of a fruit tree (cane). The length of the cane is defined as the length from the base of the cane (e.g., a boundary (connection point) between a cane and a spur or cordon in the case of spur pruning; and a boundary (connection point) between a cane and a head in the case of cane pruning, for example) to the final end (the farthest end from the base) of the cane. When the final end of the cane is not contained in the image (i.e., being outside the angle of view), the farthest point from the base of the cane within the image is defined as the final end of the cane. As for the length of the cane, without being limited to a straight-line distance between two points, the length of a curve along the length direction of the cane can also be used.

Based on the measurement value concerning the length of the cane, a factor score regarding of the length of the cane can be determined. FIG. **32L** shows examples of a plurality of classes concerning the length of the cane, scores corresponding to the respective classes, and example evaluation criteria for the respective classes. In the case of cane pruning, for example, the factor score regarding the length of the cane is determined so as to be in descending order of: if the length of the cane is within a predetermined range; if the length of the cane is longer than the predetermined range; and if the length of the cane is shorter than the predetermined range. As a threshold, for example, a half distance of the distance between the trunks of fruit trees can be used. As used in the evaluation criteria in FIG. **32L****,** the "predetermined range" includes a half distance of the distance between the trunks of adjacent fruit trees. Information on the length of a distance between trunks of adjacent fruit trees may be acquired based on sensor data of two or more adjacent fruit trees (e.g., sensor data containing information indicating a three-dimensional structure of the fruit trees), or acquired based on a user input.

In the case of cane pruning, basically cut-point data is not generated for canes to be retained. However, when the length of each cane determined as a cane to be retained is longer than a predetermined range (e.g., when classified as class "2" in the example of FIG. **32L****),** cut-point data for the cane to be retained may be generated so that it becomes equal to or shorter than the predetermined range.

In the case of spur pruning, the factor score regarding the length of the cane can be determined based on evaluation criteria that are different from the exemplified evaluation criteria.

For each of the one or more canes that are the subject of processing, a measurement value concerning the length between nodes of the cane is acquired by using a segmented image as shown in FIG. **20A****,** for example. FIG. **32M** shows an image depicting a portion of a fruit tree (cane). As shown in FIG. **32M****,** it is obtained by, among buds on the cane, calculating a mean value of distances between adjacent buds. As described earlier, similarly to the example of FIG. **20A****,** buds on a cane may be extracted through instance segmentation, or buds may be detected through object detection. For example, by using the center points of the extracted or detected buds as reference coordinates of the buds, a distance between adjacent buds can be determined.

Based on the measurement value concerning the distance between adjacent buds, a factor score regarding the length between nodes of the cane can be determined. FIG. **32N** shows examples of a plurality of classes concerning the length between nodes of the cane, scores corresponding to the respective classes, and example evaluation criteria for the respective classes. In the case of cane pruning, for example, the factor score regarding the length between nodes of the cane is determined so as to be in descending order of: if the distance between adjacent buds on that cane (e.g., the aforementioned mean value) is within a predetermined range, if the distance between adjacent buds on that cane (e.g., the aforementioned mean value) is longer than the predetermined range, and if the distance between adjacent buds on that cane (e.g., the aforementioned mean value) is shorter than the predetermined range. In the case of spur pruning, the factor score regarding the length between nodes of the cane can be determined based on evaluation criteria that are different from the exemplified evaluation criteria.

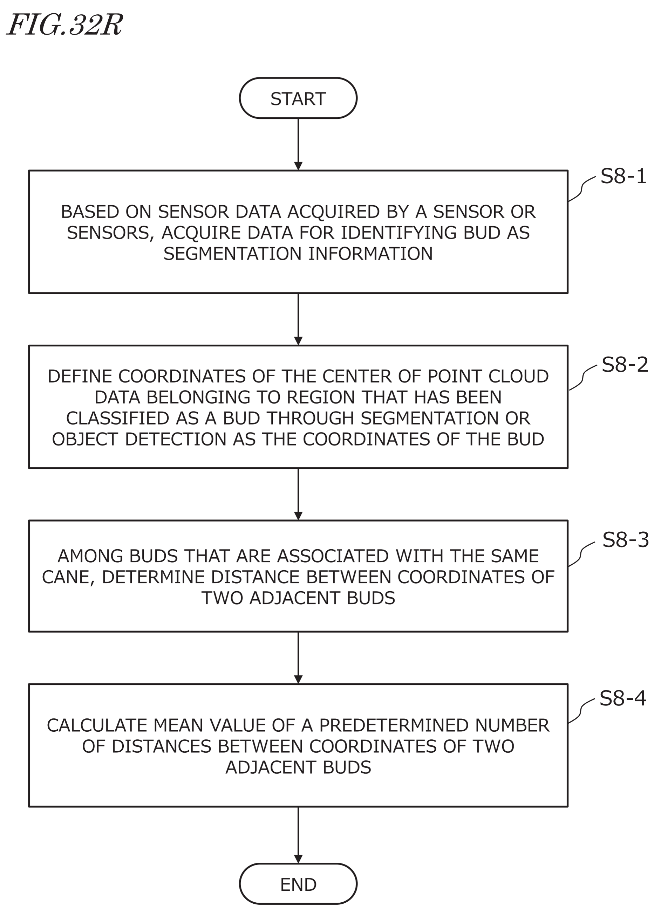

For each of the one or more canes that are the subject of processing, the factor score regarding the length between nodes of the cane is determined through the processes of the following steps shown in FIG. **32R****,** for example. FIG. **32R** is a flowchart showing an example of a process of calculating a mean value of distances between coordinates of two adjacent buds.
step S8-1: With a sensor or sensors, sensor data containing information indicating a three-dimensional structure of the cane is acquired, and the sensor data is subjected to segmentation or object detection in order to acquire data for identifying a bud(s) as segmentation information. Acquisition of the sensor data may be achieved by acquiring point cloud data of the cane with a LiDAR sensor, for example. An image of the cane may be further acquired with an imager (camera). Acquisition of the segmentation information may be achieved by acquiring information obtained through segmentation of two-dimensional image data, or acquiring information obtained through segmentation of point cloud data. In a case where a two-dimensional image is used in addition to point cloud data, a step of matching the coordinate system of the two-dimensional image and the coordinate system of the point cloud data is further performed.
step S8-2: The coordinates of the center of point cloud data belonging to the region that has been classified as a bud through segmentation or object detection are defined as the coordinates of the bud.
step S8-3: Among buds that are associated with the same cane, a straight-line distance between the coordinates of two adjacent buds is determined. As an example variation, among buds associated with the same cane, rather than a straight-line distance between the coordinates of two adjacent buds, a curved distance (i.e., a distance along the direction in which the cane extends) may be determined and used.
step S8-4: A mean value of a predetermined number of distances between the coordinates of two adjacent buds as obtained at step S8-3 is determined.

The example embodiments of the present disclosure are applicable to agricultural machines for use in smart agriculture.

While example embodiments of the present invention have been described above, it is to be understood that variations and modifications will be apparent to those skilled in the art without departing from the scope of the present invention. The scope of the present invention, therefore, is to be determined solely by the following claims.

## Claims

1. A method carried out by a computer or computers to generate cut-point data containing information indicating a three-dimensional position of a point on a cane of a fruit tree (200) where the cane is to be cut off, the method comprising:
acquiring (S050) information on a pruning mode that is selected by a user from among a plurality of pruning modes having respectively different methods of determining a point(s) on a cane(s) of the fruit tree (200) where cutting is to be performed;
based on sensor data of the cane(s) of the fruit tree (200) acquired (S100) by a sensor or sensors and based on the selected pruning mode, determining (S200) one or more points where cutting is to be performed for the cane(s) of the fruit tree (200); and
generating (S300) the cut-point data for each of the one or more points where cutting is to be performed.

2. The method of claim 1, wherein,
determining the one or more points where cutting is to be performed includes:
for each of one or more canes of the fruit tree (200), acquiring (S230) measurement values concerning two or more attributes based on the sensor data;
based on the measurement values and priority levels of the two or more attributes, determining (S242) the one or more canes each as a cane to be removed or a cane to be retained; and
for each cane determined as the cane to be removed, determining (S250) a point where cutting is to be performed; and
settings of the priority levels are made to differ depending on the pruning mode.

3. The method of claim 2, wherein the two or more attributes include at least one of a color of the cane, a direction in which the cane extends, a thickness of the cane, a height of the base of the cane, a size of buds on the cane, a direction in which buds on the cane are facing, a length of the cane, or a length between nodes of the cane.

4. The method of claim 2 or 3, wherein the user is able to change and save settings of the priority levels for the plurality of pruning modes.

5. The method of claim 1, wherein,
determining the one or more points where cutting is to be performed includes:
for each of one or more canes of the fruit tree (200), acquiring (S230) a measurement value(s) concerning one or more attributes based on the sensor data;
based on the measurement value(s), determining (S240, S242) the one or more canes each as a cane to be removed or a cane to be retained; and
for each cane determined as the cane to be removed, determining (S250) a point where cutting is to be performed; and
an enabled/disabled setting(s) as to a setting parameter(s) concerning the measurement value(s), the setting parameter(s) being capable of being enabled or disabled in the determination of the point where cutting is to be performed, is made to differ depending on the pruning mode.

6. The method of claim 5, wherein,
the one or more attributes include a color of the cane; and
the enabled/disabled setting(s) as to the setting parameter(s) concerning the measurement value(s) includes:
an enabled/disabled setting (S240i1) as to determining any cane as the cane to be retained if the color of the cane is green.

7. The method of claim 6, wherein,
when the setting is enabled, the determining the one or more canes each as the cane to be removed or the cane to be retained includes:
based on the measurement value concerning the color of the cane, determining (S240i4) the cane as the cane to be retained if the color of the cane is green.

8. The method of any one of claims 5 to 7, wherein,
determining the one or more points where cutting is to be performed further includes:
determining (S260) a number of buds to be retained on the cane(s) determined as the cane to be retained based on the measurement value(s); and
based on the number of buds to be retained, determining (S270) a point or points where cutting is to be performed for the cane(s) determined as the cane to be retained;
the one or more attributes include an attribute concerning a vigor of the fruit tree (200); and
the enabled/disabled setting(s) as to the setting parameter(s) concerning the measurement value(s) includes:
an enabled/disabled setting (S260b) as to adjusting the number of buds to be retained on the cane(s) determined as the cane to be retained based on the measurement value concerning the attribute concerning the vigor of the fruit tree (200).

9. The method of claim 8, wherein,
when the setting is enabled, the determining the number of buds to be retained includes:
based on the measurement value concerning the attribute concerning the vigor of the fruit tree (200), if the vigor of the cane determined as the cane to be retained is judged to be stronger than a predetermined range, increasing (S260e) the number of buds to be retained on the cane determined as the cane to be retained; and,
based on the measurement value concerning the attribute concerning the vigor of the fruit tree (200), if the vigor of the cane determined as the cane to be retained is judged to be weaker than the predetermined range, decreasing (S260g) the number of buds to be retained on the cane determined as the cane to be retained.

10. The method of claim 8 or 9, wherein the attribute concerning the vigor of the fruit tree (200) includes at least one of a thickness of the cane, a size of buds on the cane, or a length between nodes of the cane.

11. The method of any one of claims 8 to 10, wherein
the attribute concerning the vigor of the fruit tree (200) includes a thickness of the cane;
determining the one or more canes each as the cane to be removed or the cane to be retained includes:
for each of the one or more canes, determining (S240a, S242a) a factor score based on the thickness of the cane; and
based on the factor score, determining the one or more canes each as the cane to be removed or the cane to be retained; and,
when the setting is enabled, the determining the number of buds to be retained includes:
if the factor score regarding the thickness of the cane for the cane determined as the cane to be retained is larger than a predetermined range, increasing the number of buds to be retained from a predetermined value; and
if the factor score regarding the thickness of the cane for the cane determined as the cane to be retained is smaller than the predetermined range, decreasing the number of buds to be retained from the predetermined value.

12. The method of any one of claims 8 to 11, wherein,
the attribute concerning the vigor of the fruit tree (200) includes a size of buds on the cane;
determining the one or more canes each as the cane to be removed or the cane to be retained includes:
for each of the one or more canes, determining a factor score based on the size of buds on the cane; and
based on the factor score, determining (S240a, S242a) the one or more canes each as the cane to be removed or the cane to be retained; and
when the setting is enabled, the determining the number of buds to be retained includes:
if the factor score regarding the size of buds for the cane determined as the cane to be retained is larger than a predetermined range, increasing the number of buds to be retained from a predetermined value; and,
if the factor score regarding the size of buds for the cane determined as the cane to be retained is smaller than the predetermined range, decreasing the number of buds to be retained from the predetermined value.

13. The method of claim 12, wherein
the factor score regarding the size of buds for each of the one or more canes is determined so as to be:
lower when a mean value of the size of buds on the cane is larger than a predetermined range than when the mean value of the size of buds on the cane is within the predetermined range; and
lower when the mean value of the size of buds on the cane is smaller than the predetermined range than when the mean value of the size of buds on the cane is larger than the predetermined range.

14. A system (1000) for generating cut-point data containing information indicating a three-dimensional position of a point on a cane of a fruit tree (200) where the cane is to be cut off, the system comprising:
a sensor or sensors (520) to acquire sensor data of a cane(s) of the fruit tree (200); and
means for carrying out the steps of the method of any one of claims 1 to 13.

15. An agricultural machine (101) comprising the system (1000) of claim 14.
